(19) **Europäisches Patentamt / European Patent Office / Office européen des brevets**

(11) **EP 4 346 282 A1**

(12) **EUROPEAN PATENT APPLICATION**

(43) Date of publication:
03.04.2024 Bulletin 2024/14

(21) Application number: 23200890.4

(22) Date of filing: 29.09.2023

(51) International Patent Classification (IPC):
*H04W 36/00* (2009.01)

(52) Cooperative Patent Classification (CPC):
**H04W 36/0055**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.09.2022 US 202263411580 P

(71) Applicant: **Comcast Cable Communications LLC**
**Philadelphia, Pennsylvania 19103 (US)**

(72) Inventors:
• **LATHEEF, Fasil Abdul**
**Philadelphia, 19103 (US)**
• **KIM, Taehun**
**Philadelphia, 19103 (US)**
• **DINAN, Esmael Hejazi**
**Philadelphia, 19103 (US)**
• **JEON, Hyoungsuk**
**Philadelphia, 19103 (US)**
• **XU, Jian**
**Philadelphia, 19103 (US)**

(74) Representative: **V.O.**
**P.O. Box 87930**
**2508 DH Den Haag (NL)**

(54) **HANDLING A CANDIDATE CELL CONFIGURATION**

(57) A wireless device may receive a radio resource control (RRC) message that may include a handover indicator and a retain or release indicator. The handover indicator may indicate the target cell for a L1/L2-based handover of the wireless device. After the handover to the target cell, the wireless device may retain or remove/release stored candidate cells for future handovers based on the retain or release indicator.

FIG. 34

**Description**

CROSS-REFERENCE TO RELATED APPLICATIONS

This application claims the benefit of U.S. Provisional Application No. 63/411,580 filed on September 29, 2022. The above-referenced application is hereby incorporated by reference in its entirety.

BACKGROUND

A wireless devices communicates with a source base station. The wireless device performs a handover from the source base station to a target base station based on the wireless device moving to a cell served by the target base station.

SUMMARY

The following summary presents a simplified summary of certain features. The summary is not an extensive overview and is not intended to identify key or critical elements.

A wireless devices may communicate with a source base station. The wireless device may perform a handover from a source base station to a target base station based on Layer 1 and/or layer 2 (L1/L2)-based mobility (also referred to as lower layer triggered mobility (LTM)) via L1/L2 signaling. The wireless device may use one or more configurations for one or more candidate target cells for a L1/L2-based handover. At least two indicators may be used for a handover decision and provided by the source base station. The first indicator may indicate a target cell of the candidate target cells for the L1/L2-based handover. The second indicator may indicate to retain or remove/release remaining candidate target cells from a list of candidate target cells After completing the L1/L2-based handover to the indicated target cell based on the first indicator, the wireless device may use the second indicator to update the candidate target cell list for one or more future handovers. The candidate target cell list may be updated to remove invalid candidate target cells, which may provide advantages such as avoiding reconfiguration failure/error and/or reducing network overhead/signaling to the wireless device (e.g. performing L1 measurements for the invalid LTM candidate cells).

These and other features and advantages are described in greater detail below.

**BRIEF DESCRIPTION OF THE DRAWINGS**

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17 shows an example of a measurement model of a wireless device in a RRC connected state.

FIG. 18 shows an example of a handover procedure of a wireless device.

FIG. 19A and 19B show examples of random access procedures.

FIG. 20 shows an example of a conditional handover of a wireless device.

FIG. 21 shows an example of a handover failure.

FIG. 22 shows an example of a primary secondary cell (PSCell) addition and change.

FIG. 23 shows an example of a master cell group (MCG) failure information procedure.

FIG. 24 shows an example of RRC connection reestablishment.

FIG. 25 shows an example of a handover of a wireless device.

FIG. 26 shows an example of layer 1/layer 2 (L1/L2) based inter-cell mobility on central unit-distributive unit (CU-DU) architecture.

FIG. 27 shows an example of candidate cell configuration management.

FIG. 28 shows an example of candidate cell configuration management.

FIG. 29 shows an example of candidate cell configuration management.

FIG. 30 shows an example of candidate cell configuration management.

FIG. 31 shows an example of candidate cell configuration management.

FIG. 32 shows an example of candidate cell configuration management.

FIG. 33 shows an example of candidate cell configuration management.

FIG. 34 shows an example of candidate cell configuration management.

FIG. 35 shows an example of candidate cell configuration management.

FIG. 36 shows an example of candidate cell configuration management.

FIG. 37 shows an example of candidate cell configuration management.

FIG. 38 shows an example of candidate cell configuration management.

FIG. 39 shows an example of candidate cell configuration management.

FIG. 40 shows an example of candidate cell configuration management.

FIG. 41 shows an example of candidate cell configuration management.

FIG. 42 shows an example of candidate cell configuration management.

FIG. 43A and FIG. 43B show an example of a handover and configuration removal.

FIG. 44A and FIG. 44B show an example of a handover and configuration removal.

FIG. 45A and FIG. 45B shows an example of a handover and configuration removal.

FIG. 46A and FIG. 46B shows an example of sharing configuration retain or remove/release.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems.

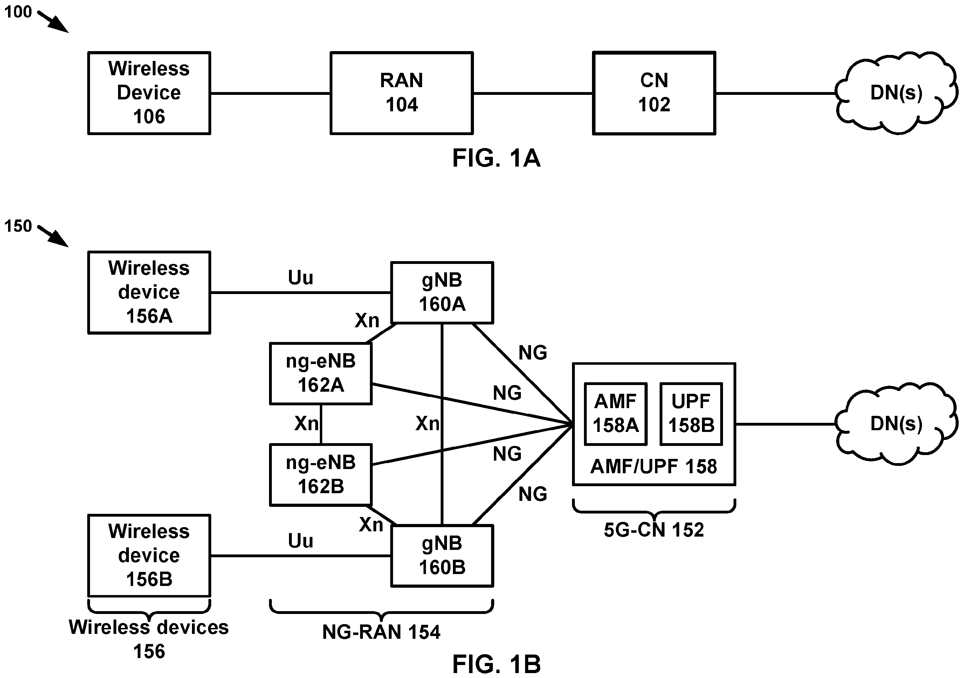

FIG. 1A shows an example communication network 100. The communication network 100 may comprise a mobile communication network. The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with the one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over/via an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (LTE), a user terminal (LTT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a Generation Node B (gNB), an Next Generation Evolved Node B (ng-eNB), a relay node (e.g., an integrated access and backhaul (IAB) node), a donor node (e.g., a donor eNB, a donor gNB, etc.), an access point (AP) (e.g., a Wi-Fi access point), a transmission and reception point (TRP), a computing device, a device capable of wirelessly communicating, or any other device capable of sending and/or receiving signals. A base station may comprise one or more of the elements listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an eNB (e.g., associated with Evolved-Universal Terrestrial Radio Access (E-UTRA) and/or fourth-generation (4G) standards), a remote radio head (RRH), a baseband processing unit coupled to one or more RRHs, a repeater node or relay node used to extend the coverage area of a donor node, a ng-eNB, a gNB (e.g., associated with New Radio (NR) and/or fifth-generation (5G) standards), an AP (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an AP, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to the one or more DNs 170. The wireless device(s) 156 may communicate with the one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs 170, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G-CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/LTPF device 158. The UPF device 158B may serve as a gateway between the RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-linter-Radio Access Technology (RAT) mobility, an external protocol (or packet) data unit (PDU) session point of interconnect to the one or more DNs 170, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng-eNBs comprising an ng-eNB 162A and an ng-eNB 162B (collectively ng-eNBs 162)). The RAN 154 may comprise one or more of any quantity of types of base station. The gNBs 160 and/or ng-eNBs 162 may be referred to as base stations. The base stations (e.g., the gNBs 160 and/or ng-eNBs 162) may comprise one or more sets of antennas for communicating with the wireless device(s) 156 wirelessly (e.g., an over an air interface). One or more base stations (e.g., the gNBs 160 and/or the ng-eNBs 162) may comprise multiple sets of antennas to respectively control multiple cells (or sectors). The cells of the base stations (e.g., the gNBs 160 and/or the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G-CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/LTPF devices, such as the AMF/LTPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide E-UTRA user plane and control plane protocol terminations towards the wireless device(s) 156 via a Uu interface (e.g., where E-UTRA may refer to the 3GPP 4G radio-access technology). A base station (e.g., the ng-eNB 162B) may provide E-UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/LTPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, IoT devices, hotspots, cellular repeaters, computing devices, and/or, more generally, UE. Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

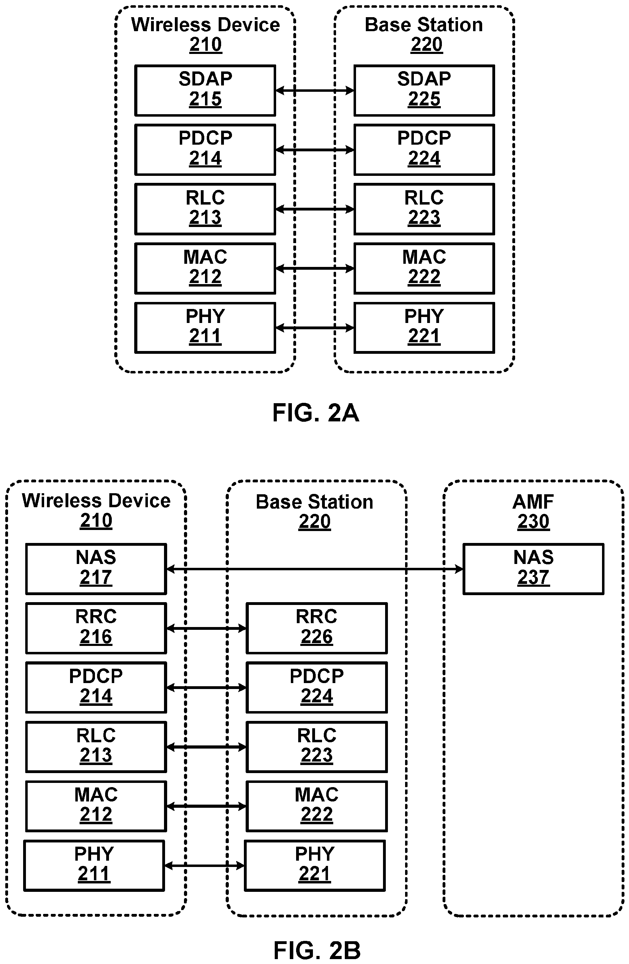

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configurations and/or the control plane configurations may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

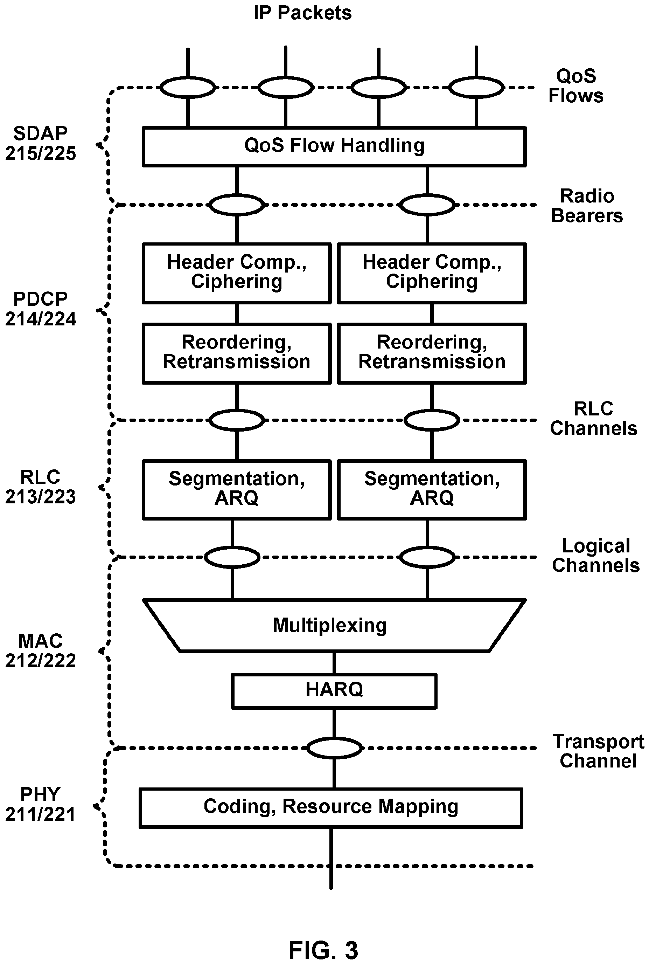

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform QoS flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows 310 of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers (e.g., RLCs 213 and 223) may perform one or more of the noted functions, for example, based on the transmission mode the RLC layer (e.g.,

RLCs 213 and 223) is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels 330 as a service to the PDCP layers (e.g., PDCPs 214 and 224, respectively), such as shown in FIG. 3.

The MAC layers (e.g., MACs 212 and 222) may perform multiplexing/demultiplexing of logical channels 340 and/or mapping between logical channels 340 and transport channels 350. The multiplexing/demultiplexing may comprise multiplexing/demultiplexing of data units/data portions, belonging to the one or more logical channels 340, into/from Transport Blocks (TBs) delivered to/from PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels 340 of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels 350 to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

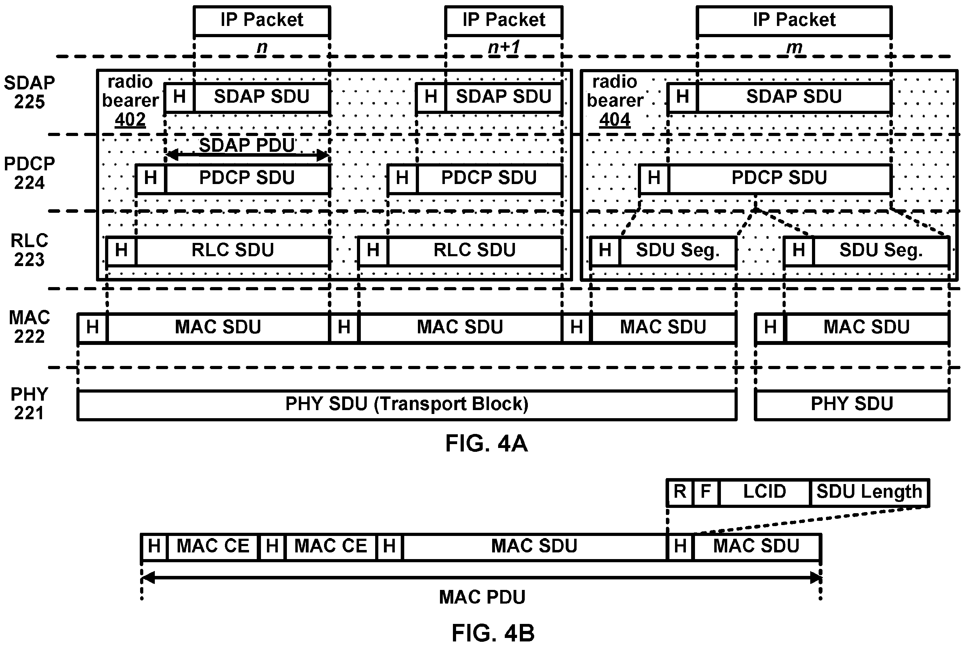

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 212 or MAC 222. As shown in FIG. 4B, two MAC CEs may be inserted into/added to the MAC PDU. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

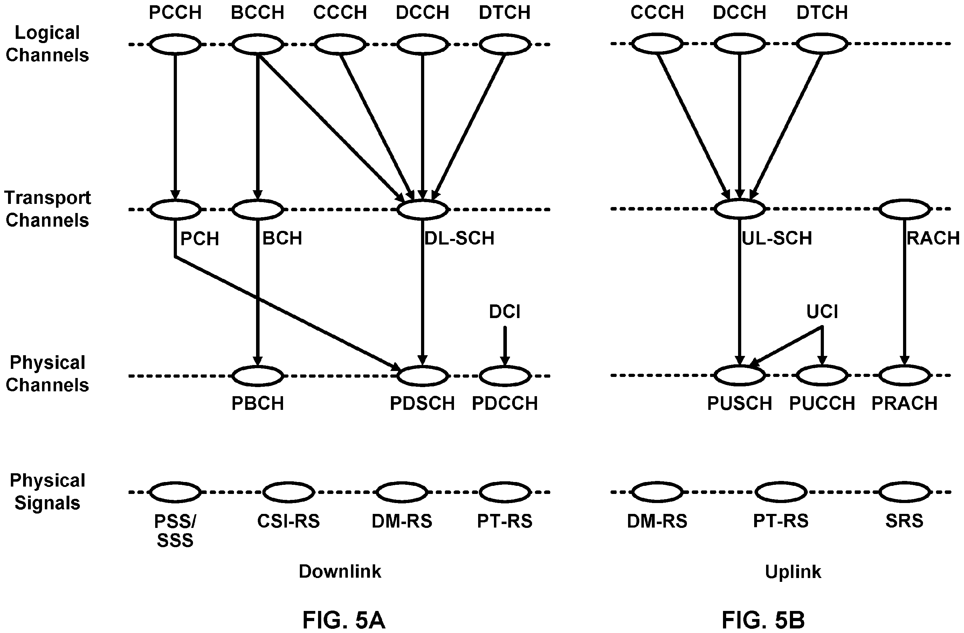

FIG. 5A shows an example mapping for downlink channels. The mapping for downlink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may comprise an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The PHY layer may generate physical signals to support the low-level operation of the PHY layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), SRS, phase-tracking reference signals (PT RS), and/or any other signals.

One or more of the channels (e.g., logical channels, transport channels, physical channels, etc.) may be used to carry out functions associated with the control plane protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHYs 211 and 221, MACs 212 and 222, RLCs 213 and 223, and PDCPs 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane protocol stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and substantially the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting and control of the reporting; detection of and recovery from radio link failure (RLF); and/or NAS message transfer. As part of establishing an RRC connection, the RRC layers 216 and 226 may establish an RRC context, which may involve configuring parameters for communication between the wireless device 210 and the RAN (e.g., the base station 220).

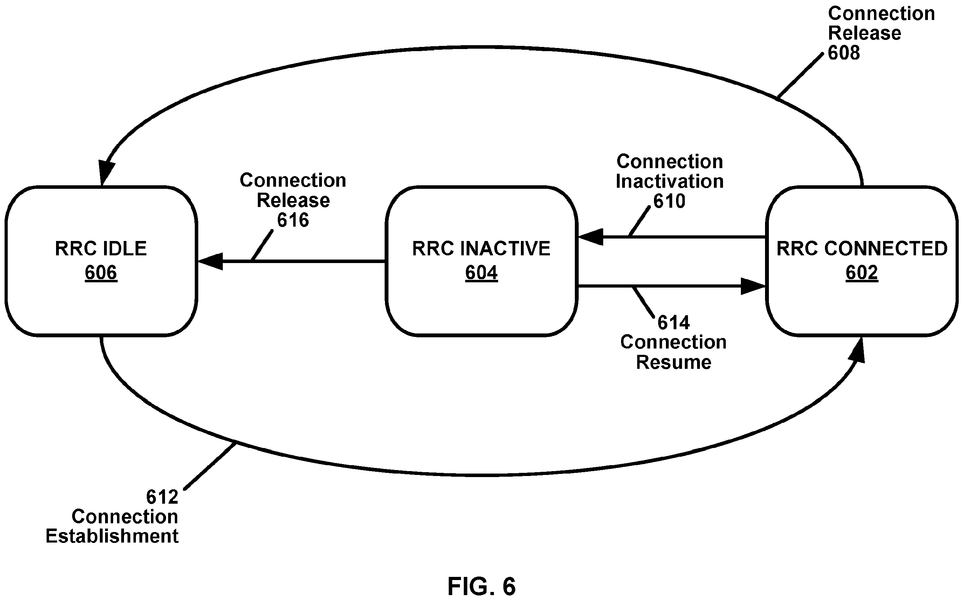

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104, the RAN 154, or any other RAN). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., the RRC connected 602) to an RRC idle state (e.g., the RRC idle 606) via a connection release procedure 608. The RRC state may transition from the RRC connected state (e.g., the RRC connected 602) to the RRC inactive state (e.g., the RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every DRX cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be substantially the same as or similar to connection release procedure 608.

An RRC state may be associated with a mobility management mechanism. During the RRC idle state (e.g., the RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC inactive state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., the RRC inactive 604).

A base station (e.g., the gNBs 160 in FIG. 1B or any other base station) may be split in two parts: a central unit (e.g., a base station central unit, such as a gNB-CU) and one or more distributed units (e.g., a base station distributed unit, such as a gNB-DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM may be a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbol streams may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

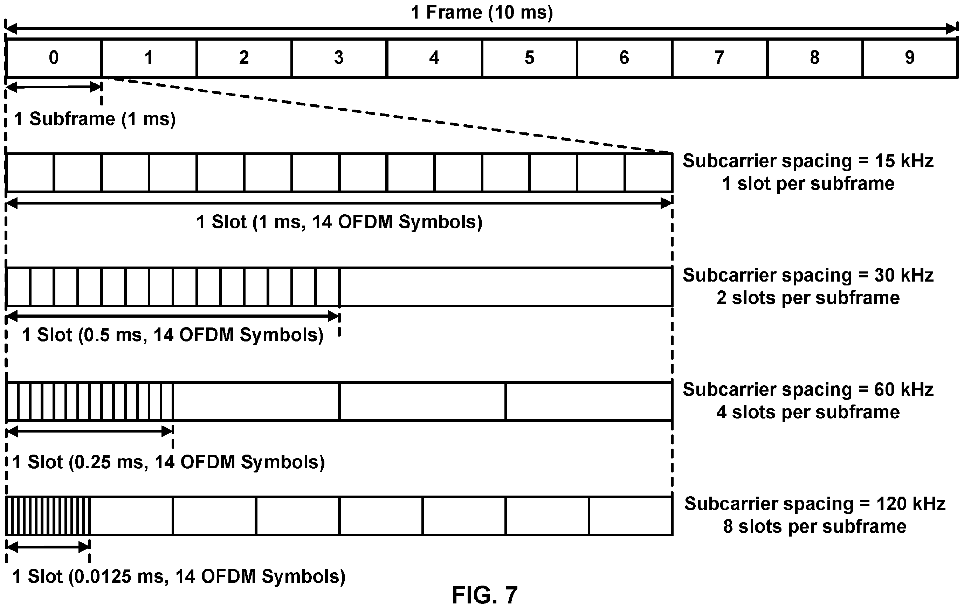

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR radio frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

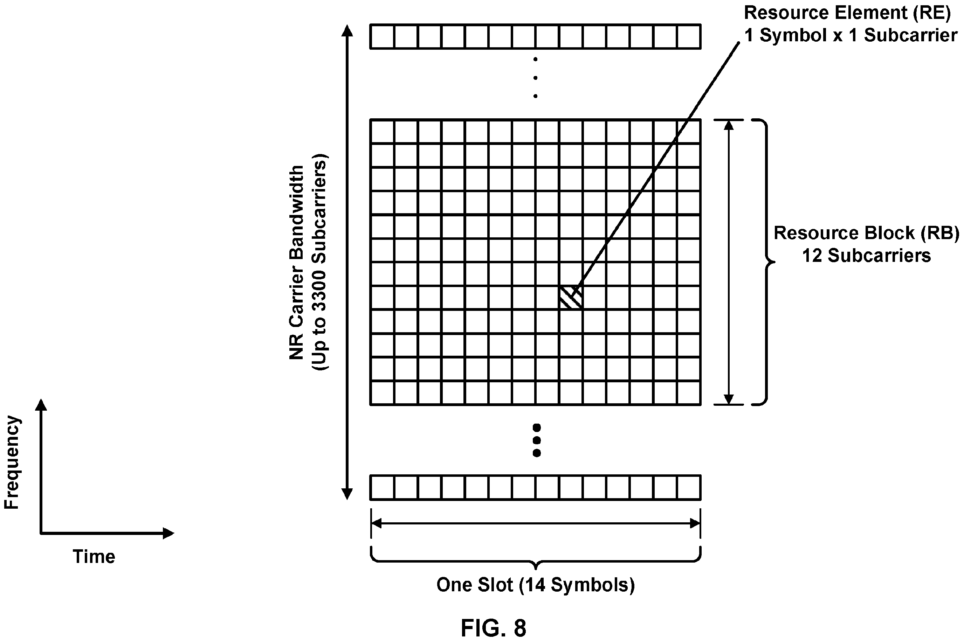

FIG. 8 shows an example resource configuration of one or more carriers. The resource configuration may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275$\times$12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR carrier such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in DCI. A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

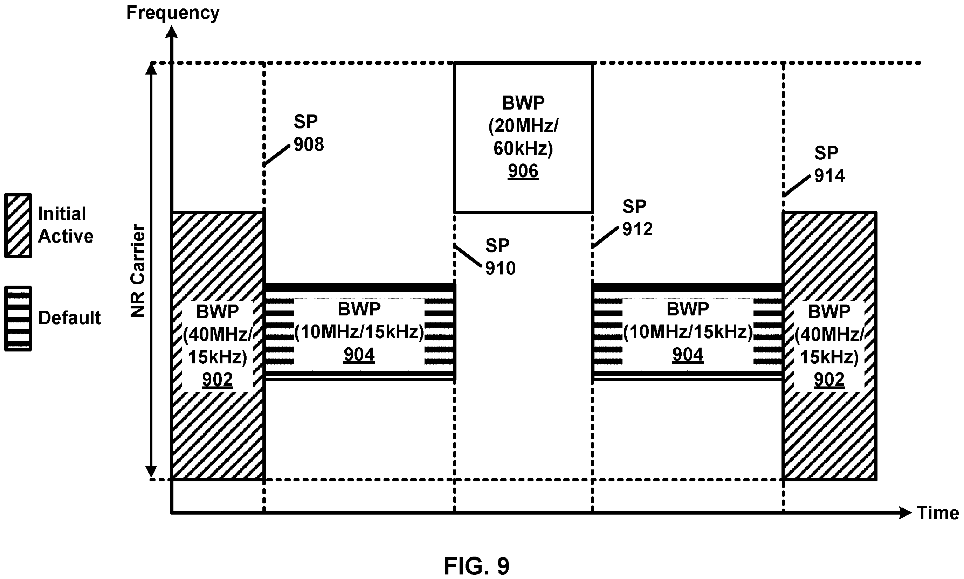

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at the switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating the BWP 904 as the active BWP. The wireless device may switch at a switching point 910 from the active BWP (e.g., the BWP 904) to the BWP 906, for example, after or in response receiving DCI indicating the BWP 906 as a new active BWP. The wireless device may switch at a switching point 912 from the active BWP (e.g., the BWP 906) to the BWP 904, for example, a based on (e.g., after or in response to) an expiry of a BWP inactivity timer. The wireless device may switch at the switching point 912 from the active BWP (e.g., the BWP 906) to the BWP 904, for example, after or in response to receiving DCI indicating the BWP 904 as a new active BWP. The wireless device may switch at a switching point 914 from the active BWP (e.g., the BWP 904) to the BWP 902, for example, after or in response receiving DCI indicating the BWP 902 as a new active BWP.

Wireless device procedures for switching BWPs on a secondary cell may be substantially the same/similar as those on a primary cell, for example, if the wireless device is configured for a secondary cell with a default downlink BWP in a set of configured downlink BWPs and a timer value. The wireless device may use the timer value and the default downlink BWP for the secondary cell in substantially the same/similar manner as the wireless device uses the timer value and/or default downlink BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

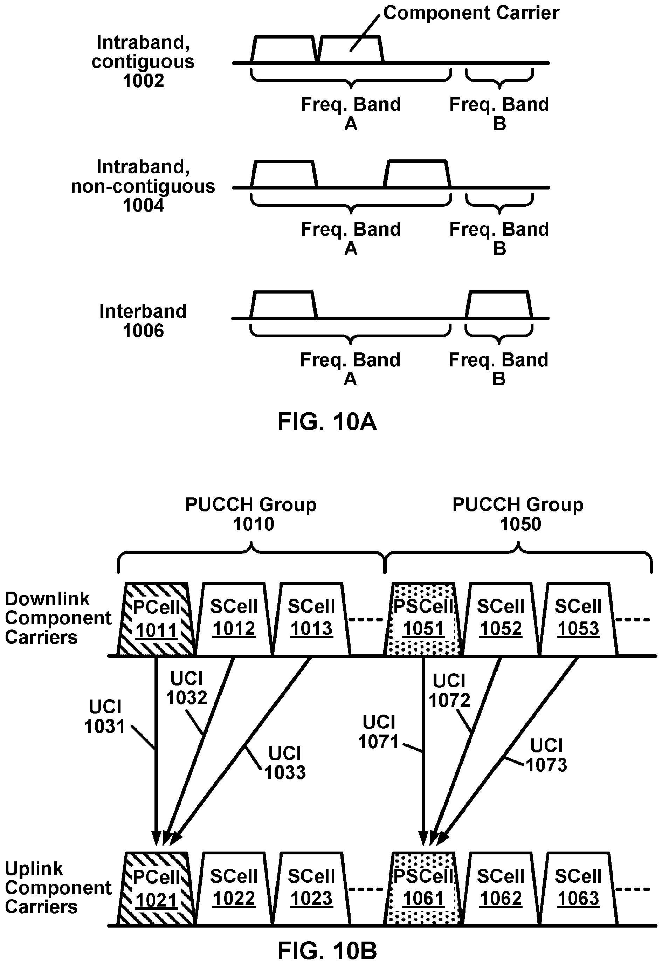

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless devices may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information for the downlink, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. UCI may comprise control information for the uplink, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: aPCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may use/apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

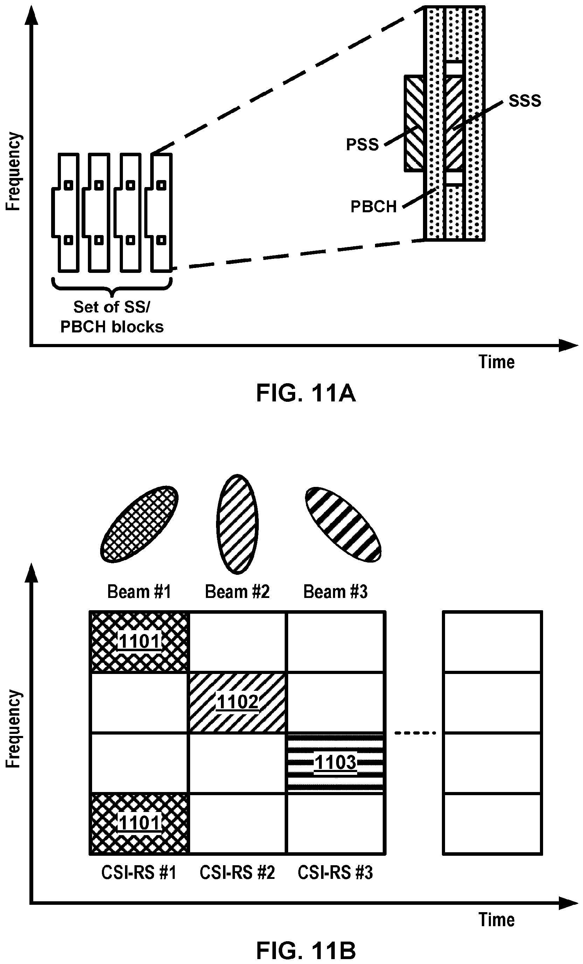

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial receiving (Rx) parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine CSI. The base station may configure the wireless device with one or more CSI-RSs for channel estimation or any other suitable purpose. The base station may configure a wireless device with one or more of substantially the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports (or any other quantity of orthogonal downlink DM-RS ports) per wireless device (e.g., for single user-MIMO). A DM-RS configuration may support up to 4 orthogonal downlink DM-RS ports (or any other quantity of orthogonal downlink DM-RS ports) per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be substantially the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with substantially the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as QCLed, for example, if one or more large-scale properties of the channel over which a first symbol on the first antenna port is conveyed may be inferred/determined from the channel over which a second symbol on a second antenna port is conveyed. The one or more large-scale properties may comprise at least one of: a delay spread; a Doppler spread; a Doppler shift; an average gain; an average delay; and/or spatial Rx parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a RB within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of: a CSI-RS resource configuration identity, a number of CSI-RS ports, a CSI-RS configuration (e.g., symbol and RE locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, QCL parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams may be shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure a reference signal received power (RSRP) of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more SRS resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a PMI, a CQI, and/or a RI.

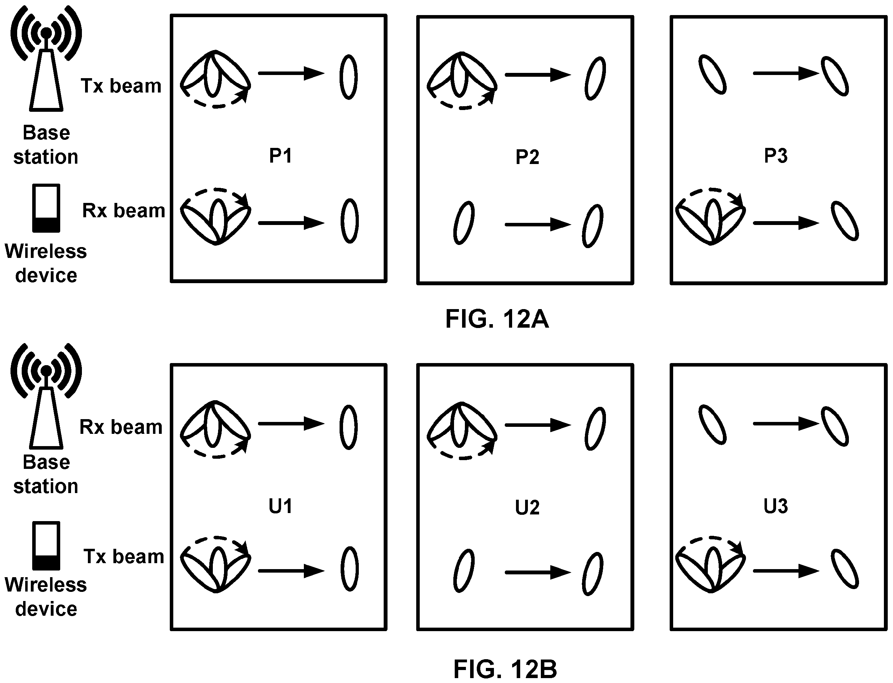

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the bottom row of U1 and top row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more RSs comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are substantially the same or similar as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more SIBs (e.g., or any other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

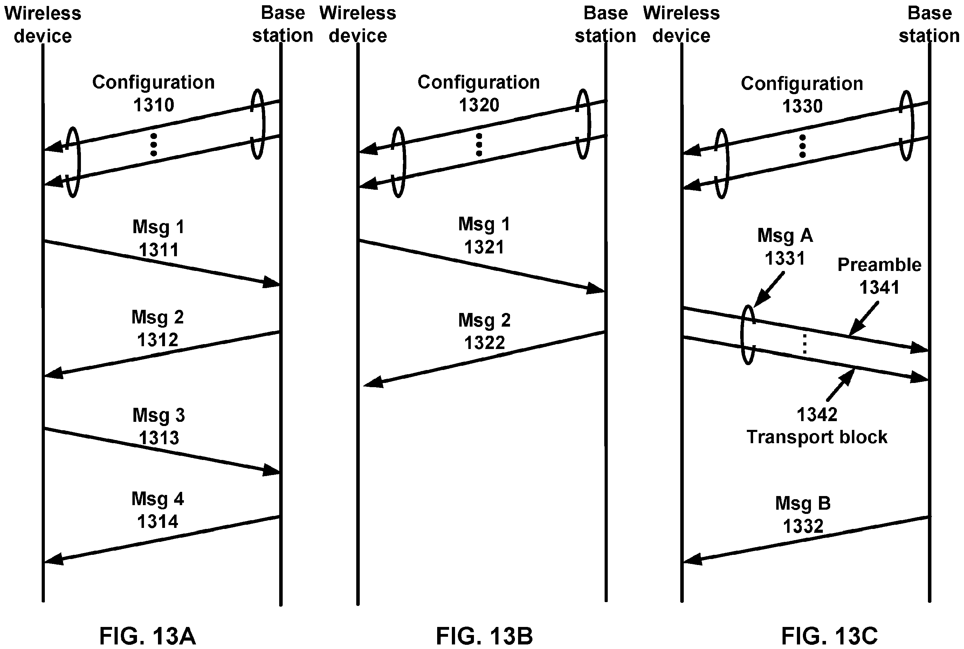

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more RACH parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more PRACH occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate at least one of: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. RNTIs may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id,$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless device on the PDCCH (e.g., the base station may send the PDCCH to the wireless device) using a C-RNTI, for example, if the C-RNTI was included in the third message (e.g., Msg 3 1313). The random access procedure may be determined to be successfully completed, for example, if the unique C-RNTI of the wireless device is detected on the PDCCH (e.g., the PDCCH is scrambled by the C-RNTI). The fourth message (e.g., Msg 4 1314) may be received using a DL-SCH associated with a TC-RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., for the first message (e.g., Msg 1 1311) and/or the third message (e.g., Msg 3 1313)). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

The first message (e.g., Msg A 1331) may be sent/transmitted in an uplink transmission by the wireless device. The first message (e.g., Msg A 1331) may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIG. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as DCI. The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

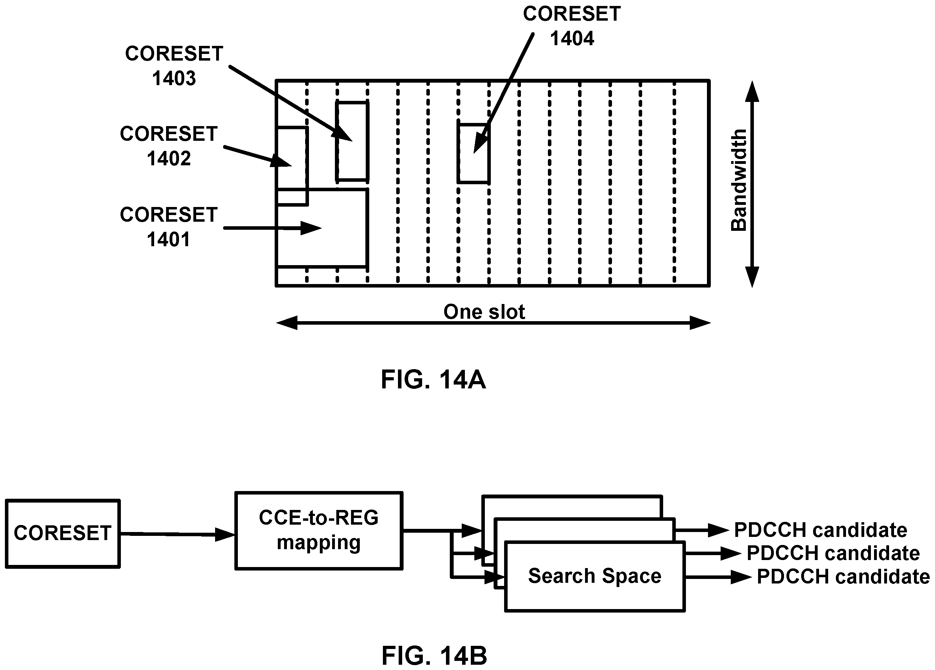

FIG. 14A shows an example of CORESET configurations. The CORESET configurations may be for a bandwidth part or any other frequency bands. The base station may send/transmit DCI via a PDCCH on one or more CORESETs. A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise SR. The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from a PUCCH resource set for UCI (HARQ-ACK, CSI, and/or SR) transmission, for example, after determining the PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

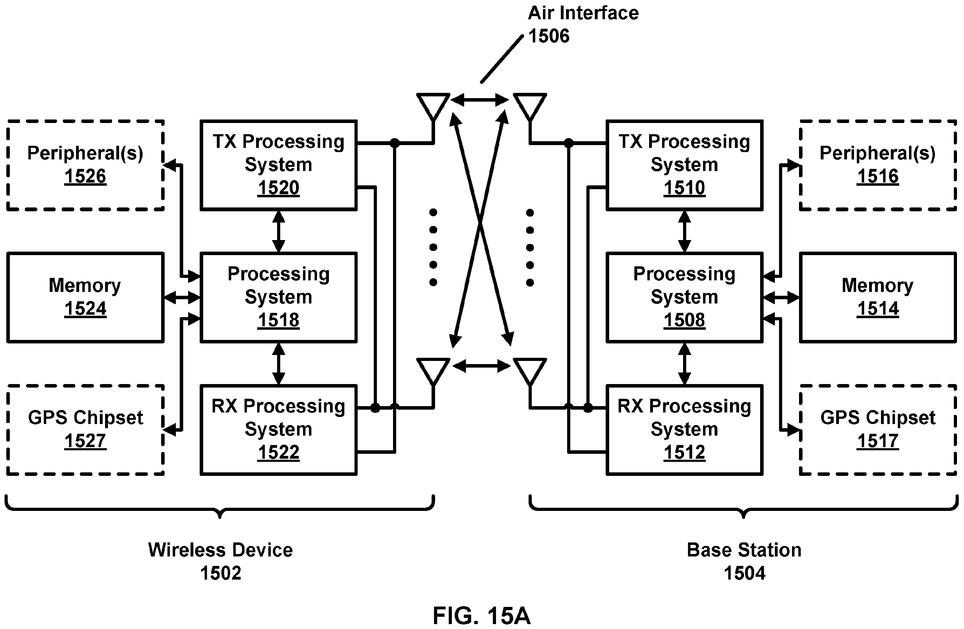

FIG. 15A shows an example of communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

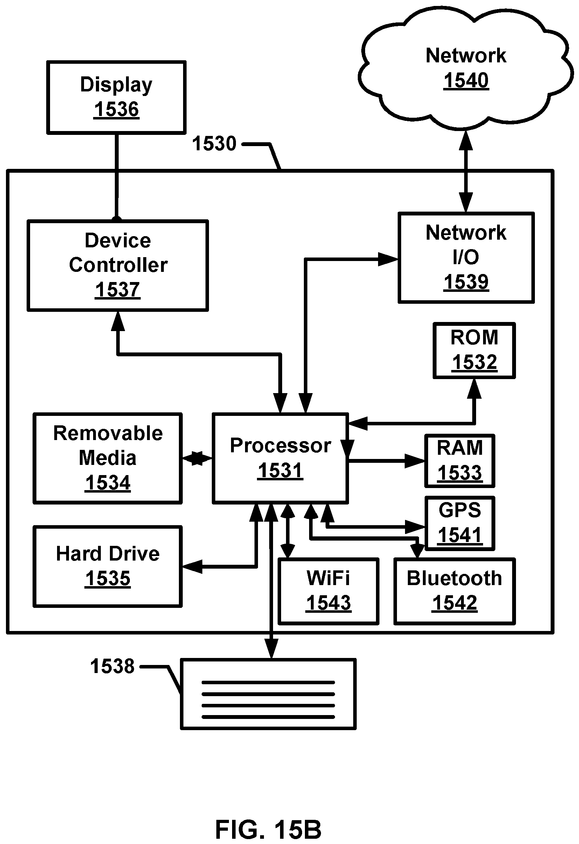

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a USB drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a GPS microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

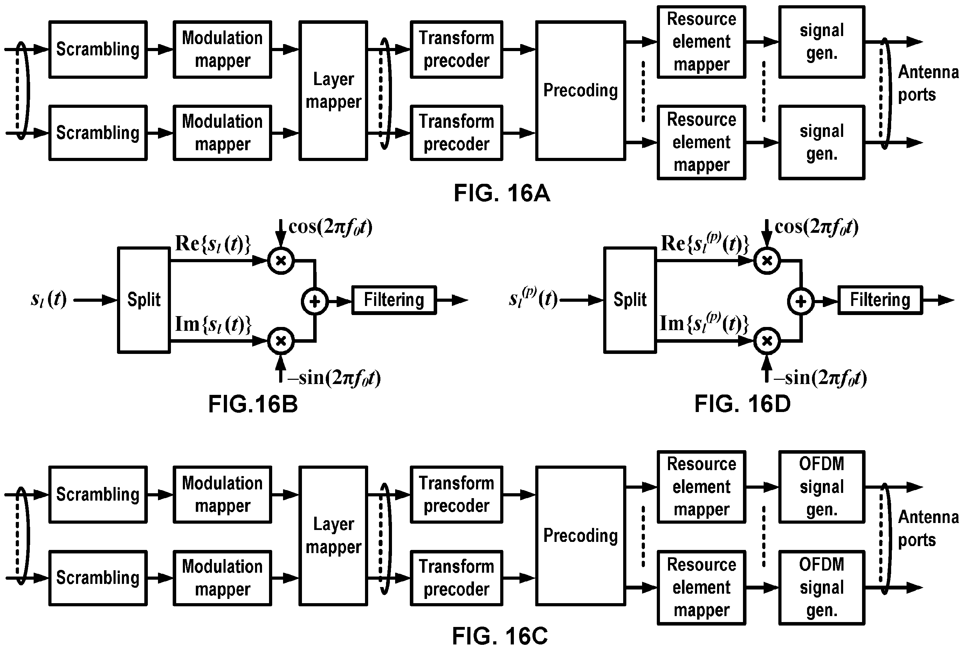

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A base station may communicate with a wireless device via a wireless network (e.g., a communication network). The communications may use/employ one or more radio technologies (e.g., new radio technologies, legacy radio technologies, and/or a combination thereof). The one or more radio technologies may comprise at least one of: one or multiple technologies related to a physical layer; one or multiple technologies related to a medium access control layer; and/or one or multiple technologies related to a radio resource control layer. One or more enhanced radio technologies described herein may improve performance of a wireless network. System throughput, transmission efficiencies of a wireless network, and/or data rate of transmission may be improved, for example, based on one or more configurations described herein. Battery consumption of a wireless device may be reduced, for example, based on one or more configurations described herein. Latency of data transmission between a base station and a wireless device may be improved, for example, based on one or more configurations described herein. A network coverage of a wireless network may increase, for example, based on one or more configurations described herein.

A base station may send/transmit one or more MAC PDUs to a wireless device. A MAC PDU may be a bit string that is byte aligned (e.g., aligned to a multiple of eight bits) in length. Bit strings may be represented by one or more tables in which the most significant bit may be the leftmost bit of the first line of a table, and the least significant bit may be the rightmost bit on the last line of the table. The bit string may be read from left to right and then in the reading order of the lines (e.g., from the topmost line of the table to the bottommost line of the table). The bit order of a parameter field within a MAC PDU may be represented with the first and most significant bit in the leftmost bit and the last and least significant bit in the rightmost bit.

A MAC SDU may be a bit string that is byte aligned (e.g., aligned to a multiple of eight bits) in length. A MAC SDU may be comprised in a MAC PDU from the first bit onward. A MAC CE may be a bit string that is byte aligned (e.g., aligned to a multiple of eight bits) in length. A MAC subheader may be a bit string that is byte aligned (e.g., aligned to a multiple of eight bits) in length. A MAC subheader may be placed immediately in front of a corresponding MAC SDU, MAC CE, or padding. A wireless device (e.g., the MAC entity of the wireless device) may ignore a value of reserved bits in a downlink (DL) MAC PDU.

A MAC PDU may comprise one or more MAC subPDUs. A MAC subPDU of the one or more MAC subPDUs may comprise: a MAC subheader only (including padding); a MAC subheader and a MAC SDU; a MAC subheader and a MAC CE; a MAC subheader and padding, and/or a combination thereof. The MAC SDU may be of variable size. A MAC subheader may correspond to a MAC SDU, a MAC CE, or padding.

A MAC subheader may comprise: an R field with a one-bit length; an F field with a one-bit length; an LCID field with a multi-bit length; an L field with a multi-bit length; and/or a combination thereof, for example, if the MAC subheader corresponds to a MAC SDU, a variable-sized MAC CE, or padding.

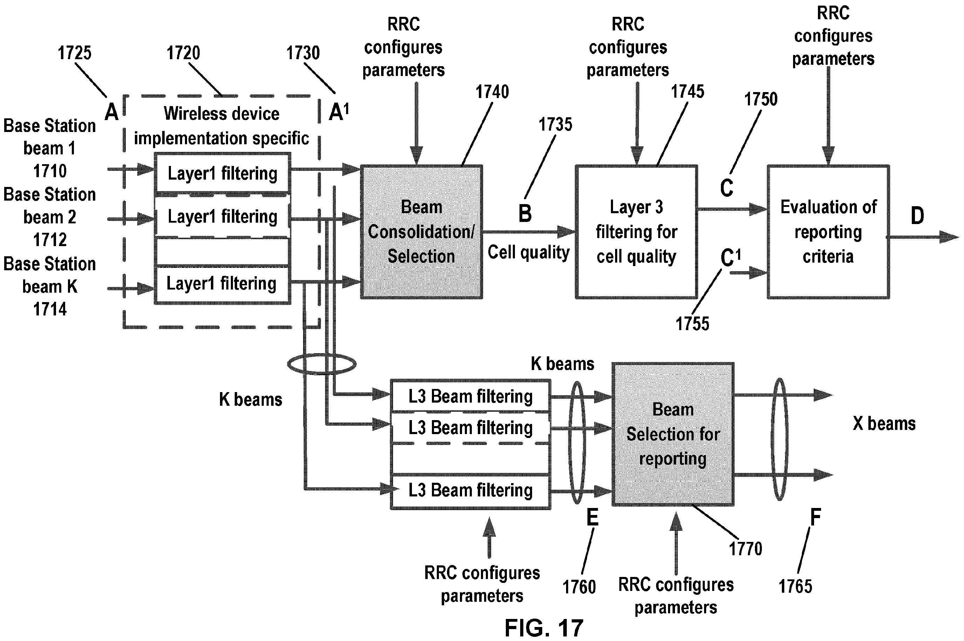

FIG. 17 shows an example of a measurement model of a wireless device in RRC connected state. Layer 1 filtering may be internal layer 1 filtering of the inputs measured at point A. Exact filtering may be left to a wireless device implementation 1720, for example, how a measurements may be executed in a physical layer by an implementation 1720 (e.g., inputs A 1725 and Layer 1 filtering). The A 1725 may be measurements (e.g., beam specific samples) internal to the physical layer. A1 1730 may be measurements (e.g., beam specific measurements) reported by layer 1 to layer 3 based on (e.g. after) a layer 1 filtering. Layer 1 filtering may introduce a level of measurement averaging. How, and if, a wireless device may perform a required measurement may be implementation 1720 specific so that an output at B 1735 fulfils a defined minimum performance requirements.

B 1735 may be a measurement (e.g., cell quality) derived from a beam-specific measurements reported to layer 3 based on (e.g. after) beam consolidation and/or selection 1740. The beam consolidation and/or selection 1740 may be beam specific measurements that may be consolidated to a derive cell quality. A configuration of this module may be provided by RRC signaling. Reporting period at B 1735 may equal one measurement period at A1 1730.

Layer 3 filtering 1745 for cell quality may be filtering performed on the measurements provided at point B 1735. The configuration of the layer 3 filters may be provided by a RRC signaling. Filtering reporting period at C 1750 in may equal one measurement period at B 1735. Layer 3 filtering 1745 for cell quality and related parameters used may not introduce any delay in the sample availability between B 1735 and C 1750. Measurement at point C 1750, C1 1755 may be the input used in the event evaluation. The C 1750 may be a measurement based on (e.g. after) processing in the layer 3 filter. The reporting rate may be identical to the reporting rate at point B 1735. This measurement may be used as input for one or more evaluation of reporting criteria. Evaluation of reporting criteria may check whether actual measurement reporting may be necessary at point D. The D may be measurement report information (message) sent on the radio interface. The evaluation may be based on more than one flow of measurements at reference point C 1750 e.g., to compare between different measurements. This may be shown by input C 1750 and C1 1755. The wireless device evaluates the reporting criteria at least every time a new measurement result may be reported at point C 1750, C1 1755. The configuration may be provided by RRC signaling (wireless device measurements).

L3 Beam filtering and related parameters used may not introduce any delay in the sample availability between E 1760 and F 1765. L3 beam filtering may be filtering performed on the measurements (e.g., beam specific measurements) provided at point A1 1730. The configuration of the beam filters may be provided by RRC signaling. The L3 beam filtering may provide K beams. The K beams may correspond to the measurements on SSB, or CSI-RS resources configured for L3 mobility by a base station (e.g., gNB) and detected by wireless device at L1. Filtering reporting period at E 1760 may equal one measurement period at A1 1730. E 1760 may be a measurement (e.g., beam-specific measurement) based on (e.g. after) processing in the beam filter. The reporting rate may be identical to the reporting rate at point A1 1730. This measurement may be used as input for selecting X measurements that may be reported. Beam selection for beam reporting 1770 may select the X measurements from the measurements provided at point E 1760. The configuration of this module may be provided by RRC signaling. F 1765 may be beam measurement information included in a measurement report (e.g., sent) on a radio interface.

Measurement reports may comprise the following: a measurement identity of an associated measurement configuration that triggered the reporting; cell and beam measurement quantities configured by a network; a number of non-serving cells that may be reported and that may be limited through configuration by the network; cells that may belong to a blacklist and/or an exclude-list configured by a network that may not be used in event evaluation and/or reporting. Conversely, only the cells belonging to a whitelist and/or an allow-list may be used in event evaluation and/or reporting, for example, if a whitelist is configured by the network. The measurement reports, in this case, may comprise: beam measurements that may be configured by the network (e.g., beam identifier only, measurement result and beam identifier, and/or no beam reporting).

Intra-frequency neighbor (e.g., neighbor cell) measurements and inter-frequency neighbor (e.g., neighbor cell) measurements may be defined as follows: SSB based intra-frequency measurement, if a measurement may be defined as an SSB based intra-frequency measurement, provided that the center frequency of the SSB of a serving cell and the center frequency of the SSB of the neighbor cell may be the same, and the subcarrier spacing of the two SSBs may also be the same; SSB based inter-frequency measurement where a measurement may be defined as an SSB based inter-frequency measurement provided the center frequency of the SSB of the serving cell and the center frequency of the SSB of the neighbor cell are different, and/or the subcarrier spacing of the two SSBs may be different; CSI-RS based intra-frequency measurement; and CSI-RS based inter-frequency measurement where a measurement may be defined as a CSI-RS based inter-frequency measurement, if it is not a CSI-RS based intra-frequency measurement.

A CSI-RS based intra-frequency measurement may be a measurement that may be defined as a CSI-RS based intra-frequency measurement if: the subcarrier spacing of CSI-RS resources on the neighbor cell that may be configured for measurement may be the same as SCS of CSI-RS resources on the serving cell indicated for measurement; for 60kHz subcarrier spacing, a CP type of CSI-RS resources on the neighbor cell that may be configured for measurement may be the same as the CP type of CSI-RS resources on the serving cell indicated for measurement; and/or the center frequency of CSI-RS resources on the neighbor cell that may be configured for measurement may be the same as the center frequency of CSI-RS resource on the serving cell indicated for measurement.

One measurement object may correspond to one SSB and a wireless device may consider different SSBs as different cells, for SSB based measurements. A measurement that may be non-gap-assisted or gap-assisted may depend on a capability of a wireless device, an active BWP of the wireless device, and/or a current operating frequency. A measurement gap configuration may be provided according to the information, for SSB based inter-frequency measurement, for example, if the measurement gap requirement information may be reported by the wireless device. Alternatively, a measurement gap configuration may be provided in the following cases: if the wireless device only supports per-wireless device measurement gaps; if the wireless device supports per-FR measurement gaps and any of the serving cells are in the same frequency range of the measurement object. A measurement gap configuration, may be provided according to the information, for SSB based intra-frequency measurement for example, if the measurement gap requirement information may be reported by the wireless device. Otherwise, a measurement gap configuration may always be provided if, other than an initial BWP, any of the wireless device's configured BWPs do not contain the frequency domain resources of the SSB associated with the initial DL BWP.

A wireless device may carry out measurements without measurement gaps, in non-gap-assisted scenarios. A wireless device may not be able to carry out such measurements without measurement gaps, in gap-assisted scenarios.

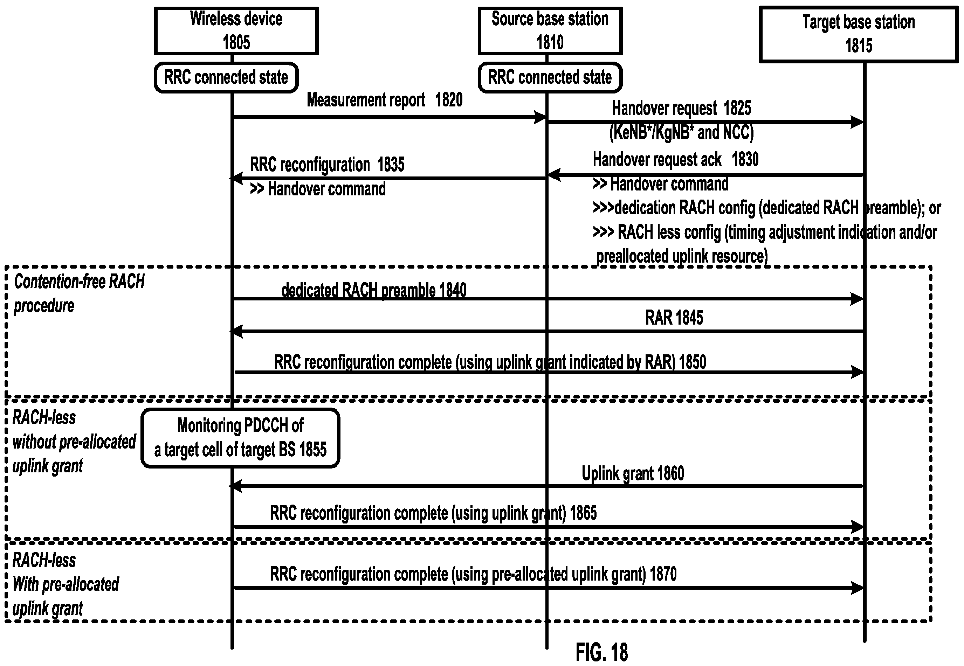

FIG. 18 shows an example of a handover procedure of a wireless device. A wireless device 1805 may send (e.g., transmit) a measurement report 1820 to the base station. A source base station 1810 may determine to hand off the wireless device 1805 to a target base station 1815. The determination may be based on the measurement report 1820, load balancing requirement, issues with the source and/or among others base station, etc. The source base station 1810 may issue a handover request 1825 message to the target base station 1815 passing necessary information to prepare the HO at the target side (wireless device/LTE X2/Xn signaling context reference at, wireless device/UE S1 EPC signaling context reference, target cell ID, KeNB*/ KgNB*, RRC context including the identity (e.g., Cell-radio network temporary identifier, C-RNTI)) of the wireless device 1805 in the source base station 1810, AS-configuration, radio (e.g., radio access) bearer context and physical layer ID of the source cell + short MAC-I for possible RLF recovery). The radio (e.g., radio access) bearer context may comprise necessary radio network layer (RNL) and transport network layer (TNL) addressing information, and QoS profiles of the E-RABs. The information may further comprise at least RRM-configuration including wireless device 1805 inactive time. AS-configuration may comprise antenna Info and DL carrier frequency, the current QoS flow to DRB mapping rules applied to the wireless device 1805, the SIB1 from the source base station 1810, the wireless device 1805 capabilities for different RATs and PDU session related information. The AS-configuration may further comprise the wireless device 1805 reported measurement information including beam-related information. The PDU session related information may include the slice information and QoS flow level QoS profile(s). The source base station 1810 may also request a DAPS handover for one or more DRBs

Admission Control may be performed by a target base station 1815 dependent on a received radio (e.g., radio access) bearer QoS information to increase the likelihood of a successful HO, for example, if resources may be granted by target base station 1815. The target base station 1815 may configure required resources according to the received radio (e.g., radio access) bearer QoS information and reserves a C-RNTI and/or, optionally, a RACH preamble. AS-configuration that may be used in the target cell may either be specified independently (e.g., an establishment) or, alternatively, as a delta compared to the AS-configuration used in the source cell (e.g., a reconfiguration). The target base station 1815 may prepare HO with L1/L2 and send the handover request acknowledge 1830 (e.g., Handover request ack) to the source base station 1810. The handover request acknowledge 1830 (e.g., Handover request ack) message may include a transparent container to be sent to the wireless device 1805 as an RRC message to perform the handover. The container may include a new C-RNTI, target base station 1815 security algorithm identifiers for the selected security algorithms, may include a dedicated RACH preamble, and possibly some other parameters i.e. access parameters, SIBs, etc. For RACH-less HO (e.g., if RACH-less HO may be configured), the container includes timing adjustment indication and optionally a pre-allocated uplink grant. The handover request 1820 acknowledge message may also include RNL/TNL information for the forwarding tunnels, if necessary.

A target base station 1815 may generate a RRC message to perform a handover. The RRC message may be an RRC reconfiguration message 1835 (e.g., RRC reconfiguration) including information for HO (e.g., mobility control info and/or reconfiguration sync), to be sent by a source base station 1810 to a wireless device 1805. The source base station 1810 may perform the necessary integrity protection and/or ciphering of the message.

A source base station 1810 may trigger a handover (e.g., a Uu handover) by sending an RRC reconfiguration message 1835 (e.g., RRC reconfiguration) to a wireless device 1805. The RRC reconfiguration message 1835 (e.g., RRC reconfiguration) may comprise information required to access a target cell: the target cell ID, new C-RNTI, a target base station 1815 security algorithm identifiers for the selected security algorithms. The RRC reconfiguration message 1835 (e.g., RRC reconfiguration) may comprise a set of dedicated RACH resources, an association between RACH resources and SSB(s), an association between RACH resources and wireless device-specific CSI-RS configuration(s), common RACH resources, and/or system information of the target cell, etc.

A wireless device 1805 may receive a RRC reconfiguration message 1835 (e.g., RRC reconfiguration) with necessary parameters (e.g., new C-RNTI, target base station security algorithm identifiers, and optionally dedicated RACH preamble, target base station SIBs, etc.) and/or may be commanded by a source base station 1810 to perform a HO. The RRC reconfiguration may include a timing adjustment indication and/or, optionally, a pre-allocated uplink grant for accessing a target base station 1815, for example, if RACH-less HO may be configured. The wireless device 1805 may monitor PDCCH of the target base station 1815 (step 1855) to receive an uplink grant 1860, for example, if the pre-allocated uplink grant may not be included. The wireless device 1805 may not need to delay the handover execution for delivering the HARQ/ARQ responses to the source base station 1810.

A wireless device 1805, may perform synchronization to a target base station 1815, for example, for no RACH-less HO, (e.g., if RACH-less HO is not configured), after the wireless device receives a RRC reconfiguration message 1835 (e.g., RRC reconfiguration) including the information for HO (e.g., mobility control info or reconfiguration sync). The wireless device 1805 may perform synchronization to target base station 1815 and/or access the target cell via RACH, following a contention-free procedure, for example, if a dedicated RACH preamble was indicated in the information for HO, and/or following a contention-based procedure, if no dedicated preamble was indicated. For the contenting-free procedure, the wireless device 1805 may send the dedicated RACH preamble 1840 to the target base station 1815. The target base station 1815, based on the dedicated RACH preamble, may send RAR 1845 to the wireless device 1805. The wireless device 1805, using uplink grant indicated by RAR, may send RRC reconfiguration complete 1850 to the target base station 1815. The wireless device 1805 may derive the target base station 1815 specific keys and/or configure selected security algorithms that may be used in the target cell. The target base station 1815 may respond with a UL allocation and/or a timing advance, for example, for no RACH-less HO, (e.g., if RACH-less HO may not be configured). For no RACH-less HO, (e.g., if RACH-less HO may not be configured), if the wireless device 1805 has successfully accessed the target cell, the wireless device 1805 may send the RRC reconfiguration complete message (C-RNTI) to confirm the handover. The RRC reconfiguration complete message may also comprise an uplink buffer status report (BSR), and/or UL data, whenever possible, to the target base station 1815, which indicates that the handover procedure may be completed for the wireless device 1805. The target base station 1815 may verify the C-RNTI sent in the RRC reconfiguration complete message. The target base station 1815 may be able to now begin sending data to the wireless device 1805.

A wireless device 1805 may perform synchronization to target base station 1815, for example, if RACH-less HO is configured (e.g., RACH-less HO). The wireless device 1805 may derive a target base station 1815 specific keys and/or configure selected security algorithms that may be used in the target cell. The wireless device 1805 may receive an uplink grant 1860 via the PDCCH of the target cell, for example, if RACH-less HO is configured (e.g., RACH-less HO), and if the wireless device 1805 did not receive a periodic pre-allocated uplink grant in the RRC reconfiguration message 1835 (e.g., RRC reconfiguration) including information for a HO (e.g., mobility control info or reconfiguration sync). The wireless device 1805 may use the first available uplink grant after synchronization to the target cell. The wireless device 1805 may send the RRC reconfiguration complete message (C-RNTI) 1865 to confirm the handover, together with an uplink BSR, and/or UL data, for example, to the target base station 1815, if possible, if RACH-less HO is configured (e.g., RACH-less HO), and after the wireless device 1805 has received the uplink grant 1860. The target base station 1815 may verify the C-RNTI sent in the RRC reconfiguration complete message 1870. The target base station 1815 may be able to now begin sending data to the wireless device 1805. The handover procedure may be completed for the wireless device 1805, for example, if the wireless device 1805 receives a wireless device contention resolution identity MAC control element from the target base station 1815.

A RRM configuration may include both beam measurement information (e.g., for layer 3 mobility) associated with SSB(s) and/or CSI-RS(s) for reported cell(s), for example, if both types of measurements are available. The RRM measurement information may comprise the beam measurement for listed cells that belong to a target base station 1815. The common RACH configuration for beams in the target cell may only be associated with the SSB(s). The network may be able to have a dedicated RACH configurations associated with the SSB(s) and/or have dedicated RACH configurations associated with CSI-RS(s) within a cell. The target base station 1815 may include only one of the following RACH configurations in a handover command to enable the wireless device 1805 to access the target cell: common RACH configuration; common RACH configuration + dedicated RACH configuration associated with SSB; common RACH configuration + dedicated RACH configuration associated with CSI-RS. The dedicated RACH configuration may allocate RACH resource(s) together with a quality threshold to use them. The dedicated RACH resources may be prioritized by the wireless device 1805 and/or the wireless device 1805 may not switch to contention-based RACH resources, for example, if dedicated RACH resources are provided, and if the quality threshold of those dedicated resources is met. The order to access the dedicated RACH resources may be determined by a wireless device 1805 implementation.

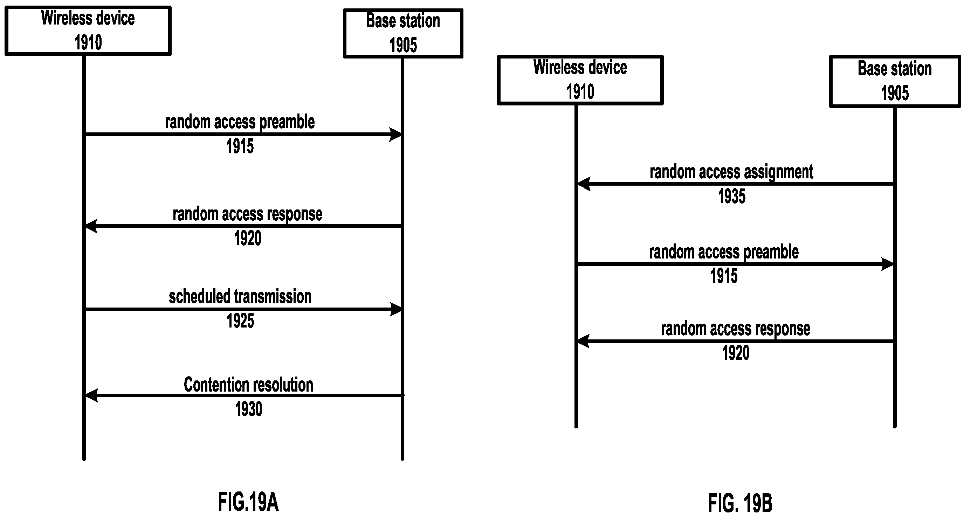

FIG. 19A and 19B show examples of random access procedures. FIG. 19A shows an example of four steps contention based random access procedure. A wireless device 1910 may send (e.g., transmit) random access preamble 1915 on RACH in uplink. A base station 1905 may send (e.g., transmit) random access (RA) response 1920 generated by MAC on DL-SCH. A RA response 1920 may be addressed to RA-RNTI on PDCCH and/or may comprise at least one of: a RA-preamble identifier, timing alignment information for the pTAG, initial UL grant and assignment of temporary C-RNTI, that may or may not be made permanent upon a contention resolution. The RA response 1920 may be intended for a variable number of wireless devices in one DL-SCH message. The wireless device 1910 may perform first scheduled UL transmission 1925 on UL-SCH (e.g., sending (transmitting) Msg3). For initial access, Msg3 may comprise a RRC Request generated by the RRC layer and/or sent (e.g., transmitted) via CCCH. The Msg 3 may comprise at least NAS wireless device identifier but no NAS message. The Msg 3 may comprise a ciphered and/or integrity protected RRC Handover Confirm generated by the RRC layer and/or sent (e.g., transmitted) via DCCH, for example, based on (e.g. after) a completion of a handover in the target cell. The Msg3 may comprise the C-RNTI of the wireless device 1910, that may have been allocated via the handover command. The Msg3 may comprise an uplink BSR. The base station 1905 may respond for contention resolution 1930 on DL (e.g., by sending (transmitting) Msg 4 to the wireless device 1910). The Msg4 may be addressed to the Temporary C-RNTI on PDCCH for initial access and after radio link failure the C-RNTI on PDCCH for wireless device 1910 in RRC_CONNECTED. The temporary C-RNTI may be promoted to C-RNTI for a wireless device 1910 which detects RA success and does not already have a C-RNTI; it may be dropped by others. A wireless device 1910 which detects RA success and already has a C-RNTI, resumes using its C-RNTI.

FIG. 19B shows an example of three steps contention free random access procedure. A base station 1905 may send (e.g., transmit) random access preamble assignment 1935 via dedicated signaling in DL. The base station 1905 may assign to a wireless device 1910 a contention free random access preamble (e.g., a random access preamble not within a set sent in broadcast signaling). The base station 1905 may assign the contention free random access preamble via: HO command generated by a target base station and/or sent via a source base station for handover; PDCCH in case of DL data arrival and/or positioning; PDCCH for initial UL time alignment for a sTAG. The wireless device 1910 may send (e.g., transmit) the assigned contention free Random Access Preamble. The base station 1905 may send (e.g., transmit) a random access (RA) response on DL-SCH. The RA response 1920 may be addressed to RA-RNTI on PDCCH. The RA response 1920, may be intended for one or more wireless devices in one DL-SCH message, may comprise at least one of: timing alignment information and/or initial UL grant for handover; timing alignment information for DL data arrival; RA-preamble identifier. The information for HO (e.g., mobility control info or reconfiguration sync) may comprise at least one of: a RACH dedicated configuration and/or a configuration for RACH-less HO (e.g., a RACH skip configuration). The RACH dedicated configuration may comprise at least one of: RA preamble index signaled RA preamble for RA response 1920 selection; a RA PRACH mask index signaled PRACH mask index for RA resource selection. The RACH skip configuration may comprise at least one of: target timing alignment (TA) information (e.g., a TA indication), and/or uplink configuration information.

A wireless device 1910 may send (e.g., transmit) to a base station 1905 a RACH-less HO capability indication that may indicate that the wireless device 1910 supports a RACH-less handover. Based on the RACH-less HO capability indication, a base station 1905 may determine to send (e.g., transmit) a configuration for RACH-less HO (e.g., a RACH skip configuration).

Multi-radio dual connectivity (MR-DC or DC) may be dual connectivity between E-UTRA (e.g., eNB, LTE base station) and NR nodes (e.g., gNB, NR base station), or between two NR nodes. SpCell may be a primary cell of a master cell group (MCG) or a primary cell of secondary cell group (SCG). PCell may be SpCell of a master cell group. PSCell may be SpCell of a secondary cell group.

A MCG may be in MR-DC, a group of serving cells associated with a master node, comprising a SpCell (e.g., a PCell) and may further comprise one or more SCells. A master node (MN) may be in DC, a radio access node (e.g., base station) that provides a control plane connection to a core network. The MN may be a master eNB, a master ng-eNB, and/or a master base station. A secondary cell group (SCG) may be in MR-DC, a group of serving cells associated with a secondary node, comprising the SpCell (e.g., the PSCell) and may further comprise one or more SCells. The secondary node may be in MR-DC, a radio access node, with no control plane connection to the core network, providing additional resources to a wireless device 1910. The secondary node may be an en-gNB, a secondary ng-eNB, and/or a secondary base station.

A conditional handover (CHO) may be defined as a handover (e.g., layer 3 handover) that may be executed by a wireless device 1910 if one or more handover execution conditions may be met. The wireless device 1910 may begin evaluating the execution condition(s) based on receiving the CHO configuration, and may stop evaluating the execution condition(s) based on a handover being executed.

The following principles may apply to a CHO: the CHO configuration may contain the configuration of CHO candidate cell(s) generated by candidate base station(s) and/or execution condition(s) generated by a source base station. An execution condition may consist of one or more trigger condition(s) (e.g., CHO events, A3/A5, etc.). Only a single reference signal (RS) type may be supported and/or at most two different trigger quantities (e.g. RSRP and RSRQ, RSRP and SINR, etc.) may be configured simultaneously for an evaluation of the CHO execution condition of a single candidate cell. A wireless device 1910 may execute a HO procedure, (e.g., regardless of any previously received CHO configuration), for example, based on receiving a HO command (e.g., without CHO configuration), and before any CHO execution condition may be satisfied. The wireless device 1910 may not monitor a source cell, for example, if executing a CHO (e.g., from the time a wireless device 1910 begins synchronization with a target cell).

A CHO procedure (e.g., intra-AMF/LTPF CHO procedure) may be as follows. A wireless device 1910 context within a source base station may contain information comprising roaming and/or access restrictions that may have been provided either at connection establishment and/or at a last tracking area (TA) update. The source base station may configure the wireless device 1910 measurement procedures and the wireless device 1910 may report according to the measurement configuration. The source base station may determine to use a CHO. The source base station may request a CHO for one or more candidate cells belonging to one or more candidate base stations. A CHO request message may be sent for each candidate cell. Admission control may be performed by a target base station. Slice-aware admission control may be performed, if the slice information may be sent to the target base station. The target base station may reject such PDU sessions, if the PDU sessions are associated with non-supported slices.

A candidate base station(s) may send a CHO response (e.g., HO request acknowledge) including configuration of a CHO candidate cell(s) to a source base station, for example, as a CHO procedure. The CHO response message may be sent to each candidate cell. The source base station may send a RRC reconfiguration message, to the wireless device 1910, containing the configuration of CHO candidate cell(s) and/or the CHO execution condition(s). The CHO configuration of candidate cells may be followed by other reconfiguration from the source base station.

A wireless device 1910 may send a RRC reconfiguration complete message to a source base station for a CHO procedure. The source base station may send an early status transfer message to a target base station(s) of a candidate cell(s), for example, if early data forwarding is applied. The wireless device 1910 may maintain connection with the source base station after receiving CHO configuration, and may begin evaluating the CHO execution conditions for the candidate cell(s). The wireless device 1910 may detach from the source base station, may apply the stored corresponding configuration for that selected candidate cell, may synchronize to the candidate cell, and may complete the RRC handover procedure by sending a RRC reconfiguration complete message to the target base station, for example, if at least one CHO candidate cell satisfies the corresponding CHO execution condition. The wireless device 1910 may remove/release stored CHO configurations, for example, based on (e.g. after) a successful completion of a RRC handover procedure. The target base station may send the handover success message to the source base station to inform the source base station that the wireless device 1910 has successfully accessed the target cell. The source base station may send the SN (e.g., PDCP sequence number) status transfer message. Late data forwarding may be initiated as soon as the source base station receives the handover success message. The source base station may send a handover cancel message to other signaling connections and/or any other candidate target base stations, to cancel a CHO for the wireless device 1910.

A CHO may be characterized by a configured execution condition that may determine if a corresponding HO command may be executed. A base station 1905 may send a CHO configuration. A wireless device 1910 may begin evaluating the execution condition(s) for CHO candidate cells based on receiving the CHO configuration. The wireless device 1910 may execute the HO command based on condition(s) being met for a CHO candidate cell. The wireless device 1910 may stop evaluating execution condition(s) for other candidate cells during the CHO execution. The CHO configuration may contain the configuration of CHO candidate cell(s) generated by candidate target base stations and execution condition(s) generated by a source base station. The execution condition may consist of measurement event, for example, like A3 and/or A5. At most two different trigger quantities (e.g., RSRP and RSRQ, RSRP and SINR, etc.) may be configured simultaneously for the evaluation of CHO execution condition of a single candidate cell. The wireless device 1910 may maintain connection with source base station until the wireless device 1910 satisfies the CHO execution condition for CHO candidate cell(s). A reception of a normal HO command (e.g., without a conditional component) may override any configured CHO configuration. The network may add, modify, and/or remove/release a configured CHO configuration using a RRC message (e.g., until the wireless device 1910 begins executing CHO to a candidate cell).

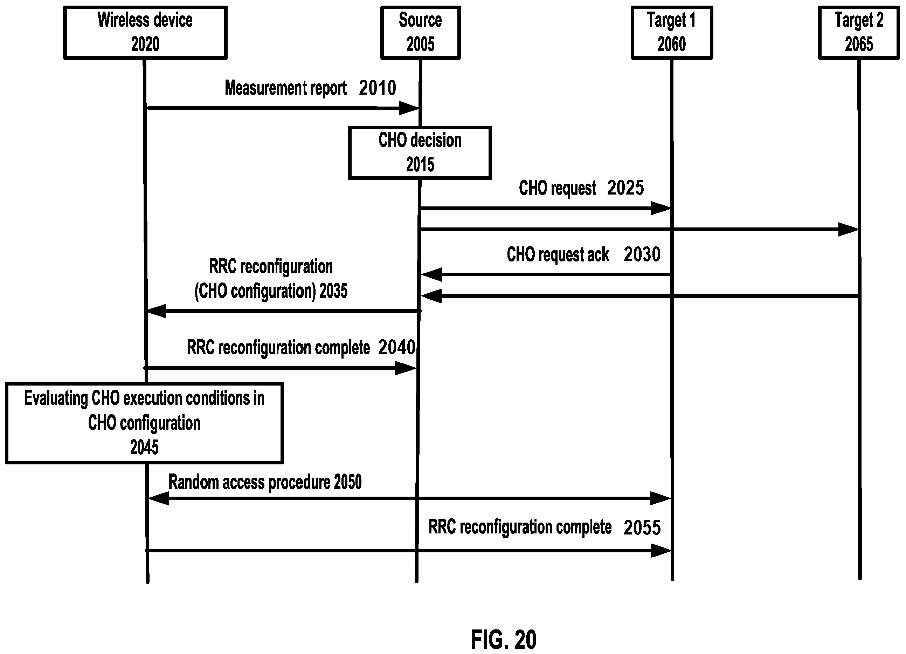

FIG. 20 shows an example of a conditional handover of a wireless device. A source base station 2005 (e.g.,

source) may determine a conditional handover 2015 (e.g., a CHO decision) based on a measurement report 2010 from a wireless device 2020. The source base station 2005 (e.g., source) may send a CHO request message 2025 to CHO target base station candidates (e.g., target 1 2060 and/or target 2 2065). The target base station (e.g., target 1 2060 and/or target 2 2065) may send a CHO response message 2030 (e.g., CHO request ack) including a CHO configuration, for example, based on receiving the CHO request message 2025. The source base station 2005 (e.g., source) may send a RRC reconfiguration message 2035 containing the CHO configuration of candidate cell(s) to the wireless device 2020, for example, based on receiving the CHO response message 2030 (e.g., CHO request ack). The wireless device 2020 may send a RRC reconfiguration complete message 2040 to the source base station 2005 (e.g., source), for example, based on receiving the RRC reconfiguration message 2035. The wireless device 2020 may begin evaluating CHO execution conditions for candidate cells in the CHO configuration 2045 and may maintain a connection with the source base station 2005 (e.g., source). The wireless device 2020 performing random access procedure 2050 may detach from the source base station 2005 (e.g., source), may apply the stored configuration of the selected candidate cell, and may synchronize to the candidate cell, for example, based on at least one CHO candidate cell satisfying the corresponding CHO execution condition. On a successful synchronization, the wireless device 2020 may complete the handover procedure by sending a RRC reconfiguration complete message 2055 to the target base station (e.g., target 1 2060) via the candidate cell.

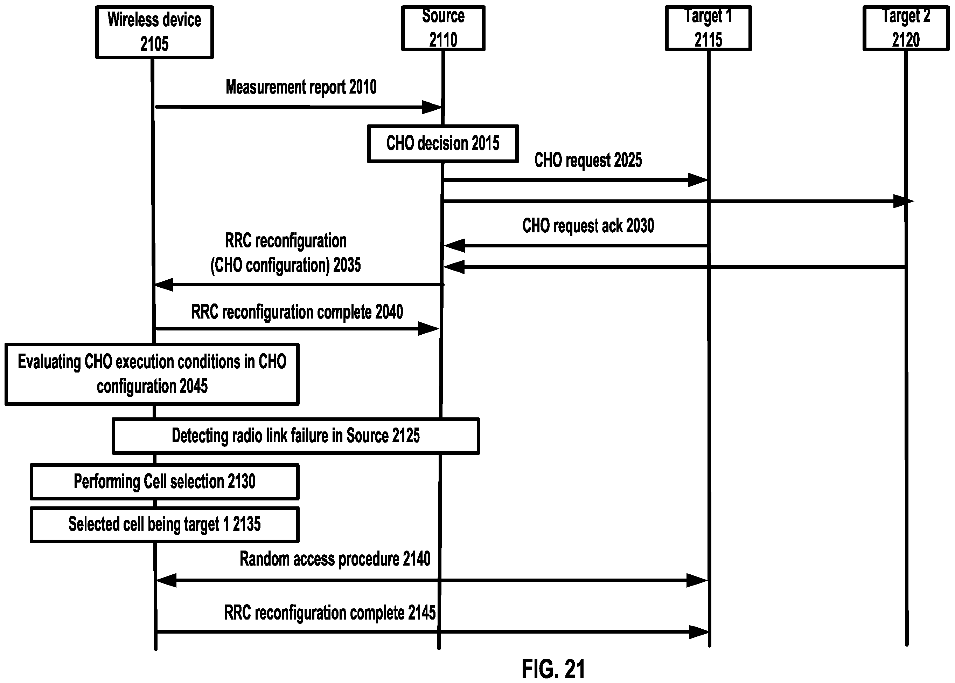

FIG. 21 shows an example of a handover failure. Following the steps 2010, 2015, 2025 and 2030 as shown in FIG. 20, a base station (e.g. source base station 2110) may send a CHO configuration 2035 and receive RRC reconfiguration complete 2040. A wireless device 2105 may execute a HO command 2045 once condition(s) may be met for a CHO candidate cell, for example, based on receiving a CHO configuration. The wireless device 2020 may detect a radio link failure (RLF) 2125 in a source base station (e.g., a PCell). The wireless device 2105 may perform a cell selection procedure 2130, for example, based on detecting the RLF. The wireless device 2105 may select a cell 2135, for example, based on the cell selection procedure. The wireless device 2105 may perform CHO execution to the selected cell, for example, based on the selected cell being a CHO candidate. Alternatively, a wireless device 2105 may perform a RRC connection reestablishment procedure via random access procedure 2140. The wireless device 2105 may perform a cell selection procedure 2130, for example, based on a legacy handover failure and/or a failure to access a CHO candidate cell. The wireless device 2105 may perform CHO execution, for example, based on the selected cell being a CHO candidate cell. Alternatively, the wireless device 2105 may perform a RRC connection reestablishment procedure via random access procedure 2140. The wireless device 2105 may send, based on the random access procedure 2140, a RRC reconfiguration complete message 2145.

A conditional PSCell addition (CPA) may be defined as a PSCell addition that may be executed by a wireless device 2105, for example, if execution condition(s) are met. The wireless device 2105 may begin evaluating the execution condition(s) based on receiving a CPA configuration, and may stop evaluating the execution condition(s) based on a PSCell addition and/or a PCell change being triggered.

The following principles may apply to a CPA: The CPA configuration may comprise configuration(s) of CPA candidate PSCell(s), execution condition(s), and may further comprise a MCG configuration, that may be applied, for example, if a CPA execution is triggered. An execution condition may consist of one or two trigger condition(s) (e.g., CondEvents). Only a single RS type, and at most two different trigger quantities (e.g., RSRP and RSRQ, RSRP and SINR, etc.), may be able to be used for the evaluation of CPA execution condition of a single candidate PSCell. A wireless device 2105 may execute a PSCell addition procedure and/or a PCell change procedure (e.g., regardless of any previously received CPA configuration), for example, before any CPA execution condition is satisfied, upon reception of a PSCell addition command and/or a PCell change command. The wireless device 2105 may release the stored CPA configuration, for example, after the successful completion of a PSCell addition procedure and/or a PCell change procedure. The wireless device 2105 may not be required to continue evaluating the execution condition of other candidate PSCell(s), for example, if executing CPA. The wireless device 2105 may release all stored conditional reconfigurations (e.g., for CPA and for CHO), for example, based on the CPA procedure being executed successfully.

A SN addition procedure may be initiated by a MN and may be used to establish a wireless device 2105 context at the SN to provide resources from the SN to the wireless device 2105. This procedure may be used to add at least an initial SCG serving cell of the SCG, for example, for bearers that may require SCG radio resources. This procedure may be used to configure an SN terminated MCG bearer (e.g., where no SCG configuration may be needed). A conditional secondary node addition procedure may be used for CPA configuration and/or CPA execution, for example, for the case of a CPA.

A MN may determine to configure CPA for a wireless device 2105. The MN may requests the candidate SN(s) to allocate resources for one or more specific PDU Sessions/QoS Flows, indicating QoS Flows characteristics (QoS Flow Level QoS parameters, PDU session level TNL address information, and PDU session level Network Slice info), indicating that the request may be for CPA and/or for providing an upper limit for the number of PSCells that may be prepared by the candidate SN. The MN may also indicate the requested SCG configuration information, including the entire wireless device 2105 capabilities and/or the wireless device 2105 capability coordination result, for example, for bearers requiring SCG radio resources. The MN may provide the candidate cells recommended by MN via the latest measurement results for the candidate SN to choose and/or configure the SCG cell(s), for bearers requiring SCG radio resources. The MN may request that the candidate SN allocate radio resources for split SRB operation. The MN may provide all the needed security information to the candidate SN (e.g., even if no SN terminated bearers are setup) to enable SRB3 to be setup, for example, based on SN decision, and in NR-DC.

A MN may provide Xn-U UL TNL address information for MN terminated bearer options that require Xn-U resources between the MN and a candidate SN, for example, in a conditional SN addition procedure. The MN may provide a list of available DRB IDs for SN terminated bearers. The candidate SN may store this information and/or may use it if establishing SN terminated bearers. The candidate SN may reject the addition request. The candidate SN may determine how to map QoS flows to DRB for SN terminated bearer options that require Xn-U resources between the MN and the candidate SN, for example, based on the MN providing a list of QoS flows per PDU sessions for which SCG resources may be requested to be setup. MCG and SCG resources may be requested of such an amount, that the QoS for the respective QoS Flow may be guaranteed by the exact sum of resources provided by the MCG and the SCG together, or even more, for split bearers. The MN decision may be reflected by the QoS Flow parameters signaled to the candidate SN, which may differ from QoS Flow parameters received over NG For MN terminated split bearers. The MN may request the direct establishment of SCG and/or split bearers (e.g., without first having to establish MCG bearers) for a specific QoS flow. All QoS flows may be allowed to be mapped to SN terminated bearers (e.g., there may be no QoS flow mapped to an MN terminated bearer).

A SN may allocate respective radio resources and/or, dependent on bearer type options, respective transport network resources and/or the SN may provide a prepared PSCell ID(s) to a MN, for example, in a conditional SN addition procedure, and if the RRM entity in the candidate SN may be able to admit the resource request. The candidate SN may configure random access, so that synchronization of the SN radio resource configuration may be performed at the CPA execution, for bearers requiring SCG radio resources. The candidate SN may determine the list of PSCell(s) to prepare (e.g., considering a maximum number that may be indicated by the MN), for example, among the list of cells as indicated in measurement results indicated by the MN, and the candidate SN may determine other SCG SCells and may provide new, corresponding SCG radio resource configuration(s) to the MN, for example, in an NR RRC reconfiguration message (e.g., by the SN) contained in the SN addition request acknowledge message, for each prepared PSCell. The candidate SN may be able to accept or alternatively, to reject each of the candidate cells listed within the measurement results indicated by the MN (e.g., the candidate SN may not able to configure any alternative candidates). The candidate SN may provide Xn-U TNL address information (e.g., tunnel address) for a respective DRB, Xn-U UL TNL address information for SN terminated bearers, Xn-U DL TNL address information for MN terminated bearers, for example, for cases of bearer options that require Xn-U resources between the MN and the candidate SN. The candidate SN may provide the NG-U DL TNL address information for the respective PDU Session and security algorithm for SN terminated bearers. A SCG radio resource configuration may be provided, for example, if SCG radio resources have been requested. The MN may provide Xn-U DL TNL address information in the Xn-U address indication message for SN terminated bearers using MCG resources. the MN may send the early status transfer message to the candidate SN, for example, for a case of early data forwarding in CPA.

A MN may send to a wireless device 2105 a RRC reconfiguration message that may comprise a CPA configuration, (e.g., a list of RRC reconfiguration* messages and/or associated execution conditions), wherein each RRC reconfiguration message* may contain a SCG configuration, in the RRC reconfiguration** received from a candidate SN, and may possibly contain an MCG configuration, for example, in a conditional SN addition procedure. The RRC reconfiguration message may also include an updated MCG configuration (e.g., to configure the required conditional measurements).

A wireless device 2105 may apply the RRC reconfiguration message, may store the CPA configuration, and/or may reply to a MN with a RRC reconfiguration complete message, for example, in a conditional SN addition procedure. The wireless device 2105 may perform the reconfiguration failure procedure, for example, in case the wireless device 2105 may be unable to comply with a part of the configuration included in the RRC reconfiguration message. The wireless device 2105 may begin evaluating the execution conditions. The wireless device 2105 may apply a RRC reconfiguration message corresponding to the selected candidate PSCell, and may send an MN RRC reconfiguration complete message, that may comprise a RRC reconfiguration complete message for the selected candidate PSCell and information enabling the MN to identify the SN of the selected candidate PSCell, for example, if the execution condition of one candidate PSCell is satisfied. The MN may inform the SN of the selected candidate PSCell that the wireless device 2105 has completed the reconfiguration procedure successfully via SN reconfiguration complete message, including the RRC reconfiguration complete message. The MN may send the SN release request message(s) to cancel CPA in the other candidate SN(s), if configured. The other candidate SN(s) may acknowledge the release request.

A wireless device 2105 may perform synchronization towards a PSCell indicated in a RRC reconfiguration message applied, for example, in a conditional SN addition procedure. A successful RA procedure towards a SCG may not be required for a successful completion of a RRC connection reconfiguration procedure. A MN may send a SN status transfer message, for example, if PDCP termination point may be changed to the SN for bearers using RLC AM, and if RRC full configuration may not be used. The MN may take actions to minimize service interruption due to activation of MR-DC (e.g., Data forwarding), for example, for SN terminated bearers and/or QoS flows moved from the MN, and dependent on the characteristics of the respective bearer and/or QoS flow. The update of the UP path towards the 5GC may be performed via a PDU Session Path Update procedure, if applicable.

A Conditional PSCell Change (CPC) may be defined as a PSCell change that may be executed by a wireless device 2105, for example, if execution condition(s) are met. The wireless device 2105 may begin evaluating the execution condition(s) based on receiving the CPC configuration, and may stop evaluating the execution condition(s) based on a PSCell change and/or PCell change being triggered. Intra-SN CPC without MN involvement, inter-SN CPC initiated either by MN and/or SN may be supported.

A CPC configuration may comprise a configuration of CPC candidate PSCell(s) and/or execution condition(s), and the CPRC configuration may comprise a MCG configuration for inter-SN CPC, that may be applied, for example, if CPC execution is triggered. An execution condition may consist of one or more trigger condition(s) (e.g., CondEvents). Only a single RS type and at most two different trigger quantities (e.g. RSRP and RSRQ, RSRP and SINR, etc.) may be able to be used for the evaluation of CPC execution condition of a single candidate PSCell. A wireless device 2105 may execute a PSCell change procedure and/or the PCell change procedure (e.g., regardless of any previously received CPC configuration), for example, before any CPC execution condition may be satisfied, and/or upon reception of a PSCell change command or a PCell change command. The wireless device 2105 may release all stored CPC configurations, for example, based on the successful completion of a PSCell change procedure and/or PCell change procedure. The wireless device 2105 may not be required to continue evaluating the execution condition of other candidate PSCell(s), for example, if executing CPC. The wireless device 2105 may release all stored conditional reconfigurations (e.g., for CPC and for CHO), for example, based on the CPC procedure being executed successfully. The wireless device 2105 may release the stored CPC configurations, for example, based on the release of SCG.

A secondary node change procedure may be initiated either by MN and/or SN and may be used to transfer a wireless device 2105 context from a source SN to a target SN and to change a SCG configuration in a wireless device 2105 from one SN to another. A conditional secondary code change procedure, that may be initiated either by the MN or SN, may be used for CPC configuration and/or CPC execution, for example, in case of CPC.

A MN may initiate a conditional SN change by requesting a candidate SN(s) allocate resources for a wireless device 2105 by means of a SN addition procedure, that may indicate that the request may be for a CPC. The MN may provide candidate cells recommended by MN, via the latest measurement results for the candidate SN(s) to choose and configure the SCG cell(s), upper limit for a number of PSCells that may be prepared by the candidate SN. The candidate SN may determine a list of PSCell(s) to prepare (e.g., by considering the maximum number indicated by the MN) and, for each prepared PSCell, a candidate SN may determine other SCG SCells and/or may provide the new corresponding SCG radio resource configuration to the MN in a RRC reconfiguration** message contained in the SN addition request acknowledge message with the prepared PSCell ID(s) among the list of cells as indicated within the measurement results indicated by the MN. The candidate SN may provide data forwarding addresses to the MN, for example, if data forwarding is needed. The candidate SN may include an indication of a full and/or a delta RRC configuration. The candidate SN may either accept or reject each of the candidate cells listed within the measurement results indicated by the MN (e.g., the candidate SN may be not able to configure any alternative candidates). The MN may trigger the MN-initiated SN modification procedure (e.g., to the source SN) to retrieve the current SCG configuration and to allow provision of data forwarding related information before initiating the conditional SN change.

A MN may send to the wireless device 2105 a RRC reconfiguration message including a CPC configuration, (e.g., a list of RRC reconfiguration* messages and associated execution conditions), in which each RRC reconfiguration* message may contain a SCG configuration in the RRC reconfiguration** message received from the candidate SN and possibly an MCG configuration, for example, if the MN initiated a conditional SN change. The RRC reconfiguration message may be able to include an updated MCG configuration (e.g., to configure the required conditional measurements). The wireless device 2105 may apply the RRC reconfiguration message received, store the CPC configuration and replies to the MN with a RRC reconfiguration complete message. The wireless device 2105 may perform a reconfiguration failure procedure, for example, if the wireless device 2105 is unable to comply with the configuration included in the RRC reconfiguration message.

A MN may inform a source SN that a CPC may not have been configured via Xn-U address indication procedure, the source SN, (e.g., if applicable, together with the early status transfer procedure), and may begin early data forwarding, for example, for the case of MN initiated conditional SN change, upon receiving the MN RRC reconfiguration complete message from a wireless device 2105. The PDCP SDU forwarding may take place during early data forwarding. The wireless device 2105 may begin evaluating the execution conditions, for example, based on receiving a RRC reconfiguration message. The wireless device 2105 may apply a RRC reconfiguration* message corresponding to the selected candidate PSCell, and may send an MN RRC reconfiguration complete* message, that may comprise an NR RRC reconfiguration complete** message for the selected candidate PSCell and information enabling the MN to identify the SN of the selected candidate PSCell, for example, if the execution condition of one candidate PSCell is satisfied. The MN may trigger a MN initiated SN release procedure to inform the source SN to stop providing user data to the wireless device 2105, and may trigger the Xn-U address indication procedure to inform the source SN the address of the SN of the selected candidate PSCell, to begin late data forwarding.

A MN may inform a target candidate SN via a SN reconfiguration complete message, including a SN RRC reconfiguration complete** message, for example, for the case of MN initiated conditional SN change, and if the RRC connection reconfiguration procedure was successful. The MN may send the SN release request message(s) to cancel CPC in other candidate SN(s), if configured. The other candidate SN(s) may acknowledge the release request. The wireless device 2105 may synchronize to a PSCell indicated in the RRC reconfiguration* message applied, for example, if configured with bearers requiring SCG radio resources. The source SN may send a message, that the MN may send to the SN of the selected candidate PSCell, for example, if a PDCP termination point is changed for bearers using RLC AM. Data forwarding from the source SN may take place. Data forwarding may be initiated as early as the source SN receives an early data forwarding address. The source SN may send a secondary RAT data usage report message to the MN and may include the data volumes delivered to and/or received from the wireless device 2105. A PDU session path update procedure may be triggered by the MN. The source SN may release radio and/or C-plane related resources associated with the wireless device 2105 context based on receiving the wireless device 2105 context release message. Any ongoing data forwarding may continue.

A base station may send a conditional primary secondary cell group cell (e.g., a PSCell) configuration. A wireless device 2105 may begin evaluating the execution condition(s) for PSCell candidate cells based on receiving the conditional PSCell configuration. The wireless device 2105 may execute a PSCell addition and/or change (e.g., SCG addition), for example, based on the condition(s) being met for a PSCell candidate cell. The wireless device 2105 may stop evaluating the execution condition for other candidate cells during the PSCell addition and/or change execution. The conditional PSCell configuration may comprise the configuration of PSCell candidate cell(s) generated by candidate target base stations and/or execution condition(s) generated by a source base station. The execution condition for conditional PSCell change may consist of measurement event such as A3 and A5. The execution condition for conditional PSCell addition may consist of measurement event such as A4 and A1.

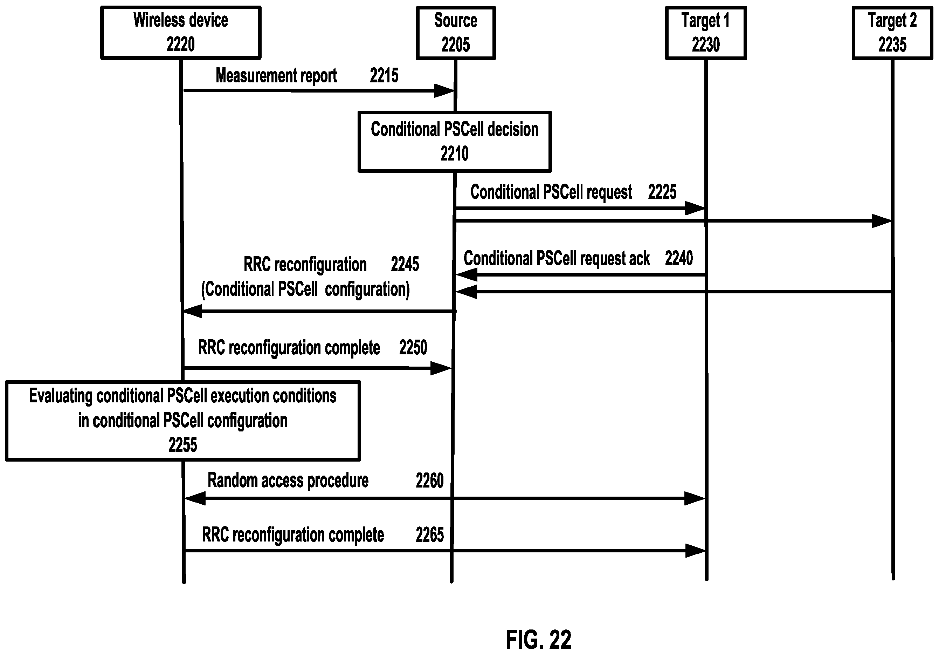

FIG. 22 shows an example of a conditional PSCell addition and change procedure. A source base station 2205 (e.g., source) may determine a conditional PSCell addition and/or change 2210 based on measurement report 2215 from a wireless device 2220. A source base station 2205 (e.g., source) may send a conditional PSCell addition and/or change request message 2225 to target candidate cells (e.g., target 1 2230, target 2 2235, etc.) for the PSCell addition and/or change. The target cell (e.g., target 1 2230, target 2 2235, etc.) may send a conditional PSCell addition and/or change response message 2240 including a conditional PSCell addition and/or change configuration, for example, based on receiving the conditional PSCell addition and/or change request message 2225. The source base station 2205 (e.g., source) may send a RRC reconfiguration message 2245 containing the conditional PSCell addition and/or change configuration of candidate cells to the wireless device 2220, for example, based on receiving the conditional PSCell addition and/or change response message 2240. The wireless device 2220 may send a RRC reconfiguration complete message 2250 to the source base station 2205 (e.g., source), for example, based on receiving the RRC reconfiguration message 2245. The wireless device 2220 may begin evaluating conditional PSCell addition and/or change execution conditions for candidate cells in the conditional PSCell addition and/or change configuration 2255. The wireless device 2220 may apply the stored configuration of the selected candidate cell and synchronize to the candidate cell, for example, based on at least one conditional PSCell addition and/or change candidate cell satisfying the corresponding conditional PSCell addition and/or change execution condition. The wireless device 2220 may complete the conditional PSCell addition and/or change procedure, for example, based on successfully completing the random access procedure.

A wireless device 2220 may be configured with a MCG and a SCG. Neither MCG nor SCG transmission may be suspended in the wireless device 2220. The wireless device 2220 may be configured with split SRB1 and/or SRB3. The wireless device 2220 may initiate an MCG failure information procedure, for example, based on detecting RLF of the MCG (e.g., PCell). The wireless device 2220 may send a MCG failure information message to the MCG (e.g., PCell) via the SCG (e.g., PSCell) using the split SRB1 and/or SRB3. The MCG failure information message may comprise a failure type and/or measurement results. The SCG (e.g., PSCell) may forward the MCG failure information message to the MCG, for example, based on receiving the MCG failure information message. The MCG may send a RRC reconfiguration message 2245 and/or a RRC release message to the wireless device 2220 via the SCG, for example, based on receiving the MCG failure information message. The wireless device 2220 may continue the RRC connection without re-establishment, for example, based on receiving the RRC reconfiguration message 2245.

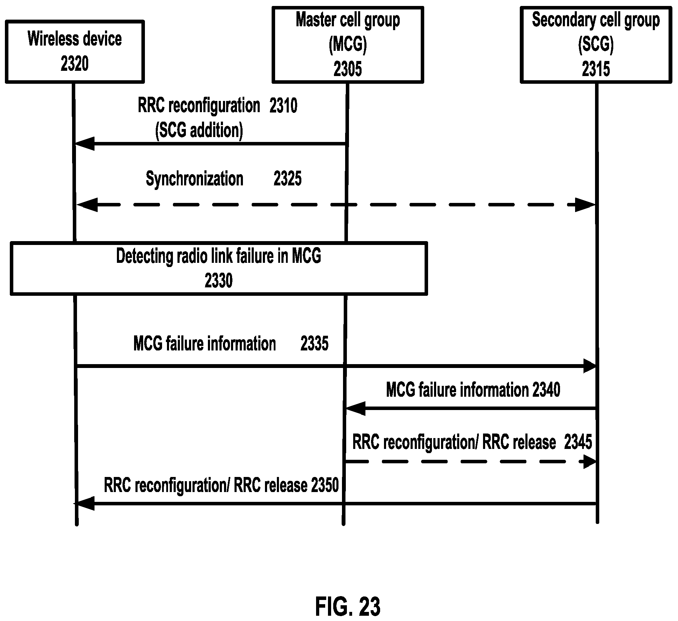

FIG. 23 shows an example of a MCG failure information procedure. A base station of MCG 2305 may send a RRC reconfiguration message 2310 comprising a cell group configuration for a SCG 2315. A wireless device 2320 may perform the cell group configuration for the SCG 2315 and/or synchronization 2325 to a PSCell of the SCG 2315 where the SCG 2315 may comprise one PSCell and optionally one or more secondary cells (SCells), for example, based on receiving the RRC reconfiguration message. The wireless device 2320 may perform a random access procedure to the PSCell for the synchronization 2325. The wireless device 2320 may detect a RLF 2330 in the MCG 2305 (e.g., PCell). The wireless device 2320 may configure split SRB1 and/or SRB3. The wireless device 2320 may initiate an MCG failure information procedure, for example, based on detecting the RLF. The wireless device 2320 may set primary path to a cell group identity of the SCG 2315, for example, based on the initiating the MCG failure information procedure 2325, and the split SRB1 being configured and/or PDCP duplication not being configured for the split SRB1. The wireless device 2320 may send an MCG failure information 2335 message to the MCG 2305 via SCG 2315, using the split SRB1 and/or the SRB3. The MCG failure information 2335 may comprise a failure type and measurement report. The SCG 2315 may send (e.g., forward) the MCG failure information 2340 to the MCG 2305, for example, based on receiving the MCG failure information 2335. The MCG 2305 may send a RRC reconfiguration message or a RRC release message 2345, for example, based on receiving the MCG failure information 2340. The SCG 2315 may send (e.g. forward) a RRC reconfiguration message or a RRC release message 2350, for example, based on receiving the RRC reconfiguration message or the RRC release message 2345.

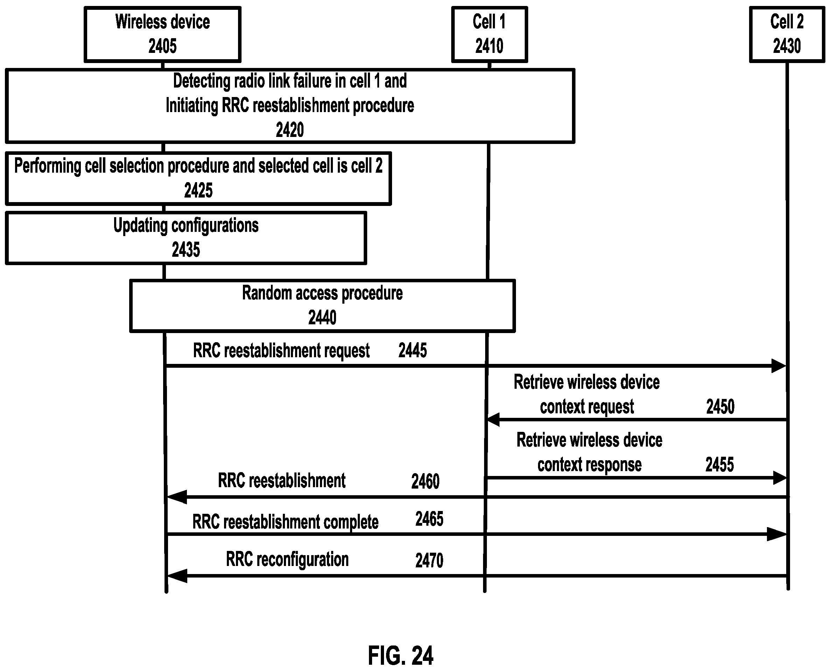

FIG. 24 shows an example of RRC connection reestablishment. A wireless device 2405 may have a RRC connection with a first cell 2410 (e.g., cell 1). The wireless device 2405 may detect a RLF 2420 in the RRC connection with the first cell 2410 (e.g., cell 1). The wireless device 2405 may initiate a RRC connection reestablishment procedure. The wireless device 2405 may perform a cell selection procedure 2425, for example, based on the initiating the RRC connection reestablishment procedure. The wireless device 2405 may select a second cell 2430 (e.g., cell 2), for example, based on the cell selection procedure. The wireless device 2405 may update current configurations 2435. The wireless device 2405 may release current configurations and/or apply new configurations of a second cell 2430 (e.g., cell 2), for example, for the updating. The wireless device 2405 may release configurations of PCell and/or PSCell. The wireless device 2405 may reset MAC. The wireless device 2405 may apply default configurations, such as default L1 parameters, a default MAC cell group configuration and/or a CCCH configuration. The wireless device 2405 may apply parameters included in system information of the second cell 2430 (e.g., cell 2). The wireless device 2405 may apply parameters for a physical layer in SIB1 and/or a time alignment timer in SIB1. The wireless device 2405 may reestablish PDCP for SRB1, RLC for SRB1 and/or may apply default configuration for SRB 1. The wireless device 2405 may configure lower layers (e.g., PDCP layer) to suspend integrity protection and/or ciphering for SRB1. The wireless device 2405 may resume SRB1 based on an updated configuration for SRB1. The wireless device 2405 may update configurations regardless of a selected cell. The wireless device 2405 may release current configurations and/or apply new configurations of a selected cell regardless of the selected cell, for example, for the updating. The wireless device 2405 may select the first cell 2410 (e.g., cell 1), for example, based on the cell selection procedure. The wireless device 2405 may release current configurations for the first cell 2410 (e.g., cell 1) and/or may apply new configurations of the first cell 2410 (e.g., cell 1). Recovering a RRC connection may cause signaling overhead and delay. The wireless device 2405 may perform a random access procedure 2440, for example, based on the updating configurations. The wireless device 2405 may send a RRC reestablishment request message 2445 via the second cell 2430 (e.g., cell 2) using the resumed SRB 1, for example, based on the successful completion of the random access procedure. The second cell 2430 (e.g., a base station of the cell 2) may send a retrieve wireless device context request message 2450 to the first cell 2410 (e.g., cell 1 and/or a base station of the cell 1), for example, based on receiving the RRC reestablishment request message 2445. The first cell 2410 (e.g., cell 1) may send the retrieve wireless device context response message 2455 including wireless device context, for example, based on receiving the retrieve wireless device context request message 2450. The wireless device context may include a bearer configuration. The second cell 2430 (e.g., cell 2) may send a RRC reestablishment message 2460 to the wireless device 2405, for example, based on receiving the retrieve wireless device context response 2455. The second cell 2430 (e.g., cell 2) may send a RRC reconfiguration message including (e.g., an updated) bearer configuration. The wireless device 2405 may perform a procedure to apply the configurations, for example, based on receiving the configuration.

L1/L2 based mobility and L1 measurements may be described as the following. L1/L2 based handover may refer to a handover that a wireless device triggers (e.g., perform and/or initiate) based on receiving L1/L2 signaling. In the present disclosure, L1/L2 based mobility may be referred to as and/or interchangeable with L1/L2 inter-cell mobility, L1/L2 signaling based handover, L1/L2 based handover, lower layer mobility (LLM) and/or the like. The L1/12 signaling that triggers the L1/L2 based handover may comprise at least one of layer 1 (e.g., Physical layer) signal (e.g., DCI and/or UCI) and/or a layer 2 (e.g., MAC layer) signal (e.g., MAC CE and/or MAC subheader). The L1/12-based mobility may comprise a procedure that the wireless device receives, from a network (e.g., a serving cell or a serving base station), at least two signals (e.g., at least two control signals/messages). The at least two signals may comprise an L3 signaling (e.g., a RRC message and/or SIB) comprising configuration parameters of the L1/L2 based handover. The configuration parameters may be semi-statically pre-configured for the handover triggered by the L1/L2 signaling. The at least two signals may comprise the L1/L2 signaling that triggers (e.g., performs and/or initiates) the L1/L2 based handover.

A wireless device may receive, from a network (e.g., a serving cell, a service base station, a serving DU, and/or a serving CU), one or more messages (e.g., RRC message and/or SIB) comprising parameters used for the L1/L2 based handover. The wireless device may receive, via a source cell (e.g., current serving cell) of the network, for example, the one or more messages. The one or more messages may comprise one or more handover configurations (e.g., comprising parameters used for the L1/L2 based handover). Each of the one or more handover configurations may be associated with a respective handover and/or be associated with a respective target cell. A handover configuration (e.g., that may be associated with a respective target cell) of the one or more handover configuration may comprise configuration parameters of L1/L2 based handover to the respective target cell. The configuration parameters may comprise: an identifier of the respective target cell; and/or an indication indicating that the handover corresponding to the configuration parameters may be triggered and/or initiated by the L1/L2 signaling.

A wireless device may monitor downlink transmission occasions (e.g., PDCCH and/or PDSCH) of a source cell, for example, based on (e.g. after or in response to) receiving one or more messages. The wireless device may receive L1/L2 signaling via downlink transmission occasions. The L1/L2 signaling may comprise DCI with a particular format that the wireless device detects/receives via the downlink transmission occasion (e.g., PDCCH). The L1/L2 signaling may comprise an MAC CE that the wireless device receives, decodes, and/or parses from a PDSCH that may be scheduled by DCI and/or a PDCCH received via the downlink transmission occasions. The L1/L2 signaling may comprise an indication indicating one of the one or more handover configurations that are received, configured, and/or indicated by the one or more messages (e.g., RRC message and/or SIB). The indication may comprise a first handover configuration of the one or more handover configurations. The indication may comprise an identifier of a first handover configuration. The indication may be a configuration ID of the first handover configuration. The indication may comprise an identifier of a target cell respective to the first handover configuration. The wireless device may perform and/or execute, based on receiving the L1/L2 signaling, the handover (e.g., L1/L2 based handover) to the target cell using configuration parameters of the first handover configuration.

A network (e.g., base station, DU, and/or CU) may determine to perform (e.g., trigger and/or initiate) L1/L2 based handover, for example, based on (e.g., after or in response to) sending (e.g., transmitting) the one or more handover configurations to the wireless device. The network may determine when to transmit, to a wireless device, the L1/L2 signaling to perform (e.g., trigger and/or initiate) L1/L2 based handover, for example, based on (e.g., after or in response to) sending (e.g., transmitting) the one or more handover configurations to the wireless device. The wireless device may transmit, for the network to determine to perform the L1/L2 based handover, a report comprising one or more measurements (e.g., L 1 measurement and/or L3 measurement) of radio channel(s) over which the wireless device receives one or more reference signals from the network. The network may determine to perform (e.g., trigger and/or initiate) a L1/L2 based handover based on the report comprising the one or more measurements. The network may determine a cell, among one or more cells configured for L1/L2 based handover (e.g., as potential target cells for L1/L2 based handover), that may be a target cell of the L1/L2 based handover, for example, based on the one or more measurements. The network may indicate the target cell using the indicator of the L1/L2 signaling to the wireless device to trigger (e.g., perform and/or initiate) the L1/L2 based handover. The network may determine to transmit, to the wireless device, the indication of the L1/L2 signaling to trigger (e.g., perform and/or initiate) the L 1/L2 based handover to the target cell, for example, based on the one or more measurements. L1/L2 based handover may be applied for a PCell change and/or for a PSCell change.

A report may comprise a L 1 measurement. The L 1 measurement may refer to a measurement report generated by a layer 1 (physical layer) and/or sent (e.g., transmitted) via physical channel(s) (e.g., as described herein in FIG. 5B). The physical channel(s) may comprise a PUCCH and/or PUSCH. A wireless device may send (e.g., transmit) the L1 measurement via PUSCH by piggybacking the PUCCH (e.g., comprising the L1 measurement) onto the PUSCH. A report may comprise a L3 measurement. The L3 measurement may refer to a measurement report generated by a layer 3 (e.g., a RRC layer) and/or sent (e.g., transmitted) via logical channel(s) (e.g., as described herein in FIG. 5B). The logical channel(s) may comprise CCCH and/or DCCH.

A network may send (e.g., transmit) one or more handover configurations for a L1/L2 based handover for a L 1 measurement. The one or more messages (e.g., a handover configuration of the one or more handover configurations) may comprise one or more resource configurations (e.g., CSI-ResourceConfig IE) of one or more reference signals and/or one or more report configurations (e.g., CSI-ReportConfig IE). The one or more resource configurations and/or the one or more report configurations may be for the L1 measurement of the L1/L2 based handover. The one or more resource configurations may indicate radio resource configuration parameters based on a wireless device receiving the one or more reference signals. The one or more report configurations may indicate parameter(s) and/or value(s) that may be contained in a report comprising a L 1 measurement. Each of the one or more report configurations may be associated with at least one (e.g., downlink) reference signal indicated by the one or more resource configurations. A first reporting configuration of the one or more report configurations may comprise an identifier of at least one reference signal indicated by the one or more resource configurations. The wireless device may send (e.g., transmit) a report comprising a measured quantity of the at least one reference signal, for example, if the report is generated based on the first reporting configuration and/or if the first reporting configuration comprises the identifier of at least one reference signal. Each of the one or more report configurations may be associated with a respective uplink resource (e.g., PUCCH and/or PUSCH). The wireless device may send (e.g., transmit) the report via the uplink resource associated with the first reporting configuration, for example, if the report is generated based on the first reporting configuration.

Each (e.g., CSI-ResourceConfig IE) of one or more resource configurations may be associated with one or more (e.g., downlink) reference signals. A first resource configuration of the one or more resource configurations may comprise radio resource configuration parameters of the one or more reference signals. The radio resource configuration parameters may indicate a set of downlink resources on which the wireless device may perform measurements (e.g., receives the set of reference signals) in order to determine the quantity or quantities to be reported. The radio resource configuration parameters may comprise an identifier of each of the one or more reference signals, a type (e.g., CSI-RS, SSB, DM-RS, and/or PT-RS) of each of the one or more reference signals, a transmission type (e.g., periodic, aperiodic, and/or semi-persistent) of each of the one or more reference signals, a sequence ID of each of the one or more reference signals, power control parameter(s) of each of the one or more reference signals, and/or time and frequency resource(s) via which the wireless device receives each of the one or more reference signals.

Each of one or more reference signals indicated by one or more resource configurations may be associated with a respective cell. The cell associated with (e.g., respective to) a reference signal of the one or more reference signals may be one of one or more cells configured by the network. The cell associated with (e.g., respective to) the reference signal may be a serving cell (e.g., PCell, PSCell, SCell, SPCell). The cell associated with (e.g., respective to) the reference signal may be a non-serving cell (e.g., referred to as one or more SSBs (e.g., or TRP) configured with a serving cell and/or configured with different PCI than PCI of the serving cell). The cell associated with (e.g., respective to) the reference signal may be a cell configured as one of target cell(s) of L1/L2 based handover. The cell associated with (e.g., respective to) the reference signal may be a neighbor cell configured as measurement configurations for L3 measurement.

Each (e.g., CSI-ReportConfig IE) of one or more report configurations may indicate: a specific quantity or a set of quantities to be contained in a report; downlink resource(s) (e.g., from where the wireless device receives the one or more reference signals) on which the wireless device performs measurements (e.g., receives the set of reference signals) in order to determine the quantity or quantities to be reported; how actual reporting may be carried out (e.g., if the reporting is to be done and/or what uplink physical channel to use for the reporting).

A report configuration of one or more report configurations may indicate a set of (e.g., downlink) reference signals and/or a set of (e.g., downlink) resources on which the wireless device performs measurements (e.g., receives the set of reference signals) for the wireless device to determine the quantity or quantities to be reported. This may be done by associating the report configuration with one or more reference signals (e.g., NZP-CSI-RSResourceSet) to be used for the wireless device to measure channel characteristics. A report configuration may comprise an identifier (e.g., set ID) of a set of one or more reference signals. One or more resource configurations may comprise the identifier and a corresponding set of one or more reference signals. Each of the one or more reference signals may comprise one or more CSI-RSs, one or more SSBs, and/or one or more PT-RSs. The set of one or more reference signals may comprise any combination of one or more CSI-RSs, one or more SSBs, and/or one or more PT-RSs.

A report configuration of one or more report configurations may indicate a quantity and/or a set of quantities that a wireless device may report and/or contain in a report. A quantity and/or set of quantities may be referred to as channel-state information (CSI). The set of quantities may comprise at least one of any combination of channel-quality indicator (CQI), rank indicator (RI), and/or precoder-matrix indicator (PMI). The report configuration may indicate a reporting of received signal strength (e.g., reference-signal received power (RSRP)), received signal quality (e.g., reference-signal received quality (RSRQ)), and/or signal to interference and noise ratio (SINR). The RSRP and/or RSRQ for the L 1 measurement may be referred to as L1-RSRP and/or L1-RSRQ, respectively (e.g., the reporting does not include the more long-term ("layer 3") filtering applied for the higher-layer RSRP reporting).

A report configuration of one or more report configurations may indicate if and/or how a wireless device may send (e.g., transmit) a report. The transmission of the report by the wireless device may be periodic (e.g., referred to as periodic reporting), semi-persistent (e.g., referred to as semi-persistent reporting), and/or aperiodic (e.g., referred to as aperiodic reporting). The report configuration may indicate a periodicity of the periodic reporting, for the periodic reporting. The wireless device may send (e.g., transmit) the report periodically (e.g., perform the periodic reporting) via PUCCH. The report configuration may comprise information about a periodically available PUCCH resource that may be used for the periodic reporting. The wireless device may be configured with periodically occurring reporting instances in the same way as for periodic reporting with activation and/or deactivation mechanism, for example, for semi-persistent reporting. The wireless device may activate (e.g., begin) and/or deactivate (e.g., stop or suspend) the semi-persistent reporting, for example, based on receiving a control signal (e.g., DCI and/or MAC CE) indicating the activation or deactivation. The wireless device may send (e.g., transmit) the report semi-persistently (e.g., perform the semi-persistent reporting). The report configuration may comprise information about a periodically available PUCCH resource to be used for the semi-persistent reporting. The wireless device may send (e.g., transmit) the report semi-persistently (e.g., perform the semi-persistent reporting) via semi-persistently allocated PUSCH resource(s).

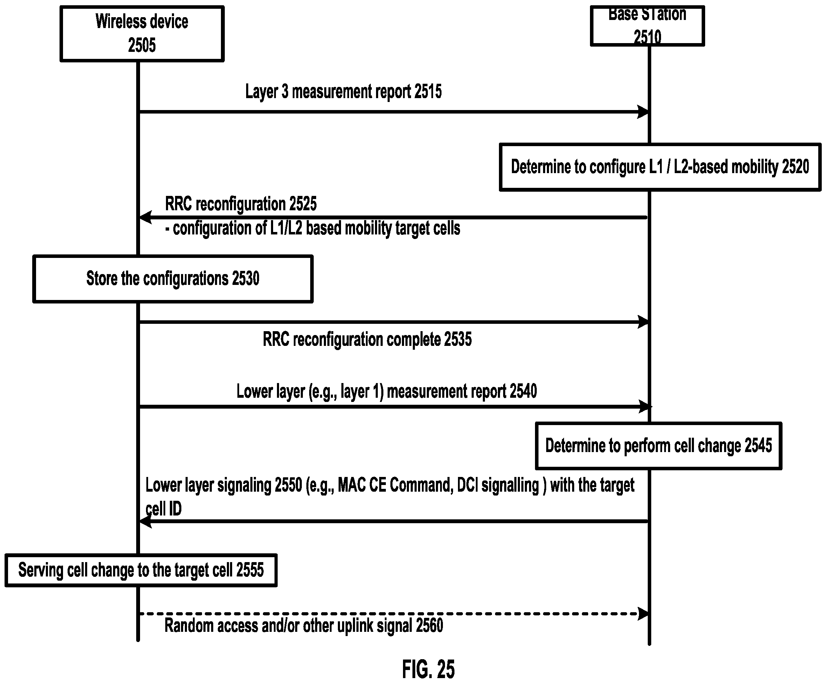

FIG. 25 shows an example of a handover of a wireless device. A wireless device 2505 may send a Layer 3 measurement report 2515 to a base station 2510. The base station 2510 may determine to configure L1 / L2-based mobility 2520 based on the Layer 3 measurement report 2515. The wireless device 2505 may receive, from a network (e.g., a serving cell, a service base station, a serving DU, and/or a serving CU), one or more messages 2525 (e.g., RRC message and/or SIB). The one or more messages may comprise one or more handover configurations for a L1/L2 based handover. The one or more messages may comprise configuration parameters used for a L1 measurement of the L1/L2 based handover. The configuration parameters may comprise one or more resource configurations (e.g., CSI-ResourceConfig IE) and/or one or more report configurations (e.g., CSI-ReportConfig IE) that may be used for the L1 measurement. The wireless device 2505 may store the configurations 2530 and send RRC reconfiguration complete 2535 based on the one or more messages 2525. The wireless device 2505 may begin, perform, and/or initiate the L1 measurement based on the configuration parameters of: one or more resource configurations (e.g., CSI-ResourceConfig IE); and/or one or more report configurations (e.g., CSI-ReportConfig IE), for example, based on (e.g., after or in response to) receiving the configuration parameters. The wireless device 2505 may determine and/or measures CQI, RI, PMI, RSRP, RSRQ, and/or SINR of and/or using one or more reference signals (e.g., CSI-RSs, SSBs, PT-RSs) configured by the one or more resource configurations. The wireless device 2505 may generate a report comprising the L1 measurement. The wireless device 2505 may determine the contents and/or parameter value(s) contained in the report and/or the L1 measurement according to a report configuration, of the one or more report configurations, that may trigger the transmission of the report. The wireless device 2505 may send (e.g., transmit) the report 2540 to the network. The base station 2510 may determine to perform cell change 2545. The wireless device 2505 may receive, based on sending (e.g., transmitting) the report, L1/L2 signaling that triggers 2550 and/or initiates the L1/L2 based handover using one of the one or more handover configurations 2555. The wireless device 2505, based on the step 2550 and/or 2555, may perform random access procedure and/or send other uplink signal 2560.

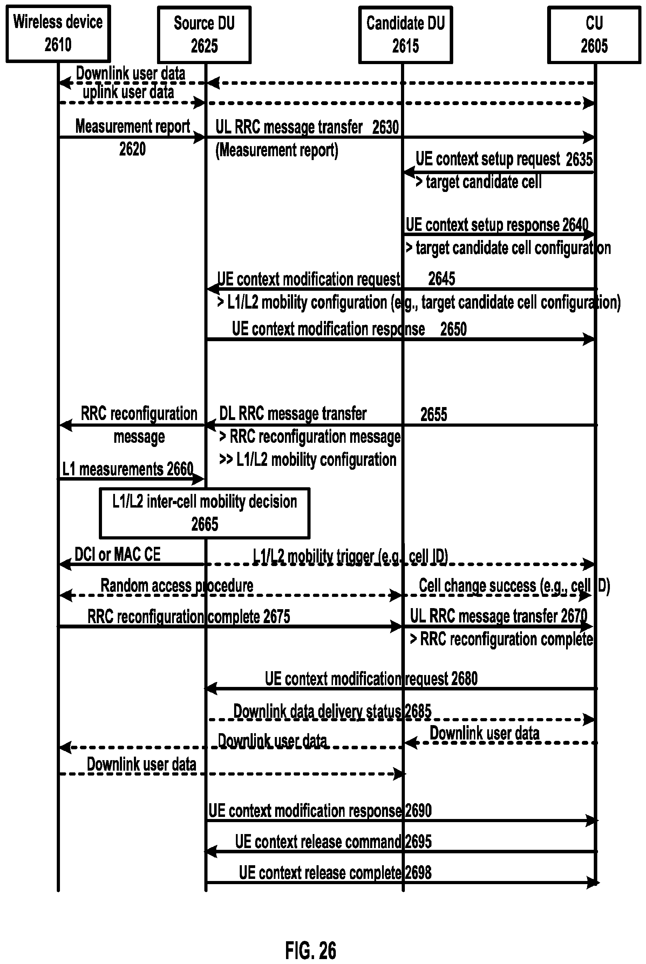

FIG. 26 shows an example of L1/L2 based inter-cell mobility on CU-DU architecture. L1/L2 based inter-cell mobility may comprise three phases such as preparation, execution, and completion. For the preparation phase, a base station central unit (CU) 2605 may shift determination (e.g., based on L3 measurements from a wireless device 2610) to configure mobility parameters to a wireless device 2610 and/or base station distributed unit(s) (DU(s)) for target candidate cell(s) (e.g., candidate DU 2615) in advance. For the execution phase, the base station distributed unit may receive L1 measurements from a wireless device 2610 and/or may trigger change of cell directly to the wireless device 2610. For the completion phase, path switch toward the new cell may take place.

A wireless device 2610 may send a measurement report message 2620 to a source DU 2625 that may contain cell quality measurements of serving and/or neighboring cells. The source DU 2625 may send an UL RRC message transfer message 2630 to a CU 2605 to convey the received measurement report message. The CU 2605 may identify a potential set of candidate target cells to which the wireless device 2610 may be handed over to, for example, based on the reported cell quality measurements. The target cells may be served by the existing source DU 2625 or a different candidate DU. The CU 2605 may identify candidate target cells that may be served by a separate candidate DU 2615. The CU 2605 may request the preparation of a candidate target cell that may be controlled by candidate DU 2615 by sending wireless device context setup request message 2635 that may indicate to create a wireless device context and/or setup one or more data bearers. The candidate DU 2615 may respond to the CU 2605 with a wireless device context setup response message 2640 including the configuration for the wireless device 2610 at the target candidate cell. The configuration may include wireless device specific and non-wireless device specific parts. The CU 2605 may generate the required RRC reconfiguration and/or L1/L2 mobility configuration, for example, based on receiving the wireless device configurations for the candidate target cell(s). The CU 2605 may send a wireless device context modification request message 2645 to the source DU 2625 that may indicate information regarding the L1/L2 mobility configuration for the target candidate cells (e.g., TCI states). The L1/L2 mobility configuration may take place via a wireless device associated procedure. The source DU 2625 may respond to the wireless device 2610 with a wireless device context modification response message 2650. The CU 2605 may send a DL RRC message transfer message 2655 to the source DU 2625, that may include a generated RRC reconfiguration message. The RRC reconfiguration message may be expected to contain measurement reporting configuration for carrying out L1/L2 handover. A configuration may include information on how to report the L 1 beam measurements of the serving and/or target cells to the DU, and/or may include an information on a configuration of the prepared candidate cell(s) that the wireless device 2610 may need to execute if it receives a MAC CE command to change the serving cell (e.g., performing handover). The source DU 2625 may forward the received RRC reconfiguration message to the wireless device 2610. The wireless device 2610 may respond to the source DU 2625 with a RRC reconfiguration complete message, that the source DU 2625 may forward to the CU 2605 via an UL RRC message transfer message 2630.

A wireless device 2610 may begin to report a L1 beam measurement 2660 of serving and/or candidate target cells, for example, based on the measurement configuration. A source DU 2625 may determine that L1/L2 based mobility to a different cell 2665 may be needed. The source DU 2625 may trigger the wireless device 2610 to change from the current source cell to the target candidate cell (e.g., via sending a MAC Control Element (MAC CE) command, or some other L1 message). The source DU 2625 may indicate to the CU 2605 the need for serving cell change and/or the cell identity of the target candidate cell. A random access procedure may be performed at the candidate DU 2615. Both RACH and RACH-less approaches may be considered. The candidate DU 2615 may indicate to the CU 2605 that the cell change may be successfully completed. The wireless device 2610 may execute handover from the serving cell to the target cell and sends a RRC reconfiguration complete message 2675 to candidate DU 2615. The candidate DU 2615 may send an UL RRC message transfer message 2670 to the CU 2605 based on receiving the RRC reconfiguration complete message 2675.

A CU 2605 may send a wireless device context modification request message 2680 to the source DU 2625 and/or may indicate to stop the data transmission for a wireless device 2610. The source DU 2625 may send a downlink data delivery status frame 2685 to inform the CU 2605 of unsuccessfully sent (e.g., transmitted) downlink data to the wireless device 2610. Downlink packets, that may include PDCP PDUs that may not be successfully sent (e.g., transmitted) to the source DU 2625, may be sent from the CU 2605 to the candidate DU 2615. The source DU 2625 may respond to the CU 2605 with the wireless device context modification response message 2690. The CU 2605 may send a wireless device context release command message 2695 to the source DU 2625. The source DU 2625 may release the wireless device context and/or may respond to the CU 2605 with a wireless device context release complete message 2698.

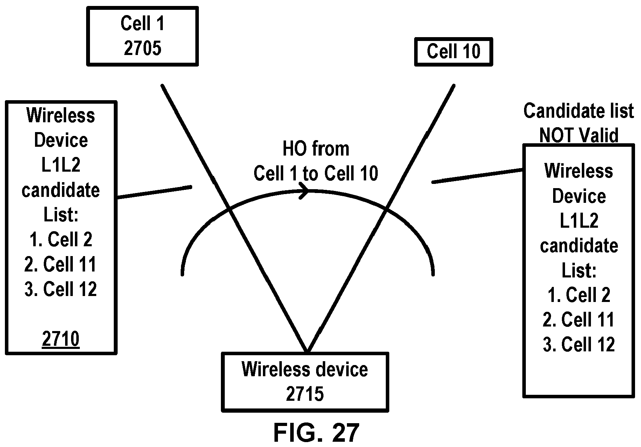

FIG. 27 shows an example of candidate cell configuration management. A source base station 2705 (e.g., Cell 1) may send a handover request message for a L1/L2 target cell(s) to a first target base station (e.g., a gNB associated with L1/L2 candidate target cell(s)). The handover request message may be to request one or more L1/L2 candidate cell configurations of candidate target cell(s) belonging to the target base station. The source base station 2705 (e.g., Cell 1) may receive, from the target base station, a handover request acknowledge message, for example, based on sending (e.g., transmitting) the handover request message to the target base station. The handover request acknowledge message may comprise L1/L2 candidate cell configuration(s) of the candidate target cell(s) 2710 (e.g., Cell 2, Cell 11, Cell 12).

A wireless device 2715 may receive one or more RRC messages. The one or more RRC messages may comprise a RRC reconfiguration message. The one or more RRC messages (e.g., the RRC reconfiguration message) may comprise a candidate cell configuration(s) of the candidate target cell(s) 2710 (e.g., Cell 2, Cell 11, Cell 12). The candidate cell configuration(s) may be for performing a reconfiguration with sync procedure. The candidate cell configuration(s) may be for a layer 1 and/or layer 2 (L1/L2)-based handover configuration, for example, for performing the reconfiguration with sync procedure. The wireless device 2715 may send to the source base station 2705 (e.g., Cell 1), a RRC reconfiguration complete message, for example, based on receiving the one or more RRC messages comprising the candidate cell configuration(s)

A wireless device 2715 may receive from a source base station 2705 (e.g., Cell 1), a measurement configuration (e.g., measurement object, reporting configuration, etc.). The wireless device 2715 may perform measurements based on the measurement configuration. The wireless device 2715 may measure a serving cell and/or non-serving cells, for example, based on the measurement configuration. The wireless device 2715 may send to the source base station 2705 (e.g., Cell 1) a measurement report. The measurement report may be based on the measurements made on one or more serving cells and/or one or more non-serving cells.

A source base station 2705 (e.g., Cell 1) may determine to perform a handover of a wireless device 2715 from a source base station 2705 (e.g., Cell 1) to a second target base station (e.g., based on the measurement report, load balancing, etc.). The L1/L2 candidate cell configuration(s) of the candidate target cell(s) 2710 (e.g., Cell 2, Cell 11, Cell 12) may not be supported on the second target base station. The second base station may not support L1/L2 candidate cell configuration(s) of the candidate target cell(s) 2710 (e.g., Cell 2, Cell 11, Cell 12 in FIG. 27) as candidates for L1/L2 based handover. The second target base station for the handover may be the same as the first target base station associated with L1/L2 candidate target cell(s) Alternatively, the second target base station for the handover may be different from the first target base station associated with L1/L2 candidate target cell(s)

A wireless device 2715 may receive a RRC reconfiguration message from a source base station 2705 (e.g., Cell 1). The RRC reconfiguration may comprise a handover information to a second target base station. The second target base station may not support the L1/L2 candidate cell configuration(s) of the candidate target cell(s) 2710 (e.g., Cell 2, Cell 11, Cell 12 in FIG. 27). The wireless device 2715, may have no knowledge that the L1/L2 candidate cell configuration(s) of the candidate target cell(s) 2710 (e.g., Cell 2, Cell 11, Cell 12 in FIG. 27) may not be supported on the second target base station. The second target base station, may have no knowledge about the wireless device 2715 having L1/L2 candidate cell configuration(s) of the candidate target cell(s) 2710 (e.g., Cell 2, Cell 11, Cell 12 in FIG. 27).

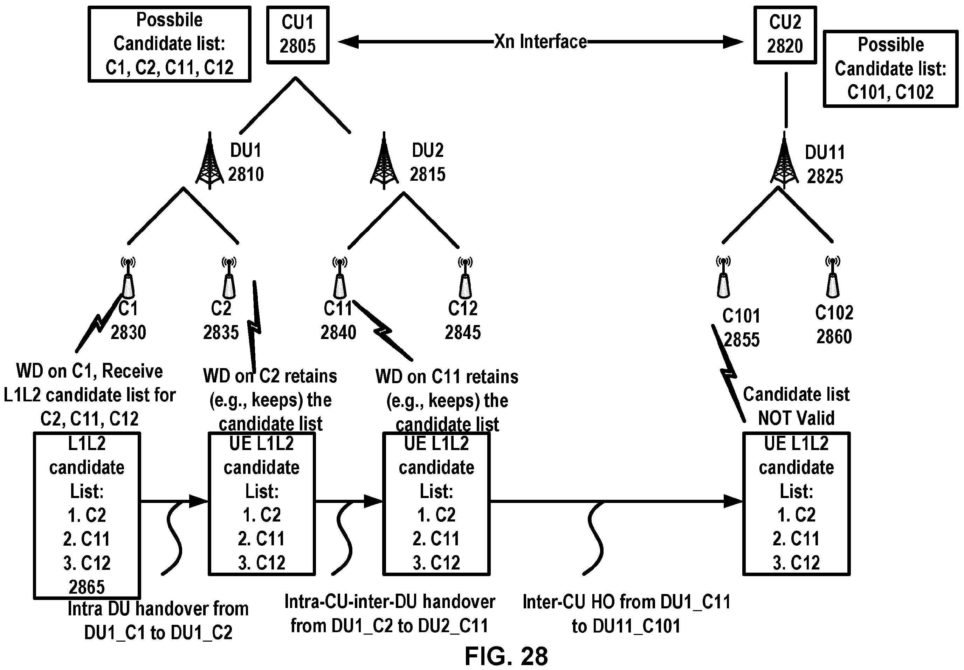

FIG. 28 shows an example of candidate cell configuration management. A network may comprise one or more centralized unit (CU) and/or distributed unit (DU). A first CU 2805 (e.g., CU1) may control operation of a first DU 2810 (e.g., DU1). A first CU 2805 (e.g., CU1) may control the operation of a second DU 2815 (e.g., DU2). A second CU 2820 (e.g., CU2) may control the operation of a third DU 2825 (e.g., DU3).

A DU may control the operation of cells associated with the DU. A first DU 2810 may be associated with a first cell 2830 (e.g., C1) and a second cell 2835 (e.g., C2). A second DU 2815 may be associated with a third cell 2840 (e.g., C11) and a forth cell 2845 (e.g., C12). A third DU 2825 may be associated with a fifth cell 2855 (e.g., C101) and a sixth cell 2860 (e.g., C102).

A source base station (e.g., base station served using CU1 2805 and DU1 2810) may send a handover request message for a L1/L2 target cell(s) to a first target base station. The handover request message may be to request one or more L1/L2 candidate cell configurations of candidate target cell(s) belonging to the target base station. The source base station may receive, from the target base station, a handover request acknowledge message, for example, based on sending (e.g., transmitting) the handover request message to the target base station. The handover request acknowledge message may comprise L1/L2 candidate cell configuration(s) of the candidate target cell(s) 2865 (e.g., Cell 2, Cell 11, Cell 12 in FIG. 28).

A wireless device (e.g., UE) may receive one or more RRC messages. The one or more RRC messages may comprise a RRC reconfiguration message. The one or more RRC messages (e.g., the RRC reconfiguration message) may comprise a candidate cell configuration(s) of the candidate target cell(s) (e.g., Cell 2, Cell 11, Cell 12 in FIG. 28). The candidate cell configuration(s) may be for performing a reconfiguration with sync procedure. The candidate cell configuration(s), for performing the reconfiguration with sync procedure, may be for a layer 1 and/or layer 2 (L1/L2)-based handover configuration. The wireless device may send to the source base station, a RRC reconfiguration complete message, based on receiving the one or more RRC messages comprising the candidate cell configuration(s)

A source base station may determine to do a handover of a wireless device from a source base station to a first target base station, for example, based on a measurement report, load balancing, etc. A handover may be a L1/L2 based handover. The handover may be an intra-DU type handover. The L1/L2 candidate cell configuration(s) of the candidate target cell(s) 2865 (e.g., Cell 2, Cell 11, Cell 12 in FIG. 28) may be supported on the first target base station. The first target base station, being under control of first CU, may support the L1/L2 candidate cell configuration(s) of the candidate target cell(s) (e.g., Cell 2, Cell 11, Cell 12 in FIG. 28). The wireless device retains the L1/L2 candidate cell configuration(s) of the candidate target cell(s) (e.g., Cell 2, Cell 11, Cell 12 in FIG. 28) on the target cell (e.g. C2 in FIG. 28).

Alternatively, a source base station may determine to do a handover of a wireless device from a first target base station to a first target base station, for example, based on a measurement report, load balancing, etc. A handover may be a L1/L2 based handover. The handover may be an intra-CU inter-DU type handover. The L1/L2 candidate cell configuration(s) of the candidate target cell(s) (e.g., Cell 2, Cell 11, Cell 12) may be supported on a first target base station. The first target base station, being under control of a first CU, may support the L1/L2 candidate cell configuration(s) of the candidate target cell(s) (e.g., Cell 2, Cell 11, Cell 12 in FIG. 28). The wireless device may retain the L1/L2 candidate cell configuration(s) of the candidate target cell(s) (e.g., Cell 2, Cell 11, Cell 12 in FIG. 28) on the target cell (e.g. C11).

A source base station may determine to do a handover of a wireless device from a first base station to a second target base station, for example, based on a measurement report, load balancing, etc. The handover may be a based on reconfiguration with sync. The handover may be an inter-CU type handover. The L1/L2 candidate cell configuration(s) of the candidate target cell(s) (e.g., Cell 2, Cell 11, Cell 12 in FIG. 28) may not be supported on the second target base station. The second target base station, being under control of the second CU 2820, may not support the L1/L2 candidate cell configuration(s) of the candidate target cell(s) (e.g., Cell 2, Cell 11, Cell 12 may not be supported by CU2). The wireless device, may have no knowledge that the L1/L2 candidate cell configuration(s) of the candidate target cell(s) (e.g., Cell 2, Cell 11, Cell 12) are not supported on the second target base station. The second target base station, may have no knowledge about the wireless device having L1/L2 candidate cell configuration(s) of the candidate target cell(s) (e.g., Cell 2, Cell 11, Cell 12).

In at least some wireless communications, a wireless device may receive, from a base station, a message (e.g., RRC message) comprising one or more candidate cell configurations. Each of the one or more candidate cell configurations may be a configuration of a respective candidate cell. The candidate cell configuration may be for conditional reconfiguration based handover and/or L1/L2 signaling based handover. A wireless device may unconditionally remove candidate cell configurations, for example, if a serving cell of the wireless device changes (e.g., due to a handover). The wireless device may unconditionally retain the candidate cell configurations, for example, if a serving cell of the wireless device changes (e.g., due to a normal handover, a conditional reconfiguration based handover, a L1/L2 signaling based handover, etc.).

A problem may arise if a wireless device performs, initiates, and/or triggers a handover from a first cell, and the wireless device receives and/or applies one or more candidate cell configurations, to a second cell, where the one or more candidate cell configurations are not available. The handover may be inter-CU mobility. The candidate cell configuration may be for L1/L2 signaling based handover. The candidate cell configuration may be available at the first cell, for example, for a network (e.g., a base station) to dynamically switch a serving cell of the wireless device between two different candidate cells using a L1/L2 signaling that may trigger the L1/L2 signaling based handover. The candidate cell configuration may not be available at the second cell, for example, if the second cell belongs to a second base station that may be different form a first base station where the first cell belongs. The unavailability of the candidate cell configuration may cause misalignment between the wireless device and the second base station. The unavailability of the candidate cell configuration may cause errors and/or failures of operation to occur at the wireless device and/or at the second base station. The errors and/or failures may comprise a RLF and/or a reconfiguration failure. The misalignment may cause some overhead to the wireless device (e.g., performing L1 measurements for the invalid LTM candidate cells). The wireless device may perform, initiate, and/or trigger a handover from a first cell, and the wireless device receives and/or applies the one or more candidate cell configurations, to a second cell, where the one or more candidate cell configurations are not available. The handover may be inter-CU mobility.

Management of a candidate cell configuration among a wireless device, a source base station, and a target base station may be improved as described herein. Methods to avoid a misalignment in a candidate cell configuration among the wireless device, the source base station, and the target base station are described herein. A wireless device, a source base station, and a target base station may conditionally remove candidate cell configurations, for example, if a serving cell of the wireless device changes (e.g., due to a handover). Methods to avoid the misalignment based on an indication from a network (e.g., the source base station and/or the target base station) are described herein. Methods to avoid a misalignment based on wireless device's determination are described herein. Methods to avoid failure if a target base station configures new candidate cell configuration to the wireless device are described herein.

A source base station may determine to remove a candidate cell configuration, for example, if the source base station identifies that a target base station does not support the candidate cell configuration. The target base station may determine to remove candidate cell configuration, for example, if the target base station identifies that the target base station does not support the candidate cell configuration. The wireless device may autonomously identify cases of candidate cell configurations to remove (e.g., due to a handover). Herein, reference to release or remove may refer to a same operation. For example, reference herein to a configuration being removed may refer to a configuration being released, and/or reference herein to a configuration being released may refer to a configuration being removed. Release/remove refers to release and/or remove. Removing a configuration may comprise, for example, disabling a configuration, making a configuration inactive (or not active), making a configuration unavailable, and/or not using a configuration. Releasing a configuration (e.g., releasing a stored configuration) may comprise removing a configuration from memory.

As described herein, a wireless device may receive one or more messages (e.g., a RRC reconfiguration message) comprising at least two indicators. A first indicator may indicate a target cell for a handover. Receiving the message may trigger execution of the handover. Receiving the first indicator may trigger execution of the handover. DCI and/or a MAC CE may trigger execution of the handover. Receiving another message may trigger execution of the handover. A second indicator may indicate the wireless device to retain or remove one or more of the candidate target cells for future handovers. The retaining of one or more candidate target cell(s) may refer to the wireless device retaining one or more cell configurations based on the handover to the target cell. The removal of one or more candidate target cell(s) may refer to the wireless device removing one or more cell configurations based on the handover to the target cell. As described herein, based on the at least two indicators, a candidate target cell list may be updated to remove invalid candidate target cells, which may provide advantages such as avoiding reconfiguration failure/error and/or reducing network overhead/signaling to the wireless device (e.g. performing L1 measurements for the invalid LTM candidate cells.)

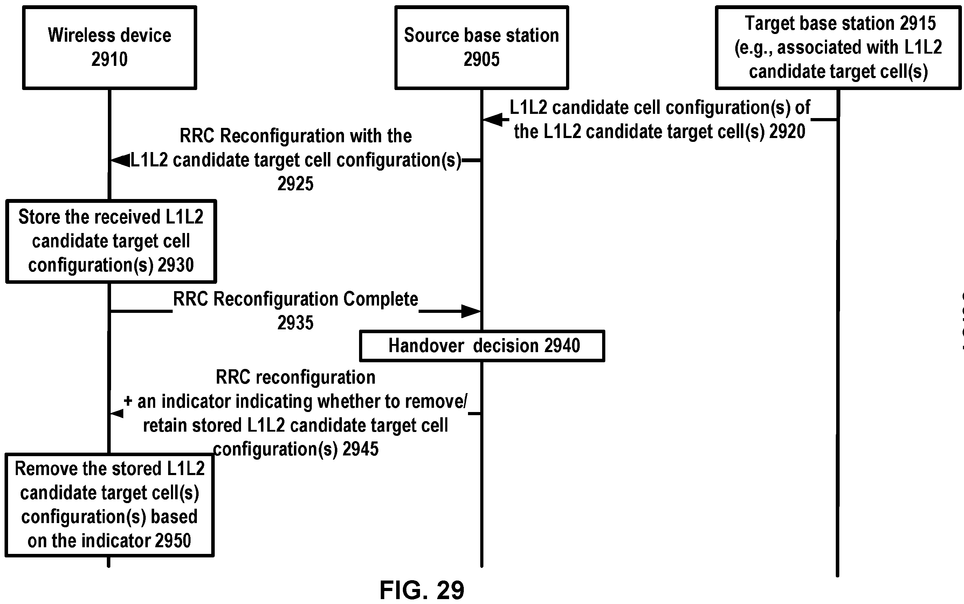

FIG. 29 shows an example of candidate cell configuration management. A source base station 2905 may send a handover request message for a L1/L2 target cell(s) to a target base station 2915 (e.g., associated with L1/L2 candidate target cell(s)). The source base station 2905 may send the handover request message, for example, based on (e.g. after or in response to) the source base station 2905 determining a handover decision to the target base station 2915. The determination of the base station may be based on a wireless device report (e.g. a wireless device measurement report). A handover of the handover decision may comprise an L1/L2 based handover. A handover request message may be a request to one or more L1/L2 candidate cell configurations of candidate target cell(s) belonging to the target base station 2915. The source base station 2905 may receive, from the target base station 2915, a handover request acknowledge message (e.g., the message including the L1/L2 candidate cell configuration(s) of the L1/L2 candidate target cell(s) 2920), for example, based on sending (e.g., transmitting) the handover request message to the target base station 2915. The handover request acknowledge message may be based on the handover request message. The handover request acknowledge message may comprise L1/L2 candidate cell configuration(s) of the candidate target cell(s)

A wireless device 2910 may receive one or more RRC messages. The one or more RRC messages may comprise a RRC reconfiguration message 2925 (e.g., RRC reconfiguration). The one or more RRC messages (e.g., the RRC reconfiguration message 2925) may comprise a candidate cell configuration(s) of the candidate target cell(s) The candidate cell configuration(s) may be for performing a reconfiguration with sync procedure. The candidate cell configuration(s) may be for a layer 1 and/or layer 2 (L1/L2)-based handover configuration for performing the reconfiguration with sync procedure. The one or more candidate cell configuration(s) may comprise an identifier. The wireless device 2910 may uniquely identify and store the configuration of each candidate target cell(s) 2930. The one or more candidate cell configuration(s) may comprise information required (e.g., RRC configuration of the target cell(s)) to access the target cell during the reconfiguration with sync procedure. The wireless device 2910 may send to the source base station 2905, a RRC reconfiguration complete message 2935 (e.g., the RRC reconfiguration), based on receiving the one or more RRC messages comprising the candidate cell configuration(s). The wireless device 2910 may send to the source base station 2905, the RRC reconfiguration complete message 2920, based on the one or more RRC messages being received correctly.

A wireless device 2910 may receive from a source base station 2905, a measurement configuration (e.g., measurement object, reporting configuration, etc.). The wireless device 2910 may perform measurements based on the measurement configuration. The wireless device 2910 may measure serving cell and/or non-serving cells, for example, based on having the measurement configuration. The wireless device 2910 may send to the source base station 2905 a measurement report. The measurement report may be based on the measurements made on a one or more serving cells and/or one or more non-serving cells.

A source base station 2905 may determine to do a handover 2940 of a wireless device 2910 from a source base station 2905 to a target base station 2910, for example, based on a measurement report, load balancing, etc. The target base station 2910 for a handover may be the same as the base station associated with a L1/L2 candidate target cell(s) The target base station 2910 for the handover may be different from the base station associated with L1/L2 candidate target cell(s)

A wireless device 2910 may receive a RRC reconfiguration message 2945 (e.g., RRC reconfiguration) from a source base station 2905. The RRC reconfiguration message 2915 may comprise an indicator (e.g., an indicator that may indicate to remove and/or retain stored L1/L2 candidate target cell configuration(s)). The indicator may indicate, to the wireless device 2910, to remove the one or more L1/L2 candidate cell configuration(s) of the candidate target cell(s) 2950.

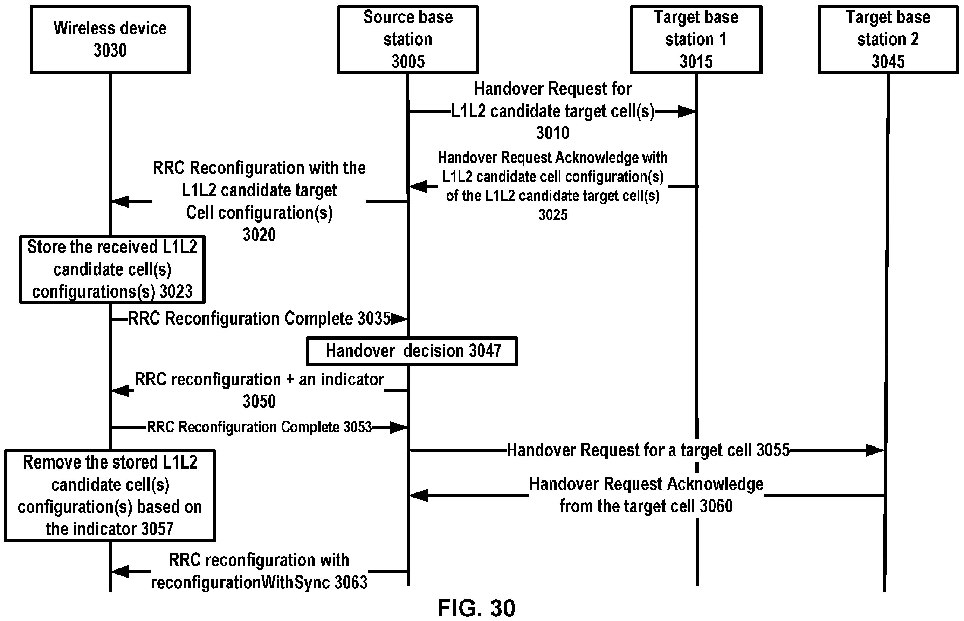

FIG. 30 shows an example of candidate cell configuration management. A source base station 3005 may send a handover request message 3010 for a L1/L2 target cell(s) to a first target base station 3015 (e.g., Target base station 1). The source base station 3005 may send the handover request message 3010, for example, based on (e.g. after or in response to) the source base station 3005 determining a handover decision to the first target base station based on a wireless device report (e.g. a wireless device measurement report). A handover of a handover decision may comprise an L1/L2 based handover. The handover request message 3010 may be to request one or more L1/L2 candidate cell configurations of candidate target cell(s) belonging to the first target base station 3015. The source base station 3005 may receive, from the first target base station 3015, a handover request acknowledge message 3025 (e.g., the message including the L1/L2 candidate cell configuration(s) of the L1/L2 candidate target cell(s)), for example, based on sending (e.g., transmitting) the handover request message 3010 to the first target base station 3015. The handover request acknowledge message may be a response to a handover request message 3010. The handover request acknowledge message 3025 may comprise L1/L2 candidate cell configuration(s) of the candidate target cell(s) (e.g., L1/L2 candidate cell(s) configuration(s)).

A wireless device 3030 may receive one or more RRC messages. The one or more RRC messages 3020 may comprise a RRC reconfiguration message (e.g., RRC reconfiguration in FIG. 30). The one or more RRC messages 3020 (e.g., the RRC reconfiguration message) may comprise a candidate cell configuration(s) of the candidate target cell(s) The candidate cell configuration(s) may be for performing a reconfiguration with sync procedure. The candidate cell configuration(s), for performing the reconfiguration with sync procedure, may be for a layer 1 and/or layer 2 (L1/12)-based handover configuration. The one or more candidate cell configuration(s) may comprise an identifier. The wireless device 3030 may uniquely identify and store the configuration of each candidate target cell(s) 3023. The one or more candidate cell configuration(s) may comprise information required (e.g., RRC configuration of the target cell(s)) to access the target cell during the reconfiguration with sync procedure. The wireless device 3030 may send to a source base station 3005, a RRC reconfiguration complete message 3035 (e.g., the RRC reconfiguration complete), based on receiving the one or more RRC messages 3020 comprising the candidate cell configuration(s). The wireless device 3030 may send to the source base station 3005, the RRC reconfiguration complete message 3035, based on the one or more RRC messages 3020 being received correctly.

A wireless device 3030 may receive from a source base station 3005, a measurement configuration (e.g., measurement object, reporting configuration, etc.). The wireless device 3030 may perform measurements based on the measurement configuration. The wireless device 3030 may measure serving cell and/or non-serving cells, for example, based on have a measurement configuration. The wireless device 3030 may send to a source base station 3005 a measurement report. The measurement report may be based on the measurements made on one or more serving cells and/or a one or more non-serving cells.

A source base station 3005 may determine to do a handover 3047 of a wireless device 3030 from a source base station 3005 to a second target base station 3045 (e.g., Target base station 2), for example, based on the measurement report, load balancing, etc. The second target base station 3045 may be same as the first target base station 3015. The second target base station 3045 may be different from the first target base station 3015. The source base station 3005 may send a RRC message 3050 (e.g., RRC reconfiguration) based on determining to handover the wireless device 3030 to the second target base station 3045. The source base station 3005 may send the RRC message 3050 before sending a handover request to the second target base station 3045, for example, based on determining to handover the wireless device 3030 to second target base station 3045. The RRC message 3050 may comprise a RRC reconfiguration message (e.g., RRC reconfiguration). The RRC message 3050 may comprise parameters, configurations, and/or information elements that may be included by a source base station 3005. The RRC message 3050 may comprise a first indicator and/or a second indicator. The source base station 3005 may determine to include the first indicator and/or second indicator in the RRC message 3050, for example, based on determining that the wireless device 3030 is to handover to the second target base station 3045. The source base station 3005 may determine the content of the first indicator and/or second indicator in the RRC message 3050, for example, based on determining that the wireless device 3030 is to handover to the second target base station 3045. The wireless device 3030, based on the RRC message, may send RRC Reconfiguration Complete 3053 to the source base station 3005.

A RRC message 3050 may comprise a first indicator. The first indicator may indicate a wireless device 3030 that may handover from a source base station 3005 to a second target base station 3045. The wireless device 3030 may receive a first indicator that may indicate a handover that may occur to the second target base station 3045, for example, based on having candidate cell configuration(s) of the L1/L2 based handover.

A RRC reconfiguration message may comprise a second indicator. The second indicator may indicate a wireless device 3030 to remove or alternatively retain the one or more L1/L2 candidate cell configuration(s) of the candidate target cell(s). The retain of one or more L1/L2 candidate cell configuration(s) of the candidate target cell(s) may refer to the wireless device 3030 retaining the one or more cell configurations based on (e.g. after or in response to) the handover to a target cell. The remove of one or more L1/L2 candidate cell configuration(s) of the candidate target cell(s) may refer to the wireless device 3030 removing the one or more cell configurations based on (e.g. after or in response to) the handover to a target cell. The wireless device 3030 may remove the one or more L1/L2 candidate cell configuration(s) of the candidate target cell(s), based on (e.g. after or in response to) a handover to the second target base station 3045 successfully completing. The wireless device 3030 may retain the one or more L1/L2 candidate cell configuration(s) of the candidate target cell(s), based on (e.g. after or in response to) a handover to the second target base station 3045 successfully completing. The wireless device 3030 may remove the one or more L1/L2 candidate cell configuration(s) of the candidate target cell(s) based on receiving the second indicator 3057.

A second indicator may be one or more parameters. A wireless device 3030 may retain all the L1/L2 candidate cell configuration(s) of the candidate target cell(s), based on the second indicator being one parameter. The wireless device 3030 may retain the one or more L1/L2 candidate cell configuration(s) of the candidate target cell(s), based on the second indicator being a one or more parameter. The second indicator may comprise a list of L1/L2 candidate cell configuration(s) of the candidate target cell(s) to be retained. The wireless device 3030 may retains the L1/L2 candidate cell configuration(s) of the candidate target cell(s) indicated in the second indicator, based on the second indicator being one or more (e.g., a list) of parameters.

A second indicator may be one or more parameters. A wireless device 3030 may remove all the L1/L2 candidate cell configuration(s) of the candidate target cell(s), based on the second indicator being one parameter. The wireless device 3030 may remove one or more L1/L2 candidate cell configuration(s) of the candidate target cell(s), based on the second indicator being a one or more parameter. The second indicator may comprise a list of L1/L2 candidate cell configuration(s) of the candidate target cell(s) to be removed. The wireless device 3030 may release the L1/L2 candidate cell configuration(s) of the candidate target cell(s) indicated in the second indicator, based on the second indicator being one or more (e.g., a list) of parameters.

A source base station 3005 may send a handover request message 3055 for a handover to a second target base station 3045. The source base station 3005 may send the handover request message 3055, for example, based on (e.g. after or in response to) the source base station 3005 determining a handover decision to the second target base station 3045 based on a wireless device 3030 report (e.g. a wireless device measurement report). The source base station 3005 may send the handover request message 3055 to the second target base station 3045, based on (e.g. after or in response to) the source base station 3005 sending the RRC message 3050 comprising the first indicator to the wireless device 3030. The source base station 3005 may send the handover request message 3055 to the second target base station 3045, based on (e.g. after or in response to) the source base station 3005 sending the RRC message 3050 comprising the second indicator to the wireless device 3030. A handover of the handover decision may comprise a reconfiguration with sync for handover. The source base station 3005 may receive, from the second target base station 3045, a handover request acknowledge message 3060, for example, based on sending (e.g., transmitting) the handover request message 3055 to the second target base station 3045. The handover request acknowledge message 3060 may be based on the handover request message 3055. The source base station 3005, based on the handover request acknowledge message 3060, may send RRC reconfiguration with reconfigurationWithSync 3063 to the wireless device 3030.

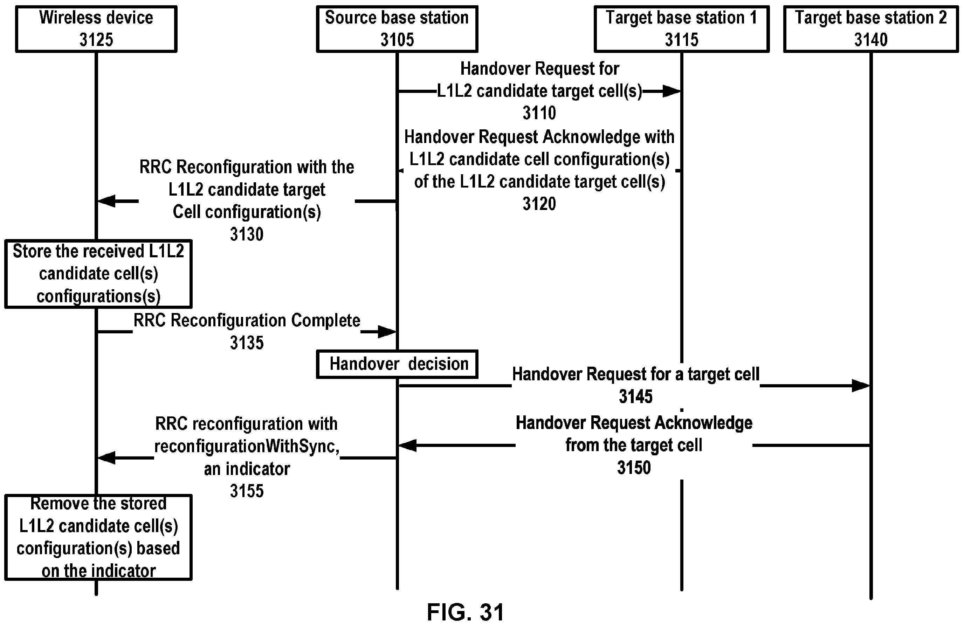

FIG. 31 shows an example of candidate cell configuration management. A source base station 3105 may send a handover request message 3110, for a L1/L2 target cell(s), to a first target base station 3115 (e.g., Target base station 1). The source base station 3105 may send the handover request message 3110, for example, based on the source base station 3105 determining a handover to the first target base station 3115 based on a wireless device report (e.g. a wireless device measurement report). A handover of the handover decision may comprise an L1/L2 based handover.

The handover request message 3110 may be to request a handover to one or more L1/L2 candidate cell configurations of candidate target cell(s) belonging to the first target base station 3115. The source base station 3105 may receive, from the first target base station 3115, a handover request acknowledge message 3120 (e.g., the message including the L1/L2 candidate cell configuration(s) of the L1/L2 candidate target cell(s)), for example, based on (e.g. after or in response to) sending (e.g., transmitting) the handover request message 3110 to the first target base station 3115. The handover request acknowledge message 3120 may be based on receiving the handover request message 3110. The handover request acknowledge message 3120 may comprise L1/L2 candidate cell configuration(s) of the candidate target cell(s) (e.g., L1/L2 candidate cell(s)).

A wireless device 3125 may receive one or more RRC messages. The one or more RRC messages may comprise a RRC reconfiguration message 3130 (e.g., RRC reconfiguration). The one or more RRC messages (e.g., the RRC reconfiguration message 3130) may comprise a candidate cell configuration(s) of the candidate target cell(s). The candidate cell configuration(s) may be for performing a reconfiguration with sync procedure. The candidate cell configuration(s), for performing the reconfiguration with sync procedure, may be for a layer 1 and/or layer 2 (L1/L2)-based handover configuration. The one or more candidate cell configuration(s) may comprise an identifier. The wireless device 3125 may uniquely identify the configuration of each candidate target cell(s) The one or more candidate cell configuration(s) may comprise information required (e.g., RRC configuration of the target cell(s)) to access the target cell during the reconfiguration with sync procedure. The wireless device 3125 may send to the source base station 3105, a RRC reconfiguration complete message 3135 (e.g., the RRC reconfiguration complete), based on receiving the one or more RRC messages comprising the candidate cell configuration(s). The wireless device 3125 may send to the source base station 3105, the RRC reconfiguration complete message 3135, based on the one or more RRC messages being received correctly (e.g., the RRC reconfiguration message 3130).

A wireless device 3125 may receive from a source base station 3105, a measurement configuration (e.g., measurement object, reporting configuration, etc.). The wireless device 3125 may perform measurements based on the measurement configuration. The wireless device 3125 may measure serving cell and/or non-serving cells, for example, based on the measurement configuration. The wireless device 3125 may send the source base station 3105 a measurement report. The measurement report may be based on the measurements made on one or more serving cells and/or a one or more non-serving cells.

A source base station 3105 may determine to do a handover of a wireless device 3125 from the source base station 3105 to a second target base station 3140 (e.g., Target base station 2), for example, based on a measurement report, etc. The second target base station 3140 may be the same as a first target base station 3115. The second target base station 3140 may be different from the first target base station 3115. The source base station 3105 may send a handover request message 3145 (e.g., handover request for a target cell) for the handover to the second target base station 3140. The source base station 3105 may send the handover request message 3145, for example, based on (e.g. after or in response to) the source base station 3105 determining a handover decision to the second target base station 3140 based on a wireless device report (e.g. a wireless device measurement report). A handover of the handover decision may comprise a reconfiguration with sync for handover. The source base station 3105 may receive, from the second target base station 3140, a handover request acknowledge message 3150, for example, based on sending (e.g., transmitting) the handover request message 3145 to the second target base station 3140. The handover request acknowledge message 3150 may be based on receiving the handover request message 3145.

A wireless device 3125 may receive radio resource control (RRC) messages from the source base station 3105, based on the source base station 3105 receiving the handover acknowledge message 3150. The RRC message may comprise a RRC reconfiguration message 3155 (e.g., RRC reconfiguration). The RRC message, may comprise parameters, configurations, and/or information elements included by the source base station 3105. The RRC message may comprise a first indicator and/or a second indicator. The source base station 3105 may determine to include the first indicator and/or second indicator in the RRC message, for example, based on determining that the wireless device 3125 has to handover to the second target base station 3140. The source base station 3105 may determine the content of the first indicator and/or second indicator in the RRC message, for example, based on determining that the wireless device 3125 has to handover to the second target base station 3140.

A RRC message may comprise a first indicator. The first indicator may indicate a wireless device 3125 to handover from the source base station 3105 to a second target base station 3140 (e.g., to a target cell indicated in the RRC message). The wireless device 3125 may receive the first indicator that may indicate a handover may occur to the second target base station 3140 having candidate cell configuration(s) of the L1/L2 based handover. The RRC message (e.g., the RRC reconfiguration message 3130) may be a reconfiguration with sync to the second target base station 3140. The reconfiguration with sync may be for a target cell that may belong to the second target base station 3140.

A RRC reconfiguration message 3130 may comprise a second indicator. The second indicator may indicate a wireless device 3125, to remove and/or retain the one or more L1/L2 candidate cell configuration(s) of the candidate target cell(s). The retain of one or more L1/L2 candidate cell configuration(s) of the candidate target cell(s) may refer to the wireless device 3125 retaining the one or more cell configurations based on (e.g. after or in response to) the handover to a target cell. The remove of one or more L1/L2 candidate cell configuration(s) of the candidate target cell(s) may refer to the wireless device 3125 removing the one or more cell configurations based on (e.g. after or in response to) the handover to a target cell. The wireless device 3125 may remove the one or more L1/L2 candidate cell configuration(s) of the candidate target cell(s), based on (e.g. after or in response to) a handover to the second target base station 3140 successfully completing. The wireless device 3125 may retain the one or more L1/L2 candidate cell configuration(s) of the candidate target cell(s), based on (e.g. after or in response to) a handover to the second target base station 3140 successfully completing. The wireless device 3125 may remove the one or more L1/L2 candidate cell configuration(s) of the candidate target cell(s) based on receiving the second indicator. The wireless device 3125 may remove the one or more L1/L2 candidate cell configuration(s) of the candidate target cell(s), based on the second indicator being present, and the handover to the second base station successfully completing. The handover to the second target base station 3140 may be based on the wireless device 3125 successfully completing random access to the second target base station 3140.

A second indicator may be one or more parameters. A wireless device 3125 may retain all the L1/L2 candidate cell configuration(s) of the candidate target cell(s), based on the second indicator being a one parameter. A wireless device 3125 may retain the one or more L1/L2 candidate cell configuration(s) of the candidate target cell(s), based on the second indicator being a one or more parameter. The second indicator may comprise a list of L1/L2 candidate cell configuration(s) of the candidate target cell(s) to be retained. The wireless device 3125 may retain the L1/L2 candidate cell configuration(s) of the candidate target cell(s) indicated in the second indicator, based on the second indicator being one or more (e.g., a list) parameters.

The second indicator may be one or more parameters. A wireless device 3125 may remove all the L1/L2 candidate cell configuration(s) of the candidate target cell(s), based on the second indicator being a one parameter. A wireless device 3125 may remove one or more L1/L2 candidate cell configuration(s) of the candidate target cell(s), based on the second indicator being a one or more parameter. The second indicator may comprise a list of L1/L2 candidate cell configuration(s) of the candidate target cell(s) to be removed. The wireless device 3125 may releases the L1/L2 candidate cell configuration(s) of the candidate target cell(s) indicated in the second indicator, based on the second indicator being one or more (e.g., a list) of parameters.

A wireless device 3125 may send to a source base station 3105, a RRC reconfiguration complete message, based on receiving the RRC messages comprising the first indicator. The wireless device 3125 may send to the source base station 3105, a RRC reconfiguration complete message, based on receiving the RRC messages comprising the first indicator. The wireless device 3125 may send to the source base station 3105, the RRC reconfiguration complete message, based on the one or more RRC messages being received correctly.

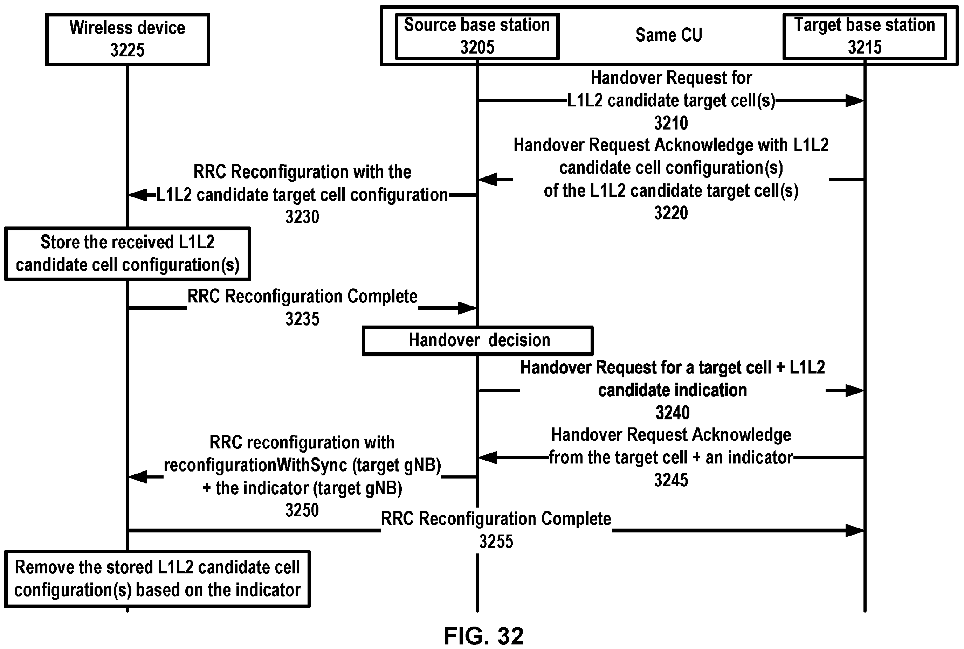

FIG. 32 shows an example of candidate cell configuration management. A source base station 3205 may send a handover request message for a L1/L2 target cell(s) to a target base station 3215. The source base station 3205 may send the handover request message, based on (e.g. after or in response to) the source base station 3205 determining, for example, based on a wireless device report (e.g. a wireless device measurement report) a handover decision to the first target base station 3115. A handover of the handover decision may comprise an L1/L2 based handover. The handover request message 3210 may be to request one or more L1/L2 candidate cell configurations of candidate target cell(s) belonging to the first target base station 3115. The source base station 3205 may receive, from the first target base station 3115, a handover request acknowledge message 3220 (e.g., a message including the L1/L2 candidate cell configuration(s) of the L1/L2 candidate target cell(s)), for example, based on sending (e.g., transmitting) the handover request message 3210 to the first target base station 3115. The handover request acknowledge message 3220 may be a response to the handover request message 3210. The handover request acknowledge message 3220 may comprise L1/L2 candidate cell configuration(s) of the candidate target cell(s) (e.g., L1/L2 candidate cell(s) configuration(s)).

A wireless device 3225 may receive one or more RRC messages. The one or more RRC messages may comprise a RRC reconfiguration message 3230 (e.g., RRC reconfiguration). The one or more RRC messages (e.g., the RRC reconfiguration message 3230) may comprise a candidate cell configuration(s) of candidate target cell(s). The candidate cell configuration(s) may be for performing a reconfiguration with sync procedure. The candidate cell configuration(s), for performing the reconfiguration with sync procedure, may be for a layer 1 and/or layer 2 (L1/L2)-based handover configuration. The one or more candidate cell configuration(s) may comprise an identifier. The wireless device 3225 may uniquely identify the configuration of each candidate target cell(s) The one or more candidate cell configuration(s) may comprise information required (e.g., RRC configuration of the target cell(s)) to access a target cell during the reconfiguration with sync procedure. The wireless device 3225 may send to the source base station 3205, a RRC reconfiguration complete message 3235 (e.g., the RRC reconfiguration complete), based on receiving the one or more RRC messages comprising the candidate cell configuration(s). The wireless device 3225 may send to the source base station 3205, the RRC reconfiguration complete message 3235, for example, based on the one or more RRC messages being received correctly.

A wireless device 3225 may receive from a source base station 3205, a measurement configuration (e.g., measurement object, reporting configuration, etc.). The wireless device 3225 may perform measurements based on the measurement configuration. The wireless device 3225, may measure serving cell and non-serving cells, for example, based on the measurement configuration. The wireless device 3225 may send the source base station 3205 a measurement report. The measurement report may be based on the measurements made on one or more serving cells and/or one or more non-serving cells.

A source base station 3205 may determine to do a handover of a wireless device 3225 from the source base station 3205 to a target base station 3215, for example, based on a measurement report. The source base station 3205 may send a handover request message 3240 (e.g., handover request for a target cell) for the handover to the target base station 3215. The source base station 3205 may send the handover request message 3210, for example, based on the source base station 3205 determining a handover decision to the target base station 3215 based on a wireless device 3225 report (e.g. a wireless device measurement report). A handover of the handover decision may comprise a reconfiguration with sync for handover. The source base station 3205 may receive, from the target base station 3215, a handover request acknowledge message 3245, for example, based on sending (e.g., transmitting) the handover request message 3240 to the target base station 3215. The handover request acknowledge message 3245 may be based on receiving the handover request message 3210.

A wireless device 3225 may receive RRC messages from a source base station 3205, based on source base station 3205 receiving a handover acknowledge message 3245. The RRC message may comprise a RRC reconfiguration message 3250 (e.g., RRC reconfiguration). The RRC message, may comprise parameters, configurations, and/or information elements that may be included by the target base station 3215 (e.g. as part of the handover acknowledge message). The RRC message may comprise a first indicator and/or a second indicator included by the target base station 3215 (e.g. as part of the handover acknowledge message). The source base station 3205 may determine to include the first indicator and/or second indicator in the RRC message, based on receiving the handover acknowledge message 3245 that may comprise the first indicator and/or second indicator. The source base station 3205 may send to the wireless device 3225, the RRC message comprising of the first indicator and/or second indicator.

A RRC message may comprise a first indicator. The first indicator may indicate a wireless device 3225 to handover from the source base station 3205 to a second target base station (e.g., to a target cell indicated in the RRC message). The wireless device 3225 may receive a first indicator indicating a handover may occur to a second target base station that may have candidate cell configuration(s) of the L1/L2 based handover. The RRC message (e.g., the RRC reconfiguration message 3250) may be a reconfiguration with sync to the second target base station. The reconfiguration with sync may be for a target cell that belongs to the second target base station 3140.

A RRC reconfiguration message 3250 may comprise a second indicator. The second indicator may indicate to a wireless device 3225 to remove and/or retain one or more L1/L2 candidate cell configuration(s) of a candidate target cell(s). The retain of one or more L1/L2 candidate cell configuration(s) of the candidate target cell(s) refer to the wireless device 3225 retaining the one or more cell configurations based on the handover to a target cell. The remove of one or more L1/L2 candidate cell configuration(s) of the candidate target cell(s) may refer to the wireless device 3225 removing the one or more cell configurations based on a handover to a target cell. The wireless device 3225 may remove the one or more L1/L2 candidate cell configuration(s) of the candidate target cell(s), based on a handover to the second target base station successfully completing. The wireless device 3225 may retain the one or more L1/L2 candidate cell configuration(s) of the candidate target cell(s), for example, based on a handover to the second target base station 3140 successfully completing. The wireless device 3225 may remove the one or more L1/L2 candidate cell configuration(s) of the candidate target cell(s), for example, based on receiving the second indicator. The wireless device 3225 may remove the one or more L1/L2 candidate cell configuration(s) of the candidate target cell(s), for example, based on the second indicator being present, and the handover to the second base station successfully completing. The handover to the second target base station may be based on the wireless device 3225 successfully completing a random access to the second target base station. The second target base station may send the first indicator and/or the second indicator to the wireless device 3225 based on the handover successfully completing. The second target base station may send the first indicator and/or the second indicator to the wireless device 3225, for example, based on handover to second target base station being successfully completed.

A second indicator may be one or more parameters. A wireless device 3225 may retain all L1/L2 candidate cell configuration(s) of candidate target cell(s), based on the second indicator being a one parameter. A wireless device 3225 may retain the one or more L1/L2 candidate cell configuration(s) of the candidate target cell(s), based on the second indicator being a one or more parameter. The second indicator may comprise a list of L1/L2 candidate cell configuration(s) of candidate target cell(s) to be retained. The wireless device 3225 may retain the L1/L2 candidate cell configuration(s) of the candidate target cell(s) that may be indicated in the second indicator, based on the second indicator being one or more (e.g., a list) of parameters.

A second indicator may be one or more parameters. A wireless device 3225 may remove all L1/L2 candidate cell configuration(s) of candidate target cell(s), based on the second indicator being a one parameter. A wireless device 3225 may remove one or more L1/L2 candidate cell configuration(s) of the candidate target cell(s), based on the second indicator being a one or more parameter. The second indicator may comprise a list of L1/L2 candidate cell configuration(s) of the candidate target cell(s) to be removed. The wireless device 3225 may release the L1/L2 candidate cell configuration(s) of the candidate target cell(s) that may be indicated in the second indicator, based on the second indicator being one or more (e.g., a list) of parameters.

A wireless device 3225 may send to a target base station 3215, a RRC reconfiguration complete message 3255, based on receiving the RRC reconfiguration message 3250. The wireless device 3225 may send to the target base station 3215, a RRC reconfiguration complete message 3255, based on the wireless device 3225 performing random access to access the target base station 3215. The second target base station 3140 may send the first indicator and/or second indicator to the wireless device 3225 based on a handover successfully completing. The second target base station 3140 may send the first indicator and/or the second indicator to the wireless device 3225, for example, based on handover to second target base station 3140 being successfully completed.

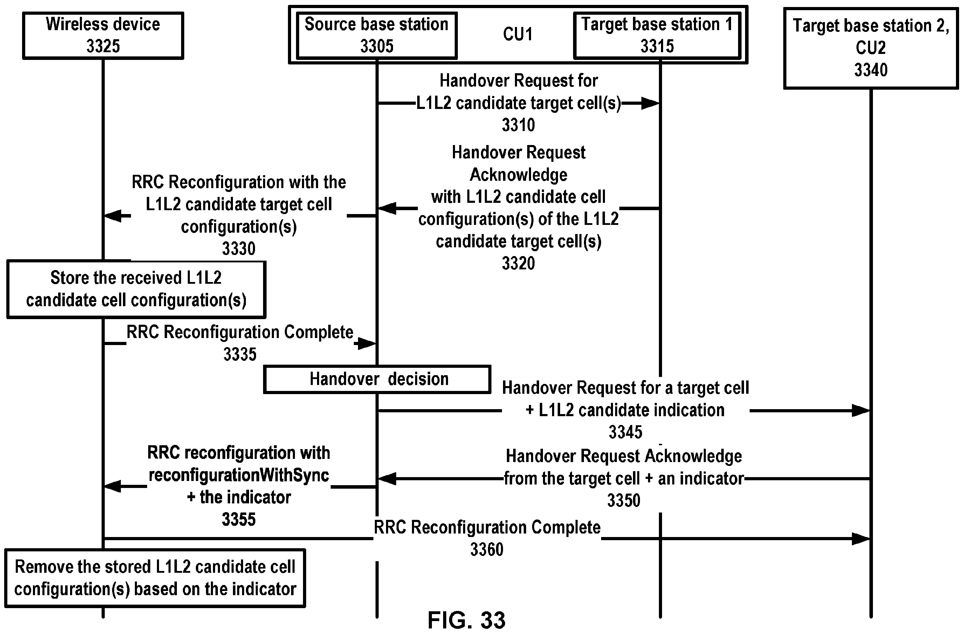

FIG. 33 shows an example of candidate cell configuration management. A source base station 3305 may send a handover request message 3310 for a L1/L2 target cell(s) to a first target base station 3315 (e.g., Target base station 1). The source base station 3305 may send the handover request message 3310, for example, based on the source base station 3305 determining a handover decision to the first target base station 3315 based on a wireless device report (e.g. a wireless device measurement report). A handover of a handover decision may comprise an L1/L2 based handover. The handover request message 3310 may be to request one or more L1/L2 candidate cell configurations of candidate target cell(s) belonging to the first target base station 3315. The source base station 3305 may receive, from the first target base station 3315, a handover request acknowledge message 3320 (e.g., the message including the L1/L2 candidate cell configuration(s) of the L1/L2 candidate target cell(s)), for example, based on sending (e.g., transmitting) the handover request message 3310 to the first target base station 3315. The handover request acknowledge message 3320 may be based on the handover request message 3310. The handover request acknowledge message 3320 may comprise L1/L2 candidate cell configuration(s) of the candidate target cell(s) (e.g., L1/L2 candidate cell(s) configuration(s)).

A wireless device 3325 may receive one or more RRC messages. The one or more RRC messages may comprise a RRC reconfiguration message 3330 (e.g., RRC reconfiguration). The one or more RRC messages (e.g., the RRC reconfiguration message 3330) may comprise a candidate cell configuration(s) of the candidate target cell(s). The candidate cell configuration(s) may be for performing a reconfiguration with sync procedure. The candidate cell configuration(s), for performing the reconfiguration with sync procedure, may be for a layer 1 and/or layer 2 (L1/L2)-based handover configuration. The one or more candidate cell configuration(s) may comprise an identifier. The wireless device 3325 may uniquely identify the configuration of each candidate target cell(s) The one or more candidate cell configuration(s) may comprise information required (e.g., RRC configuration of the target cell(s)) to access the target cell during a reconfiguration with sync procedure. The wireless device 3325 may send to the source base station 3305, a RRC reconfiguration complete message 3335 (e.g., the RRC reconfiguration complete), based on receiving the one or more RRC messages (e.g., the RRC reconfiguration message 3330) comprising the candidate cell configuration(s). The wireless device 3325 may send to the source base station 3305, the RRC reconfiguration complete message 3335, based on the one or more RRC messages being received correctly.

A wireless device 3325 may receive from a source base station 3305, a measurement configuration (e.g., measurement object, reporting configuration, etc.). The wireless device 3325 may perform measurements based on the measurement configuration. The wireless device 3325 may measure a serving cell and/or non-serving cells, for example, based on the measurement configuration. The wireless device 3325 may send to the source base station 3305 a measurement report. The measurement report may be based on the measurements made on one or more serving cells and/or one or more non-serving cells.

A source base station 3305 may determine to do a handover of a wireless device 3325 from the source base station 3305 to a second target base station 3340 (e.g., Target base station 2), for example, based on the measurement report, etc. The second target base station 3340 may be different from the first target base station 3315. The second target base station 3340 may belong to a CU (e.g., CU2) that may be different from the CU of the first target base station 3315 (e.g., CU1). The source base station 3305 may send a handover request message 3345 (e.g., handover request for a target cell, in FIG. 33) for the handover to the second target base station 3340. The source base station 3305 may send the handover request message 3345, for example, based on (e.g. after or in response to) the source base station 3305 determining a handover decision to the second target base station 3340 based on a wireless device 3325 report (e.g. a wireless device measurement report). A handover of the handover decision may comprise a reconfiguration with sync for handover. The source base station 3305 may receive, from the second target base station 3340, a handover request acknowledge message 3350, for example, based on sending (e.g., transmitting) the handover request message 3345 to the second target base station 3340. The handover request acknowledge message 3350 may be based on the handover request message 3345.

A wireless device 3325 may receive RRC messages from a source base station 3305, based on the source base station 3305 receiving a handover acknowledge message 3350. The RRC message may comprise a RRC reconfiguration message 3355 (e.g., RRC reconfiguration). The RRC message may comprise parameters, configurations, and/or information elements included by a target base station (e.g. as part of the handover acknowledge message 3350). The RRC message may comprise a first indicator and/or a second indicator that may be included by the target base station (e.g. as part of the handover acknowledge message 3350). The source base station may determine to include the first indicator and/or the second indicator in the RRC message, for example, based on receiving the handover acknowledge message 3350 comprising the first indicator and/or second indicator. The source base station 3305 may send to the wireless device 3325, the RRC message comprising the first indicator and/or second indicator.

A RRC message may comprise a first indicator. The first indicator may indicate a wireless device 3325 to handover from the source base station 3305 to a second target base station 3340 (e.g., to a target cell indicated in the RRC message). The wireless device 3325 may receive the first indicator indicating a handover may occur to the second target base station 3340, based on having candidate cell configuration(s) of the L1/L2 based handover. The RRC message (e.g., the RRC reconfiguration message 3330) may be a reconfiguration with sync to the second target base station 3340. The reconfiguration with sync may be for a target cell that belongs to the second target base station 3340.

A RRC reconfiguration message 3330 may comprise a second indicator. The second indicator may indicate to a wireless device 3325 to remove and/or retain one or more L1/L2 candidate cell configuration(s) of a candidate target cell(s). The retain of one or more L1/L2 candidate cell configuration(s) of the candidate target cell(s) may refer to the wireless device 3325 retaining the one or more cell configurations, based on (e.g. after or in response to) the handover to a target cell. The remove of one or more L1/L2 candidate cell configuration(s) of the candidate target cell(s) may refer to the wireless device 3325 removing the one or more cell configurations based on (e.g. after) the handover to a target cell. The wireless device 3325 may remove the one or more L1/L2 candidate cell configuration(s) of the candidate target cell(s), for example, based on (e.g. after) a handover to the second target base station 3340 successfully completing. The wireless device 3325 may retain the one or more L1/L2 candidate cell configuration(s) of the candidate target cell(s), based on (e.g. after) a handover to the second target base station 3340 successfully completing. The wireless device 3325 may remove the one or more L1/L2 candidate cell configuration(s) of the candidate target cell(s) based on receiving the second indicator. The wireless device 3325 may remove the one or more L1/L2 candidate cell configuration(s) of the candidate target cell(s), based on the second indicator being present, and the handover to the second base station successfully completing. The handover to the second target base station 3340 may be based on the wireless device 3325 successfully completing random access to the second target base station 3340.

A second indicator may be one or more parameters. A wireless device 3325 may retain all L1/L2 candidate cell configuration(s) of a candidate target cell(s), based on the second indicator being one parameter. A wireless device 3325 may retain the one or more L1/L2 candidate cell configuration(s) of the candidate target cell(s), based on the second indicator being a one or more parameter. The second indicator may comprise a list of L1/L2 candidate cell configuration(s) of the candidate target cell(s) to be retained. The wireless device 3325 may retain the L1/L2 candidate cell configuration(s) of the candidate target cell(s) indicated in the second indicator, based on the second indicator being one or more (e.g., a list) of parameters. The second target base station 3340 may send the first indicator and/or second indicator to the wireless device 3325 based on (e.g. after) a handover successfully completing. The second target base station 3340 may send the first indicator and/or the second indicator to the wireless device 3325 based on a handover to second target base station 3340 being successfully completed.

A second indicator may be one or more parameters. The wireless device 3325 may remove all L1/L2 candidate cell configuration(s) of the candidate target cell(s), based on the second indicator being a one parameter. The wireless device 3325 may remove one or more L1/L2 candidate cell configuration(s) of the candidate target cell(s), based on the second indicator being a one or more parameter. The second indicator may comprise a list of L1/L2 candidate cell configuration(s) of the candidate target cell(s) to be removed. The wireless device 3325 may release the L1/L2 candidate cell configuration(s) of the candidate target cell(s) indicated in the second indicator, based on the second indicator being one or more (e.g., a list) of parameters.

A wireless device 3325 may send to the target base station, a RRC reconfiguration complete message 3360, based on receiving the RRC reconfiguration message 3355. The wireless device 3325 may send the target base station, a RRC reconfiguration complete message 3360, based on the wireless device 3325 performing a random access to access the target base station. The second target base station 3340 may send the first indicator and/or second indicator to the wireless device 3325 based on (e.g. after) a handover successfully completing. The second target base station 3340 may send the first indicator and/or the second indicator to the wireless device 3325, based on handover to second target base station 3340 being successfully completed.

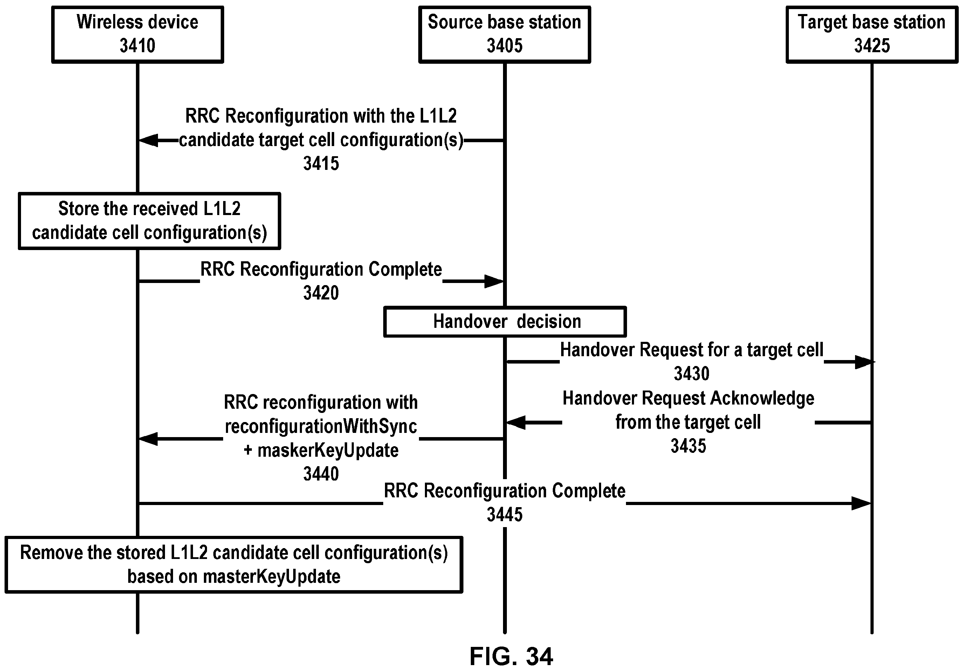

FIG. 34 shows an example of candidate cell configuration management. A source base station 3405 may send a handover request message for a L1/L2 target cell(s) to a first target base station. The source base station 3405 may send the handover request message, for example, based on (e.g. after or in response to) the source base station 3405 determining a handover decision to the first target base station based on a wireless device report (e.g. a wireless device measurement report). A handover of the handover decision may comprise an L1/L2 based handover. The handover request message may be to request one or more L1/L2 candidate cell configurations of candidate target cell(s) belonging to the first target base station. The source base station 3405 may receive, from the first target base station, a handover request acknowledge message (e.g., the message including the L1/L2 candidate cell configuration(s) of the L1/L2 candidate target cell(s)), for example, based on sending (e.g., transmitting) the handover request message to the first target base station. The handover request acknowledge message may be based on (e.g. in response to) the handover request message. The handover request acknowledge message may comprise L1/L2 candidate cell configuration(s) of the candidate target cell(s) (e.g., L1/L2 candidate cell(s) configuration(s)).

A wireless device 3410 may receive one or more RRC messages. The one or more RRC messages may comprise a RRC reconfiguration message 3415 (e.g., RRC reconfiguration). The one or more RRC messages (e.g., the RRC reconfiguration message 3415) may comprise a candidate cell configuration(s) of the candidate target cell(s). The candidate cell configuration(s) may be for performing a reconfiguration with sync procedure. The candidate cell configuration(s), for performing the reconfiguration with sync procedure, may be for a layer 1 and/or layer 2 (L1/L2)-based handover configuration. The one or more candidate cell configuration(s) may comprise an identifier. The wireless device 3410 may uniquely identify the configuration of each candidate target cell(s) The one or more candidate cell configuration(s) may comprise information required (e.g., RRC configuration of the target cell(s)) to access the target cell during the reconfiguration with sync procedure. The wireless device 3410 may send to the source base station 3405, a RRC reconfiguration complete message 3420 (e.g., the RRC reconfiguration), based on receiving the one or more RRC messages comprising the candidate cell configuration(s). The wireless device 3410 may send to the source base station 3405, the RRC reconfiguration complete message 3420 based on the one or more RRC messages being received correctly.

A wireless device 3410 may receive from a source base station 3405, a measurement configuration (e.g., measurement object, reporting configuration, etc.). The wireless device 3410 may perform measurements based on the measurement configuration. The wireless device 3410 may measure serving cell and/or non-serving cells based on having the measurement configuration. The wireless device 3410 may send to the source base station 3405 a measurement report. The measurement report may be based on the measurements made on one or more serving cells and/or one or more non-serving cells.

A source base station 3405 may determine to do a handover of a wireless device 3410 from the source base station 3405 to a second target base station 3425 (e.g., Target base station), for example, based on the measurement report, etc. The second target base station 3425 may be same as the first target base station. The second target base station 3425 may be different from the first target base station. The source base station 3405 may send a handover request message 3430 (e.g., handover request for a target cell) for the handover to the second target base station 3425. The source base station 3405 may send the handover request message 3430, for example, based on the source base station 3405 determining a handover decision to the second target base station 3425 based on a wireless device 3410 report (e.g. a wireless device 3410 measurement report). A handover of the handover decision may comprise a reconfiguration with sync for handover. The source base station 3405 may receive, from the second target base station 3425, a handover request acknowledge message 3435, for example, based on sending (e.g., transmitting) the handover request message 3430 to the second target base station 3425. The handover request acknowledge message 3435 may be based on the handover request message 3430.

A wireless device 3410 may receive RRC messages from a source base station 3405, based on the source base station 3405 receiving a handover acknowledge message 3435. The RRC message may comprise a RRC reconfiguration message 3440 (e.g., RRC reconfiguration with reconfigurationWithSync in FIG. 34). The RRC message, may comprise parameters, configurations, and/or information elements included by the target base station (e.g. as part of the handover acknowledge message 3435). The RRC message may comprise a first indicator and/or a second indicator included by the target base station (e.g. as part of the handover acknowledge message 3435). The source base station may determine to include the first indicator and/or second indicator in the RRC message, based on receiving the handover acknowledge message 3435 comprising the first indicator and/or second indicator. The source base station 3405 may send to the wireless device 3410the RRC message comprising the first indicator and/or second indicator.

A RRC message may comprise a first indicator. The first indicator may indicate a wireless device 3410 to handover from the source base station 3405 to a second target base station 3425 (e.g., to a target cell indicated in the RRC message). The wireless device 3410 may receive the first indicator that may indicate a handover may occur to the second target base station 3425 having candidate cell configuration(s) of the L1/L2 based handover. The RRC message (e.g., the RRC reconfiguration message 3440) may be a reconfiguration with sync to the second target base station 3425. The reconfiguration with sync may be for a target cell that belongs to the second target base station 3425.

A RRC reconfiguration message 3440 may comprise a second indicator. The second indicator may indicate to a wireless device 3410 to remove and/or retain the one or more L1/L2 candidate cell configuration(s) of the candidate target cell(s). The retain of one or more L1/L2 candidate cell configuration(s) of the candidate target cell(s) may refer to the wireless device 3410 retaining the one or more cell configurations based on (e.g. after) the handover to a target cell. The remove of one or more L1/L2 candidate cell configuration(s) of the candidate target cell(s) may refer to the wireless device 3410 removing the one or more cell configurations based on the handover to a target cell. The wireless device 3410 may remove the one or more L1/L2 candidate cell configuration(s) of the candidate target cell(s), based on (e.g.

after) a handover to the second target base station 3425 successfully completing. The wireless device 3410 may retain the one or more L1/L2 candidate cell configuration(s) of the candidate target cell(s), based on (e.g. after) a handover to the second target base station 3425 successfully completing. The wireless device 3410 may remove the one or more L1/L2 candidate cell configuration(s) of the candidate target cell(s) based on receiving the second indicator. The wireless device 3410 may remove the one or more L1/L2 candidate cell configuration(s) of the candidate target cell(s), based on the second indicator being present, and the handover to the second base station successfully completing. The handover to the second target base station 3425 may be based on the wireless device 3410 successfully completing random access to the second target base station 3425.

A second indicator may be based on presence and/or absence of a parameter or configuration. The wireless device 3410 may remove the one or more L1/L2 candidate cell configuration(s) of the candidate target cell(s), based on the second indicator being present. A wireless device 3410 may remove the one or more L1/L2 candidate cell configuration(s) of the candidate target cell(s), based on the second indicator being present. A wireless device 3410 may retain the one or more L1/L2 candidate cell configuration(s) of the candidate target cell(s), based on the second indicator being absent. A wireless device 3410 may retain the one or more L1/L2 candidate cell configuration(s) of the candidate target cell(s), based on the second indicator being absent. The second indicator may be a security configuration (e.g., masterKeyUpdate in FIG. 34). The wireless device 3410 may remove the one or more L1/L2 candidate cell configuration(s) of the candidate target cell(s), based on the security configuration being present. The wireless device 3410 may retain the one or more L1/L2 candidate cell configuration(s) of the candidate target cell(s), based on the security configuration being absent.

A wireless device 3410 may send to a target base station, a RRC reconfiguration complete message 3445, based on receiving the RRC reconfiguration message 3440. The wireless device 3410 may send to the target base station 3425, a RRC reconfiguration complete message 3445, based on the wireless device 3410 performing random access to access the target base station.

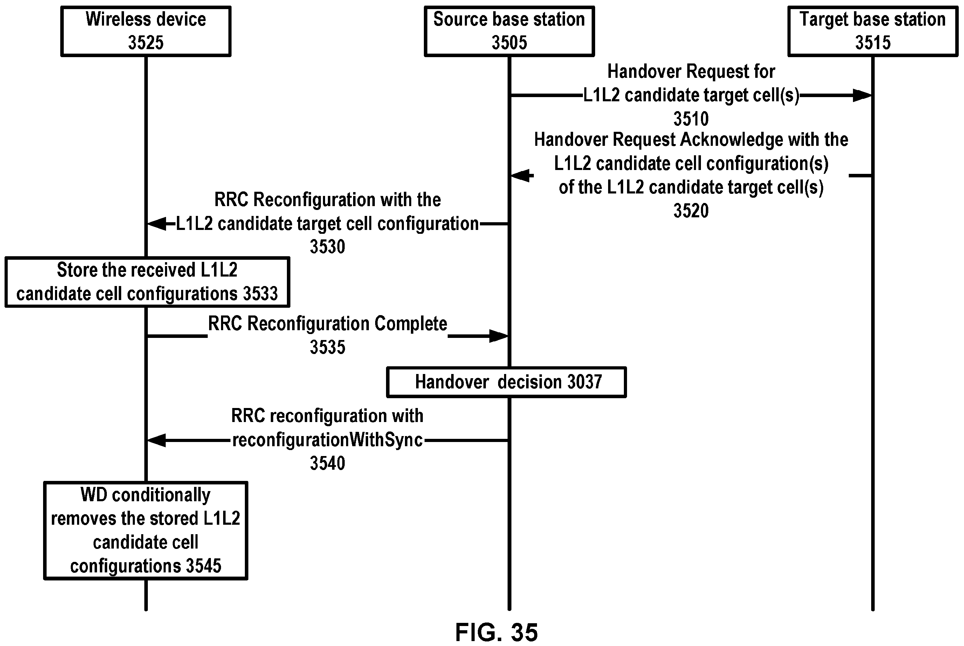

FIG. 35 shows an example of candidate cell configuration management. A source base station 3505 may send a handover request message 3510 for a L1/L2 target cell(s) to a target base station 3515. The source base station 3505 may send the handover request message 3510, for example, based on (e.g. after or in response to) the source base station 3505 determining a handover decision to the target base station 3515 based on a wireless device report (e.g. a wireless device measurement report). A handover of the handover decision may comprise an L1/L2 based handover. The handover request message 3510 may be to request one or more L1/L2 candidate cell configurations of candidate target cell(s) belonging to the target base station 3515. The source base station 3505 may receive, from the target base station 3515, a handover request acknowledge message 3520 (e.g., the message including the L1/L2 candidate cell configuration(s) of the L 1/L2 candidate target cell(s)), for example, based on sending (e.g., transmitting) the handover request message 3510 to the target base station 3515. The handover request acknowledge message 3520 may be based on the handover request message 3510. The handover request acknowledge message 3520 may comprise L1/L2 candidate cell configuration(s) of the candidate target cell(s)

A wireless device 3525 may receive one or more RRC messages. The one or more RRC messages may comprise a RRC reconfiguration message 3530 (e.g., RRC reconfiguration). The one or more RRC messages (e.g., the RRC reconfiguration message 3530) may comprise a candidate cell configuration(s) of the candidate target cell(s). The candidate cell configuration(s) may be for performing a reconfiguration with sync procedure. The candidate cell configuration(s) may be for a layer 1 and/or layer 2 (L1/L2)-based handover configuration for performing the reconfiguration with sync procedure. The one or more candidate cell configuration(s) may comprise an identifier. The wireless device 3525 may uniquely identify and store the configuration of each candidate target cell(s) 3533. The one or more candidate cell configuration(s) may comprise information required (e.g., RRC configuration of the target cell(s)) to access the target cell during the reconfiguration with sync procedure. The wireless device 3525 may send to the source base station 3505, a RRC reconfiguration complete message 3535 (e.g., the RRC reconfiguration complete), based on receiving the one or more RRC messages comprising the candidate cell configuration(s). The wireless device 3525 may send to the source base station 3505, the RRC reconfiguration complete message 3535, based on the one or more RRC messages being received correctly.

A wireless device 3525 may receive from a source base station 3505, a measurement configuration (e.g., measurement object, reporting configuration, etc.). The wireless device 3525 may perform measurements based on the measurement configuration. The wireless device 3525 may measure serving cell and/or non-serving cells based on having the measurement configuration. The wireless device 3525 may send to the source base station 3505 a measurement report. The measurement report may be based on the measurements made on one or more serving cells and/or one or more non-serving cells.

A source base station 3505 may determine to do a handover 3037 of a wireless device 3525 from the source base station 3505 to a target base station 3515, for example, based on the measurement report, load balancing, etc. The target base station 3515 for the handover may be the same as the base station associated with L1/L2 candidate target cell(s). The target base station 3515 for the handover may be the different from the base station associated with L1/L2 candidate target cell(s)

A wireless device 3525 may receive a RRC reconfiguration message 3540 (e.g., RRC reconfiguration) from a source base station 3505. The RRC reconfiguration message 3540 may comprise a handover information (e.g., RRC reconfiguration with reconfigurationWithSync FIG. 35). The wireless device 3525 may determine to release and/or retain the L1/L2 candidate cell configuration(s) of the candidate target cell(s), based on receiving the RRC reconfiguration message. The wireless device 3525 may remove the L1/L2 candidate cell configuration(s) of the candidate target cell(s) 3545 based on a condition, and based on receiving the RRC reconfiguration message 3540 comprising the handover information.

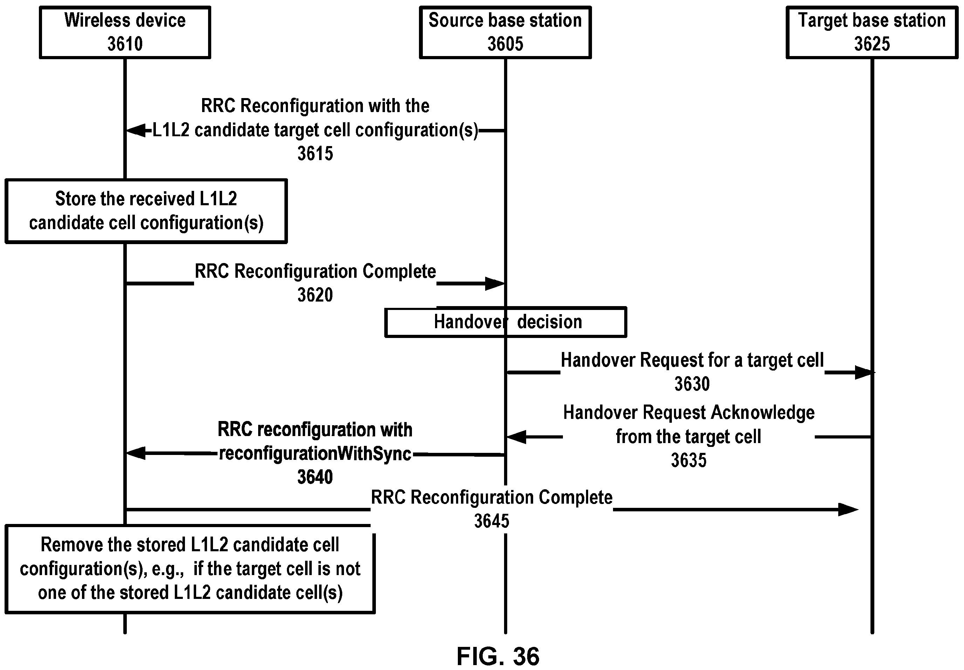

FIG. 36 shows an example of candidate cell configuration management. A source base station 3605 may send a handover request message for a L1/L2 target cell(s) to a first target base station. The source base station 3605 may send the handover request message, for example, based on (e.g. after or in response to) the source base station 3605 determining a handover decision to a first target base station based on a wireless device report (e.g. a wireless device measurement report). A handover of the handover decision may comprise an L1/L2 based handover. The handover request message may be to request one or more L1/L2 candidate cell configurations of candidate target cell(s) belonging to the first target base station. The source base station 3605 may receive, from the first target base station, a handover request acknowledge message 3520 (e.g., the message including the L1/L2 candidate cell configuration(s) of the L1/L2 candidate target cell(s) in FIG. 36), for example, based on sending (e.g., transmitting) the handover request message to the first target base station. The handover request acknowledge message may be based on the handover request message. The handover request acknowledge message may comprise L1/L2 candidate cell configuration(s) of the candidate target cell(s)

A wireless device 3610 may receive one or more RRC messages. The one or more RRC messages may comprise a RRC reconfiguration message 3615 (e.g., RRC reconfiguration in with the L1/L2 candidate target cell configuration(s)). The one or more RRC messages (e.g., the RRC reconfiguration message 3615) may comprise a candidate cell configuration(s) of the candidate target cell(s). The candidate cell configuration(s) may be for performing a reconfiguration with sync procedure. The candidate cell configuration(s) may be for a layer 1 and/or layer 2 (L1/L2)-based handover configuration for performing the reconfiguration with sync procedure. The one or more candidate cell configuration(s) may comprise an identifier. The wireless device 3610 may uniquely identify the configuration of the candidate target cell(s) The one or more candidate cell configuration(s) may comprise information required (e.g., RRC configuration of the candidate target cell(s) belonging first target base station) to access the candidate target cell during the reconfiguration with sync procedure. The wireless device 3610 may send to the source base station 3605, a RRC reconfiguration complete message 3620 (e.g., the RRC reconfiguration complete) based on receiving the one or more RRC messages comprising the candidate cell configuration(s). The wireless device 3610 may send to the source base station 3605, the RRC reconfiguration complete message 3620, based on the one or more RRC messages being received correctly.

A wireless device 3610 may receive from a source base station 3605, a measurement configuration (e.g., measurement object, reporting configuration, etc.). The wireless device 3610 may perform measurements based on the measurement configuration. The wireless device 3610 may measure serving cell and/or non-serving cells based on having the measurement configuration. The wireless device 3610 may send to the source base station 3605 a measurement report. The measurement report may be based on the measurements made on one or more serving cells and/or one or more non-serving cells.

A source base station 3605 may determine to do a handover of a wireless device 3610 from the source base station 3605 to a second target base station 3625 (e.g., Target base station) for example, based on the measurement report, etc. The second target base station 3625 may be same as the first target base station. The second target base station 3625 may be different from the first target base station. The source base station 3605 may send a handover request message 3630 (e.g., handover request for a target cell) for the handover to the second target base station 3625. The source base station 3605 may send the handover request message 3630, for example, based on (e.g. after or in response to) the source base station 3605 determining a handover decision to the second target base station 3625 based on a wireless device report (e.g. a wireless device measurement report). A handover of the handover decision may comprise a reconfiguration with sync for handover. The source base station 3605 may receive, from the second target base station 3625, a handover request acknowledge message, for example, based on sending (e.g., transmitting) the handover request message 3630 to the second target base station 3625. The handover request acknowledge message 3635 may be based on the handover request message 3630.

A wireless device 3610 may receive RRC messages from a source base station 3605, based on the source base station 3605 receiving the handover request acknowledge message 3635. The RRC message may comprise a RRC reconfiguration message 3640 (e.g., RRC reconfiguration with reconfigurationWithSync). The wireless device 3610 may determine to release and/or retain the L1/L2 candidate cell configuration(s) of the candidate target cell(s), based on receiving the RRC reconfiguration message 3640. The wireless device 3610 may remove the L1/L2 candidate cell configuration(s) of the candidate target cell(s) based on a condition, and based on receiving the RRC reconfiguration message 3640 comprising the handover information. The wireless device 3610 may retain the L1/L2 candidate cell configuration(s) of the candidate target cell(s) based on a condition, and based on receiving the RRC reconfiguration message 3640 comprising the handover information. The wireless device 3610 may determine to remove and/or retain the L1/L2 candidate cell configuration(s) of the candidate target cell(s), based on the target cell indicated in the RRC reconfiguration message 3640.

A wireless device 3610 may have one or more L1/L2 candidate cell configuration(s) of a candidate target cell(s) The one or more L1/L2 candidate cell configuration(s) of the candidate target cell(s) may be associated with a cell identifier(s) (e.g., PCI or physical cell identifier and/or downlink frequency). One L1/L2 candidate cell configuration of a candidate target cell may be associated with one cell identifier. The RRC reconfiguration message 3640 may be associated with the cell identifier. The wireless device 3610 may determine to remove and/or retain the L1/L2 candidate cell configuration(s) of the candidate target cell(s), based on the target cell indicated in the RRC reconfiguration message 3640. The wireless device 3610 may determine to remove the one or more L1/L2 candidate cell configuration(s) of the candidate target cell(s), based on the one or more L1/L2 candidate cell configuration(s) of the candidate target cell(s) not having a L1/L2 candidate cell configuration of a candidate target with the same cell identifier in the RRC reconfiguration message 3640. The wireless device 3610 may determine to retain the one or more L1/L2 candidate cell configuration(s) of the candidate target cell(s), based on the one or more L1/L2 candidate cell configuration(s) of the candidate target cell(s) having a L1/L2 candidate cell configuration of a candidate target with the same cell identifier in the RRC reconfiguration message 3640.

A remove of one or more L1/L2 candidate cell configuration(s) of candidate target cell(s) may refer to a wireless device 3610 removing the one or more cell configurations based on (e.g. after) the handover to a target cell. The wireless device 3610 may remove the one or more L1/L2 candidate cell configuration(s) of the candidate target cell(s), based on (e.g. after) a handover to the second target base station 3625 successfully completing. The wireless device 3610 may retain the one or more L1/L2 candidate cell configuration(s) of the candidate target cell(s), based on (e.g. after) a handover to the second target base station 3625 successfully completing. The handover to the second target base station 3625 may be based on the wireless device 3610 successfully completing random access to the second target base station 3625.

A wireless device 3610 may send to a target base station, a RRC reconfiguration complete message 3645, based on receiving the RRC reconfiguration message 3640. The wireless device 3610 may send to the target base station, a RRC reconfiguration complete message 3645, based on the wireless device 3610 performing random access to access the target base station.

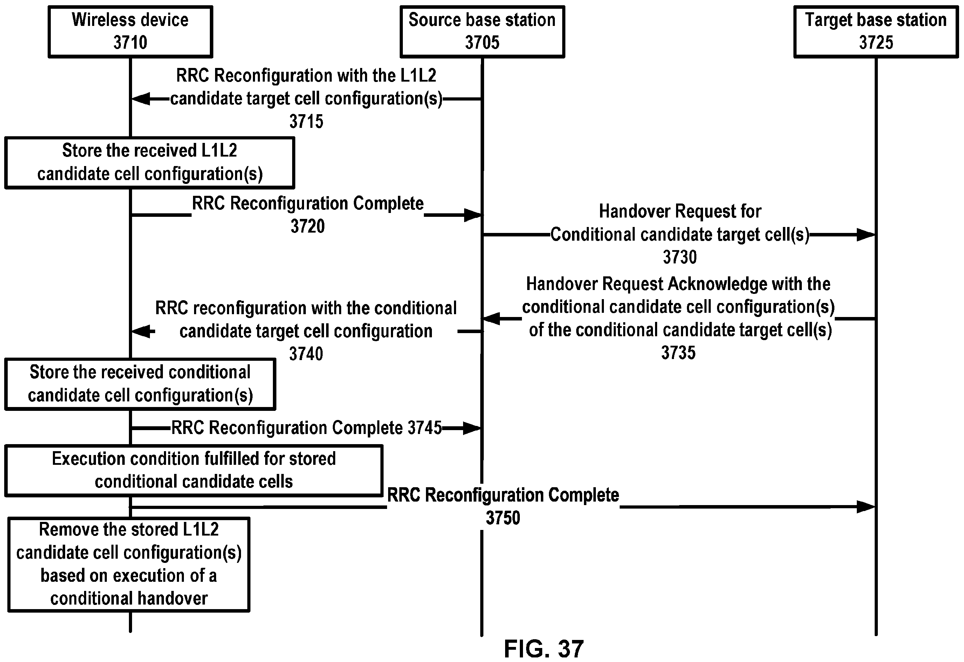

FIG. 37 shows an example of candidate cell configuration management. A source base station 3705 may send a handover request message for a L1/L2 target cell(s) to a first target base station. The source base station 3705 may send the handover request message, based on (e.g. after or in response to) the source base station 3705 determining, for example, based on a wireless device report (e.g. a wireless device measurement report) a handover decision to the first target base station. A handover of the handover decision may comprise an L1/L2 based handover. The handover request message may be to request one or more L1/L2 candidate cell configurations of candidate target cell(s) belonging to the first target base station. The source base station 3705 may receive, from the first target base station, a handover request acknowledge message (e.g., the message including the L1/L2 candidate cell configuration(s) of the L1/L2 candidate target cell(s) in FIG. 37), for example, based on sending (e.g., transmitting) the handover request message to the first target base station. The handover request acknowledge message may be based on the handover request message. The handover request acknowledge message may comprise L1/L2 candidate cell configuration(s) of the candidate target cell(s)

A wireless device 3710 may receive one or more RRC messages. The one or more RRC messages may comprise a RRC reconfiguration message 3715 (e.g., RRC reconfiguration in with the L1/L2 candidate target cell configuration(s)). The one or more RRC messages (e.g., the RRC reconfiguration message 3715) may comprise a candidate cell configuration(s) of the candidate target cell(s). The candidate cell configuration(s) may be for performing a reconfiguration with sync procedure. The candidate cell configuration(s) may be for a layer 1 and/or layer 2 (L1/L2)-based handover configuration for performing the reconfiguration with sync procedure. The one or more candidate cell configuration(s) may comprise an identifier. The wireless device 3710 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The wireless device 3710 may send to the source base station 3705, a RRC reconfiguration complete message (e.g., the RRC reconfiguration complete), based on receiving the one or more RRC messages comprising the candidate cell configuration(s). The wireless device 3710 may send to the source base station 3705, the RRC reconfiguration complete message 3720, based on the one or more RRC messages (e.g., the RRC reconfiguration message 3715) being received correctly.

A wireless device 3710 may receive from a source base station 3705, a measurement configuration (e.g., measurement object, reporting configuration, etc.). The wireless device 3710 may perform measurements based on the measurement configuration. The wireless device 3710 may measure serving cell and/or non-serving cells based on having the measurement configuration. The wireless device 3710 may send to the source base station 3705 a measurement report. The measurement report may be based on the measurements made on one or more serving cells and/or one or more non-serving cells.

A source base station 3705 may determine to do a handover of a wireless device 3710 from the source base station 3705 to a second target base station 3725 (e.g., Target base station), for example, based on the measurement report, etc. The second target base station 3725 may be same as the first target base station. The second target base station 3725 may be different from the first target base station. The source base station 3705 may send a handover request message 3730 (e.g., Handover Request for Conditional candidate target cell(s)) for a conditional reconfiguration target cell(s) to the second target base station 3725. The source base station 3705 may send the handover request message 3730, for example, based on (e.g. after or in response to) the source base station 3705 determining a handover decision to the second target base station 3725 based on a wireless device report (e.g. a wireless device measurement report). A handover of the handover decision may comprise a conditional reconfiguration based handover. The handover request message 3730 may be to request one or more conditional reconfiguration candidate cell configurations of candidate target cell(s) belonging to the second target base station 3725. The source base station 3705 may receive, from the second target base station 3725, a handover request acknowledge message 3735 (e.g., Handover Request Acknowledge with the conditional candidate cell configuration(s) of the conditional candidate target cell(s)), for example, based on sending (e.g., transmitting) the handover request message 3730 to the second target base station 3725. The handover request acknowledge message may be based on the handover request message 3730. The handover request acknowledge message 3735 may comprise conditional reconfiguration candidate cell configuration(s) of the candidate target cell(s)

A wireless device 3710 may receive one or more RRC messages. The one or more RRC messages may comprise a RRC reconfiguration message 3740 (e.g., RRC reconfiguration with conditional candidate target cell configuration in FIG. 37). The one or more RRC messages (e.g., the RRC reconfiguration message 3740) may comprise a candidate cell configuration(s) of the candidate target cell(s). The candidate cell configuration(s) may be for performing a reconfiguration with sync procedure. The candidate cell configuration(s) may be for a conditional reconfiguration based handover configuration for performing the reconfiguration with sync procedure. The one or more candidate cell configuration(s) may comprise an identifier. The wireless device 3710 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The one or more candidate cell configuration(s) may comprise an execution condition (e.g., to determine when to execute the conditional reconfiguration based handover). A wireless device 3710 may measure and/or determine to perform a conditional reconfiguration based handover based on the execution condition. The wireless device 3710 may send to the source base station 3705, a RRC reconfiguration complete message 3745 (e.g., the RRC reconfiguration complete) based on receiving the one or more RRC messages comprising the candidate cell configuration(s). The wireless device 3710 may send to the source base station 3705, the RRC reconfiguration complete message 3745 based on the one or more RRC messages being received correctly.

A wireless device 3710 may send a RRC message (i.e. RRC reconfiguration Complete 3750) to a second target base station 3725, based on the execution condition associated with a conditional reconfiguration candidate cell configuration of the candidate target cell being fulfilled. The wireless device 3710 may send the RRC message to the second target base station 3725, based on executing a conditional reconfiguration based handover. The wireless device 3710 may determine to retain and/or release L1/L2 candidate cell configuration(s) of the candidate target cell(s) based on successful conditional reconfiguration based handover completing. The wireless device 3710 may determine to remove the one or more L1/L2 candidate cell configuration(s) of the candidate target cell(s) based on executing a conditional reconfiguration based handover. The wireless device 3710 may determine to retain the one or more L1/L2 candidate cell configuration(s) of the candidate target cell(s) based on executing a conditional reconfiguration based handover.

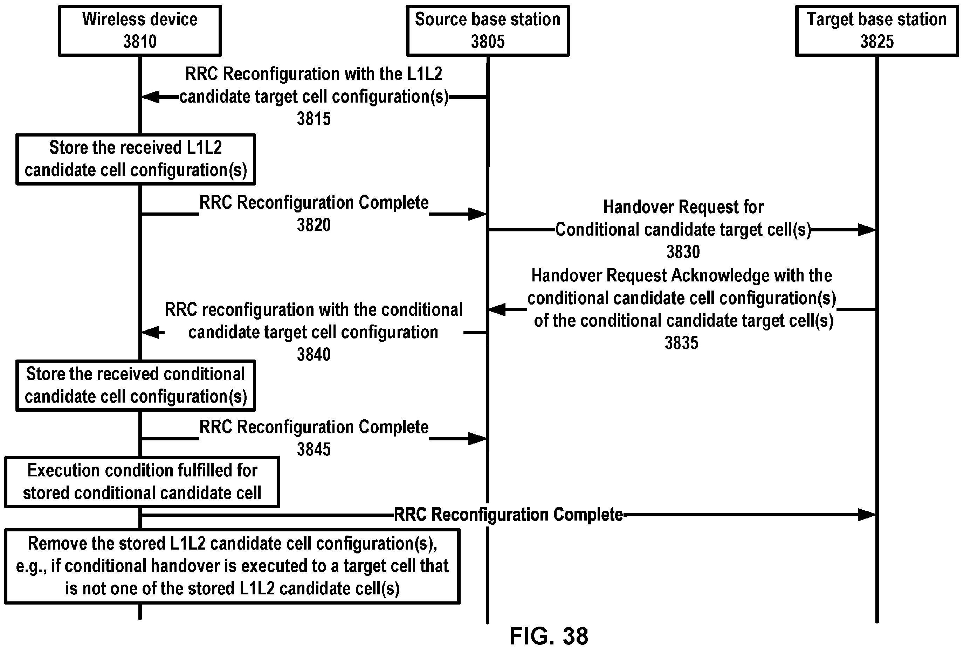

FIG. 38 shows an example of candidate cell configuration management. A source base station 3805 may send a handover request message for a L1/L2 target cell(s) to a first target base station. The source base station 3805 may send the handover request message, for example, based on (e.g. after or in response to) the source base station 3805 determining a handover decision to the first target base station based on a wireless device report (e.g. a wireless device measurement report). A handover of the handover decision may comprise an L1/L2 based handover. The handover request message may be to request one or more L1/L2 candidate cell configurations of candidate target cell(s) belonging to the first target base station. The source base station 3805 may receive, from the first target base station, a handover request acknowledge message (e.g., the message including the L1/L2 candidate cell configuration(s) of the L1/L2 candidate target cell(s)), for example, based on sending (e.g., transmitting) the handover request message to the first target base station. The handover request acknowledge message may be based on the handover request message. The handover request acknowledge message may comprise L1/L2 candidate cell configuration(s) of the candidate target cell(s)

A wireless device 3810 may receive one or more RRC messages. The one or more RRC messages may comprise a RRC reconfiguration message 3815 (e.g., RRC reconfiguration in with the L1/L2 candidate target cell configuration(s)). The one or more RRC messages (e.g., the RRC reconfiguration message 3815) may comprise a candidate cell configuration(s) of the candidate target cell(s). The candidate cell configuration(s) may be for performing a reconfiguration with sync procedure. The candidate cell configuration(s) may be for a layer 1 and/or layer 2 (L1/L2)-based handover configuration for performing the reconfiguration with sync procedure. The one or more candidate cell configuration(s) may comprise an identifier. The wireless device 3810 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The wireless device 3810 may send to the source base station 3805, a RRC reconfiguration complete message 3820 (e.g., the RRC reconfiguration complete in FIG. 38), based on receiving the one or more RRC messages comprising the candidate cell configuration(s). The wireless device 3810 may send to the source base station 3805, the RRC reconfiguration complete message 3820 based on the one or more RRC messages being received correctly.

A wireless device 3810 may receive from a source base station 3805, a measurement configuration (e.g., measurement object, reporting configuration, etc.). The wireless device 3810 may perform measurements based on the measurement configuration. The wireless device 3810 may measure serving cell and/or non-serving cells based on having the measurement configuration. The wireless device 3810 may send to the source base station 3805 a measurement report. The measurement report may be based on the measurements made on one or more serving cells and/or one or more non-serving cells.

A source base station 3805 may determine to do a handover of a wireless device 3810 from the source base station 3805 to a second target base station 3825 (e.g., Target base station), for example, based on the measurement report, etc. The second target base station 3825 may be same as the first target base station. The second target base station 3825 may be different from the first target base station. The source base station 3805 may send a handover request message 3830 (e.g., Handover Request for Conditional candidate target cell(s)) for a conditional reconfiguration target cell(s) to the second target base station 3825. The source base station 3805 may send the handover request message 3830, for example, based on (e.g. after or in response to) the source base station 3805 determining a handover decision to the second target base station 3825 based on a wireless device report (e.g. a wireless device measurement report). A handover of the handover decision may comprise a conditional reconfiguration based handover. The handover request message 3830 may be to request one or more conditional reconfiguration candidate cell configurations of candidate target cell(s) belonging to the second target base station 3825. The source base station 3805 may receive, from the second target base station 3825, a handover request acknowledge message 3835 (e.g., Handover Request Acknowledge with the conditional candidate cell configuration(s) of the conditional candidate target cell(s)), for example, based on sending (e.g., transmitting) the handover request message 3830 to the target base station. The handover request acknowledge message 3835 may be based on the handover request message 3830. The handover request acknowledge message 3835 may comprise one or more conditional reconfiguration candidate cell configuration(s) of the candidate target cell(s)

A wireless device 3810 may receive one or more RRC messages. The one or more RRC messages may comprise a RRC reconfiguration message 3840 (e.g., RRC reconfiguration with conditional candidate target cell configuration in FIG. 38). The one or more RRC messages (e.g., the RRC reconfiguration message 3840) may comprise a candidate cell configuration(s) of the candidate target cell(s). The candidate cell configuration(s) may be for performing a reconfiguration with sync procedure. The candidate cell configuration(s) may be for a conditional reconfiguration based handover configuration for performing the reconfiguration with sync procedure. The one or more candidate cell configuration(s) may comprise an identifier. The wireless device 3810 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The one or more candidate cell configuration(s) may comprise an execution condition (e.g., to determine when to execute the conditional reconfiguration based handover). A wireless device 3810 may measure and/or determine to perform a conditional reconfiguration based handover based on the execution condition. The wireless device 3810 may send to the source base station 3805, a RRC reconfiguration complete message 3820 (e.g., the RRC reconfiguration complete in FIG. 38), based on receiving the one or more RRC messages comprising the candidate cell configuration(s). The wireless device 3810 may send to the source base station 3805, the RRC reconfiguration complete message 3845 based on the one or more RRC messages being received correctly.

A wireless device 3810 may send a RRC message (i.e. RRC reconfiguration Complete) to a second target base station 3825 based on the execution condition associated with a conditional reconfiguration candidate cell configuration of the candidate target cell being fulfilled. The wireless device 3810 may send the RRC message to the second target base station 3825 based on executing a conditional reconfiguration based handover. The wireless device 3810 may determine to retain and/or release the L1/L2 candidate cell configuration(s) of the candidate target cell(s) based on successful conditional reconfiguration based handover completing. The wireless device 3810 may determine to remove the one or more L1/L2 candidate cell configuration(s) of the candidate target cell(s) based on executing a conditional reconfiguration based handover. The wireless device 3810 may determine to retain the one or more L1/L2 candidate cell configuration(s) of the candidate target cell(s) based on executing a conditional reconfiguration based handover.

A wireless device 3810 may have one or more L1/L2 candidate cell configuration(s) of candidate target cell(s). The one or more L1/L2 candidate cell configuration(s) of the candidate target cell(s) may be associated with cell identifier(s) (e.g., PCI or physical cell identifier and/or downlink frequency). One L1/L2 candidate cell configuration of a candidate target cell may be associated with one cell identifier. The one or more conditional reconfiguration candidate cell configuration(s) of the candidate target cell(s). The one or more conditional reconfiguration candidate cell configuration(s) of the candidate target cell(s) may be associated with cell identifier(s) (e.g., PCI or physical cell identifier and/or downlink frequency). One conditional reconfiguration candidate cell configuration of a candidate target cell may be associated with one cell identifier.

A wireless device 3810 may determine to remove and/or retain L1/L2 candidate cell configuration(s) of candidate target cell(s) based on the cell identifier of the target cell of conditional reconfiguration cell based handover. The wireless device 3810 may determine to remove the one or more L1/L2 candidate cell configuration(s) of the candidate target cell(s) based on the one or more L1/L2 candidate cell configuration(s) of the candidate target cell(s) not having a L1/L2 candidate cell configuration of a candidate target with the same cell identifier as the target cell of conditional reconfiguration cell based handover. The wireless device 3810 may determine to retain the one or more L1/L2 candidate cell configuration(s) of the candidate target cell(s), based on the one or more L1/L2 candidate cell configuration(s) of the candidate target cell(s) having a L1/L2 candidate cell configuration of a candidate target with the same cell identifier as the target cell of conditional reconfiguration cell based handover.

A remove of one or more L1/L2 candidate cell configuration(s) of candidate target cell(s) may refer to a wireless device 3810 removing one or more cell configurations based on (e.g. after) the handover to a target cell. The wireless device 3810 may remove the one or more L1/L2 candidate cell configuration(s) of the candidate target cell(s) based on (e.g. after) a handover to the second target base station 3825 successfully completing. The wireless device 3810 may retain the one or more L1/L2 candidate cell configuration(s) of the candidate target cell(s) based on (e.g. after) a handover to the second target base station 3825 successfully completing. The handover to the second target base station 3825 may be based on the wireless device 3810 successfully completing random access to the second target base station 3825.

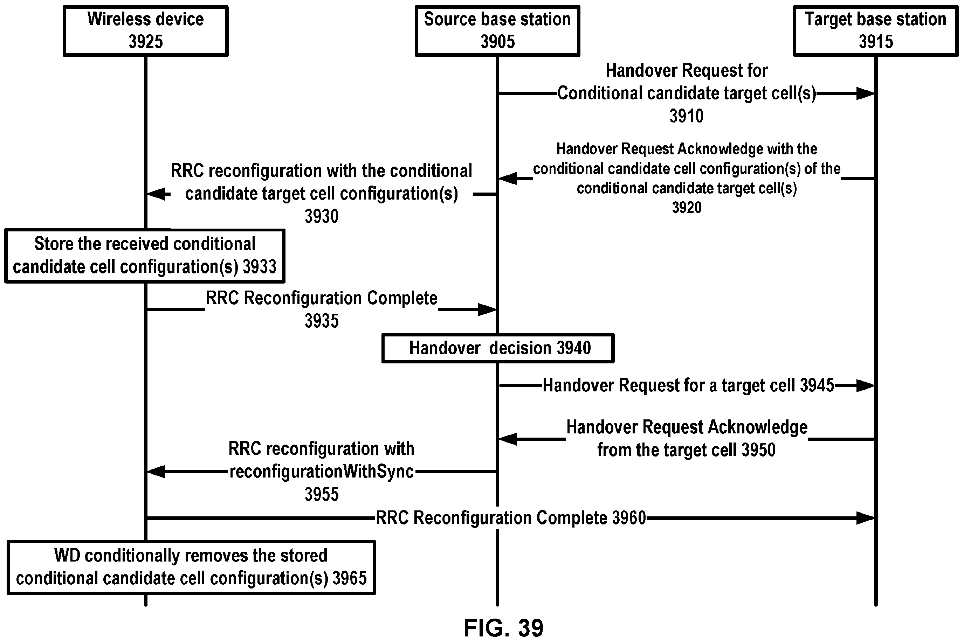

FIG. 39 shows an example of candidate cell configuration management. A source base station 3905 may send a handover request message 3910 for a conditional reconfiguration target cell(s) to a first target base station 3915 (e.g., target base station). The source base station 3905 may send the handover request message 3910 based on (e.g. after or in response to) the source base station 3905 determining, for example, based on a wireless device report (e.g. a wireless device measurement report) a handover decision to the first target base station. A handover of the handover decision may comprise a conditional reconfiguration based handover. The handover request message 3910 may be to request one or more conditional reconfiguration candidate cell configurations of candidate target cell(s) belonging to the target base station. The source base station 3905 may receive, from the target base station 3915, a handover request acknowledge message 3920 (e.g., the message including the conditional reconfiguration candidate cell configuration(s) of the conditional reconfiguration candidate target cell(s)), for example, based on sending (e.g., transmitting) the handover request message 3910 to the target base station 3915. The handover request acknowledge message 3920 may be based on the handover request message 3910. The handover request acknowledge message 3920 may comprise conditional reconfiguration candidate cell configuration(s) of the candidate target cell(s)

A wireless device 3925 may receive one or more RRC messages. The one or more RRC messages may comprise a RRC reconfiguration message 3930 (e.g., RRC reconfiguration with conditional candidate target cell configuration). The one or more RRC messages (e.g., the RRC reconfiguration message 3930) may comprise a candidate cell configuration(s) of the candidate target cell(s). The candidate cell configuration(s) may be for performing a reconfiguration with sync procedure. The candidate cell configuration(s) may be for a conditional reconfiguration based handover configuration for performing the reconfiguration with sync procedure. The one or more candidate cell configuration(s) may comprise an identifier. The wireless device 3925 may uniquely identify and store the configuration of the candidate target cell(s) 3933. The one or more candidate cell configuration(s) may comprise information required (e.g., RRC configuration of the candidate target cell(s) belonging first target base station) to access the candidate target cell during the reconfiguration with sync procedure. The one or more candidate cell configuration(s) may comprise an execution condition (e.g., to determine when to execute the conditional reconfiguration based handover). A wireless device 3925 may measure and/or determine to perform a conditional reconfiguration based handover based on the execution condition. The wireless device 3925 may send to the source base station 3905, a RRC reconfiguration complete message 3935 (e.g., the RRC reconfiguration complete), based on receiving the one or more RRC messages comprising the candidate cell configuration(s). The wireless device 3925 may send to the source base station 3905, the RRC reconfiguration complete message 3935, based on the one or more RRC messages being received correctly.

A wireless device 3925 may receive from the source base station 3905, a measurement configuration (e.g., measurement object, reporting configuration, etc.). The wireless device 3925 may perform measurements based on the measurement configuration. The wireless device 3925 may measure serving cell and/or non-serving cells based on having the measurement configuration. The wireless device 3925 may send to the source base station 3905 a measurement report. The measurement report may be based on the measurements made on one or more serving cells and/or one or more non-serving cells.

A source base station 3905 may determine to do a handover 3940 of a wireless device 3925 from the source base station 3905 to a target base station 3915, for example, based on the measurement report, load balancing etc. The source base station 3905, based on the handover decision 3940, may send Handover Request 3945 to a target base station 3915. The source base station 3905, based on the Handover Request 3945, may receive Handover Request Acknowledge 3950 from the target base station 3915. The second target base station may be the same as the first target base station 3915. The second target base station may be different from the first target 3915.

A wireless device 3925 may receive a RRC reconfiguration message 3955 (e.g., RRC reconfiguration) from the source base station 3905. The RRC reconfiguration message 3955 may comprise a handover information (e.g., RRC reconfiguration with reconfigurationWithSync). The wireless device 3925 may determine to release and/or retain the conditional reconfiguration candidate cell configuration(s) of the candidate target cell(s) based on receiving the RRC reconfiguration message. The wireless device 3925 may remove the conditional reconfiguration candidate cell configuration(s) of the candidate target cell(s) 3965 based on a condition and based on receiving the RRC reconfiguration message comprising the handover information.

A wireless device 3925 may send to the target base station 3915, a RRC reconfiguration complete message, based on receiving the RRC reconfiguration message. The wireless device 3925 may send to the target base station 3915, a RRC reconfiguration complete message 3960, based on the wireless device 3925 performing random access to access the target base station 3915.

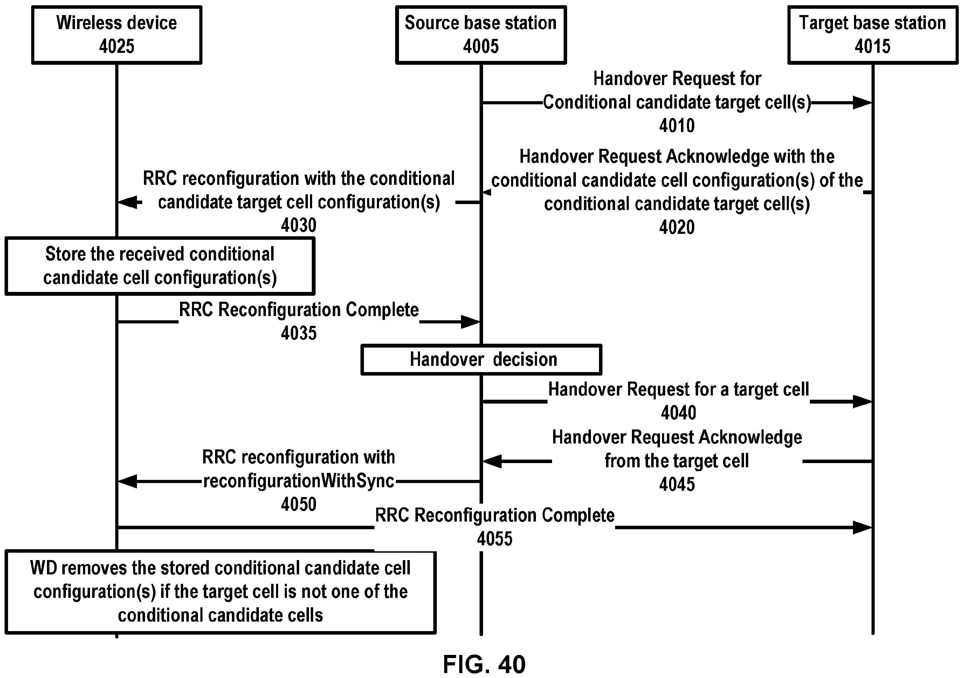

FIG. 40 shows an example of candidate cell configuration management. A source base station 4005 may send a handover request message 4010 for a conditional reconfiguration target cell(s) to a first target base station 4015 (e.g., target base station) The source base station 4005 may send the handover request message 4010, for example, based on (e.g. after or in response to) the source base station 4005 determining a handover decision to the first target base station 4015 based on a wireless device report (e.g. a wireless device measurement report). A handover of the handover decision may comprise a conditional reconfiguration based handover. The handover request message 4010 may be to request one or more conditional reconfiguration candidate cell configurations of candidate target cell(s) belonging to the target base station. The source base station 4005 may receive, from the target base station, a handover request acknowledge message 4020 (e.g., the message including the conditional reconfiguration candidate cell configuration(s) of the conditional reconfiguration candidate target cell(s)), for example, based on sending (e.g., transmitting) the handover request message 4010 to the target base station. The handover request acknowledge message 4020 may be based on the handover request message 4010. The handover request acknowledge message 4020 may comprise a conditional reconfiguration candidate cell configuration(s) of the candidate target cell(s)

A wireless device 4025 may receive one or more RRC messages. The one or more RRC messages may comprise a RRC reconfiguration message 4030 (e.g., RRC reconfiguration with conditional candidate target cell configuration). The one or more RRC messages (e.g., the RRC reconfiguration message 4030) may comprise a candidate cell configuration(s) of the candidate target cell(s). The candidate cell configuration(s) may be for performing a reconfiguration with sync procedure. The candidate cell configuration(s) may be for a conditional reconfiguration based handover configuration for performing the reconfiguration with sync procedure. The one or more candidate cell configuration(s) may comprise an identifier. The wireless device 4025 may uniquely identify the configuration of the candidate target cell(s). The one or more candidate cell configuration(s) may comprise information required (e.g., RRC configuration of the candidate target cell(s) belonging to a first target base station) to access the candidate target cell during the reconfiguration with sync procedure. The one or more candidate cell configuration(s) may comprise an execution condition (e.g., to determine when to execute the conditional reconfiguration based handover). A wireless device 4025 may measure and/or determine to perform a conditional reconfiguration based handover based on the execution condition. The wireless device 4025 may send to the source base station 4005, a RRC reconfiguration complete message 4035 (e.g., the RRC reconfiguration complete), based on receiving the one or more RRC messages comprising the candidate cell configuration(s). The wireless device 4025 may send to the source base station 4005, the RRC reconfiguration complete message 4035 based on the one or more RRC messages being received correctly.

A wireless device 4025 may receive from the source base station 4005, a measurement configuration (e.g., measurement object, reporting configuration, etc.). The wireless device 4025 may perform measurements based on the measurement configuration. The wireless device 4025 may measure serving cell and/or non-serving cells based on having the measurement configuration. The wireless device 4025 may send to the source base station 4005 a measurement report. The measurement report may be based on the measurements made on one or more serving cells and/or one or more non-serving cells.

A source base station 4005 may determine to do a handover of a wireless device 4025 from the source base station 4005 to a second target base station 4015 (e.g., Target base station), for example, based on the measurement report, etc. The second target base station may be same as the first target base station 4015. The second target base station may be different from the first target base station 4015. The source base station 4005 may send a handover request message 4040 (e.g., handover request for a target cell) for the handover to the second target base station. The source base station 4005 may send the handover request message 4010, for example, based on (e.g. after or in response to) the source base station 4005 determining a handover decision to the second target base station based on a wireless device report (e.g. a wireless device measurement report). A handover of the handover decision may comprise a reconfiguration with sync for handover. The source base station 4005 may receive, from the second target base station, a handover request acknowledge message 4045, for example, based on sending (e.g., transmitting) the handover request message 4010 to the second target base station. The handover request acknowledge message 4045 may be based on the handover request message 4010.

A wireless device 4025 may receive RRC messages from a source base station 4005 based on a source base station 4005 receiving the handover acknowledge message. The RRC message may comprise a RRC reconfiguration message 4050 (e.g., RRC reconfiguration with reconfigurationWithSync). The wireless device 4025 may determine to release and/or retain the conditional reconfiguration candidate cell configuration(s) of the candidate target cell(s) based on receiving the RRC reconfiguration message 4050. The wireless device 4025 may remove the conditional reconfiguration candidate cell configuration(s) of the candidate target cell(s) based on a condition and based on receiving the RRC reconfiguration message 4050 comprising the handover information. The wireless device 4025 may retain the conditional reconfiguration candidate cell configuration(s) of the candidate target cell(s) based on a condition and based on receiving the RRC reconfiguration message 4050 comprising the handover information. The wireless device 4025 may determine to remove and/or retain the conditional reconfiguration candidate cell configuration(s) of the candidate target cell(s) based on the target cell indicated in the RRC reconfiguration message 4050.

A wireless device 4025 may have one or more conditional reconfiguration candidate cell configuration(s) of the candidate target cell(s). The one or more conditional reconfiguration candidate cell configuration(s) of the candidate target cell(s) may be associated with cell identifier(s) (e.g., PCI or physical cell identifier and/or downlink frequency). One conditional reconfiguration candidate cell configuration of a candidate target cell may be associated with one cell identifier. The RRC reconfiguration message 4050 may be associated with the cell identifier. The wireless device 4025 may determine to remove and/or retain the conditional reconfiguration candidate cell configuration(s) of the candidate target cell(s) based on the target cell indicated in the RRC reconfiguration message 4050. The wireless device 4025 may determine to remove the one or more conditional reconfiguration candidate cell configuration(s) of the candidate target cell(s) based on the one or more conditional reconfiguration candidate cell configuration(s) of the candidate target cell(s) not having a conditional reconfiguration candidate cell configuration of a candidate target with the same cell identifier in the RRC reconfiguration message 4050. The wireless device 4025 may determine to retain the one or more conditional reconfiguration candidate cell configuration(s) of the candidate target cell(s) based on the one or more conditional reconfiguration candidate cell configuration(s) of the candidate target cell(s) having a conditional reconfiguration candidate cell configuration of a candidate target with the same cell identifier in the RRC reconfiguration message 4050.

A removal of one or more conditional reconfiguration candidate cell configuration(s) of candidate target cell(s) may refer to a wireless device 4025 removing the one or more cell configurations based on (e.g. after) a handover to a target cell. The wireless device 4025 may remove the one or more conditional reconfiguration candidate cell configuration(s) of the candidate target cell(s) based on (e.g. after) a handover to the second target base station successfully completing. The wireless device 4025 may retain the one or more conditional reconfiguration candidate cell configuration(s) of the candidate target cell(s) based on (e.g. after) a handover to the second target base station successfully completing. The handover to the second target base station may be based on the wireless device 4025 successfully completing random access to the second target base station.

A wireless device 4025 may send to the target base station, a RRC reconfiguration complete message 4055 based on receiving the RRC reconfiguration message 4050. The wireless device 4025 may send to the target base station, a RRC reconfiguration complete message 4055 based on the wireless device 4025 performing random access to access the target base station.

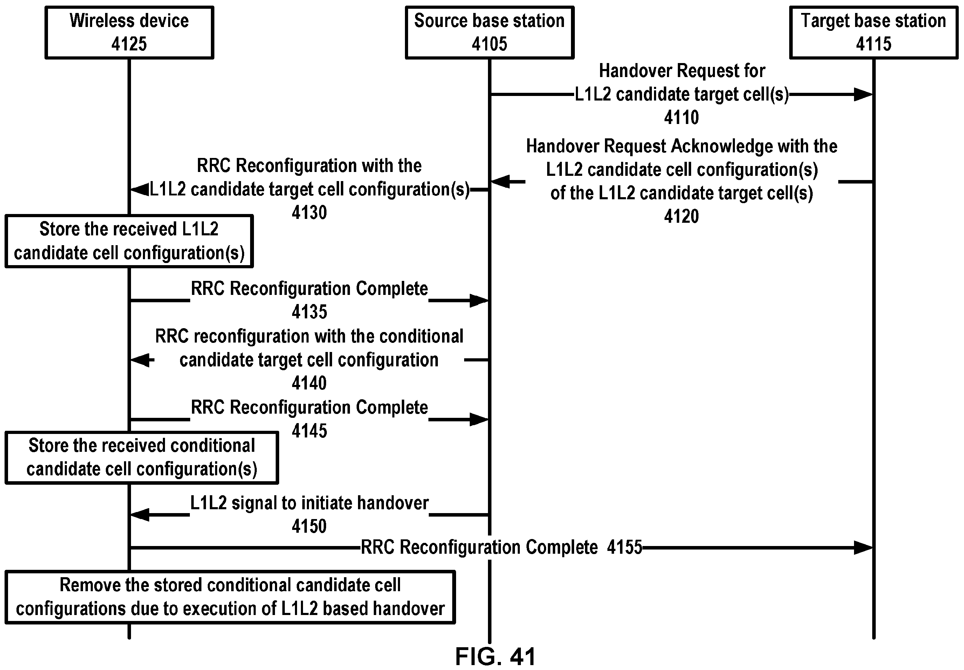

FIG. 41 shows an example of candidate cell configuration management. A source base station 4105 may send a handover request message 4110 for a L1/L2 target cell(s) to a first target base station 4115. The source base station 4105 may send the handover request message 4110, for example, based on (e.g. after or in response to) the source base station 4105 determining a handover decision to the first target base station 4115 based on a wireless device report (e.g. a wireless device measurement report). A handover of the handover decision may comprise an L1/L2 based handover. The handover request message 4110 may be to request one or more L1/L2 candidate cell configurations of candidate target cell(s) belonging to the first target base station 4115. The source base station 4105 may receive, from the first target base station 4115, a handover request acknowledge message 4120 (e.g., the message including the L1/L2 candidate cell configuration(s) of the L1/L2 candidate target cell(s)), for example, based on sending (e.g., transmitting) the handover request message 4110 to the first target base station 4115. The handover request acknowledge message 4120 may be based on the handover request message 4110. The handover request acknowledge message 4120 may comprise L1/L2 candidate cell configuration(s) of the candidate target cell(s)

A wireless device 4125 may receive one or more RRC messages. The one or more RRC messages may comprise a RRC reconfiguration message 4130 (e.g., RRC reconfiguration in with the L1/L2 candidate target cell configuration(s)). The one or more RRC messages (e.g., the RRC reconfiguration message 4130) may comprise a candidate cell configuration(s) of the candidate target cell(s). The candidate cell configuration(s) may be for performing a reconfiguration with sync procedure. The candidate cell configuration(s) may be for a layer 1 and/or layer 2 (L1/L2)-based handover configuration for performing the reconfiguration with sync procedure. The one or more candidate cell configuration(s) may comprise an identifier. The wireless device 4125 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The wireless device 4125 may send to the source base station 4105, a RRC reconfiguration complete message 4135 (e.g., the RRC reconfiguration complete), based on receiving the one or more RRC messages comprising the candidate cell configuration(s). The wireless device 4125 may send to the source base station 4105, the RRC reconfiguration complete message 4135 based on the one or more RRC messages being received correctly.

A wireless device 4125 may receive from the source base station 4105, a measurement configuration (e.g., measurement object, reporting configuration, etc.). The wireless device 4125 may perform measurements based on the measurement configuration. The wireless device 4125 may measure serving cell and/or non-serving cells based on having the measurement configuration. The wireless device 4125 may send to the source base station 4105 a measurement report. The measurement report may be based on the measurements made on one or more serving cells and/or one or more non-serving cells.

A source base station 4105 may determine to do a handover of the wireless device 4125 from the source base station 4105 to a second target base station (e.g., Target base station), for example, based on the measurement report, etc. The second target base station may be the same as the first target base station 4115. The second target base station may be different from the first target base station 4115. The source base station 4105 may send a handover request message 4110 (e.g., Handover Request for Conditional candidate target cell(s)) for a conditional reconfiguration target cell(s) to the second target base station. The source base station 4105 may send the handover request message 4110, for example, based on (e.g. after or in response to) the source base station 4105 determining a handover decision to the second target base station based on a wireless device 4125 report (e.g. a wireless device 4125 measurement report). A handover of the handover decision may comprise a conditional reconfiguration based handover. The handover request message may be to request one or more conditional reconfiguration candidate cell configurations of candidate target cell(s) belonging to the second target base station. The source base station 4105 may receive, from the second target base station, a handover request acknowledge message (e.g., Handover Request Acknowledge with the conditional candidate cell configuration(s) of the conditional candidate target cell(s)), for example, based on sending (e.g., transmitting) the handover request message to the target base station. The handover request acknowledge message may be based on the handover request message. The handover request acknowledge message comprises conditional reconfiguration candidate cell configuration(s) of the candidate target cell(s)

A wireless device 4125 may receive one or more RRC messages. The one or more RRC messages may comprise a RRC reconfiguration message 4140 (e.g., RRC reconfiguration with conditional candidate target cell configuration). The one or more RRC messages (e.g., the RRC reconfiguration message 4140) may comprise a candidate cell configuration(s) of the candidate target cell(s). The candidate cell configuration(s) may be for performing a reconfiguration with sync procedure. The candidate cell configuration(s) may be for a conditional reconfiguration based handover configuration for performing the reconfiguration with sync procedure. The one or more candidate cell configuration(s) may comprise an identifier. The wireless device 4125 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The one or more candidate cell configuration(s) may comprise an execution condition (e.g., to determine when to execute the conditional reconfiguration based handover). A wireless device 4125 may measure and/or determine to perform a conditional reconfiguration based handover based on the execution condition. The wireless device 4125 may send to the source base station 4105, a RRC reconfiguration complete message (e.g., the RRC reconfiguration complete in FIG. 41), based on receiving the one or more RRC messages comprising the candidate cell configuration(s). The wireless device 4125 may send to the source base station 4105, the RRC reconfiguration complete message 4145 based on the one or more RRC messages being received correctly.

A wireless device 4125 may receive from a source base station 4105 a L1/L2 signaling 4150 to initiate a L1/L2 based handover (e.g., L1/L2 signal to initiate handover), for example, based on a wireless device 4125 report (e.g. a measurement report). The L1/L2 signaling may comprise DCI indication. The L1/L2 signaling may comprise a MAC CE. The L1/L2 signaling may comprise of a L1/L2 target cell. The L1/L2 target cell may be the target cell for handover of the wireless device 4125. The wireless device 4125 may execute based on receiving the L1/L2 signaling and may be a L1/L2 based handover. The wireless device 4125 may executed L1/L2 based handover to the L1/L2 target cell based on receiving L1/L2 signaling.

A wireless device 4125 may send a RRC message 4155 (i.e. RRC reconfiguration Complete) to a second target base station based on a L1/L2 based handover. The wireless device 4125 may determine to retain and/or release the conditional reconfiguration candidate cell configuration(s) of the candidate target cell(s) based on successful L1/L2 based handover completing. The wireless device 4125 may determine to remove the one or more conditional reconfiguration based on executing a L1/L2 based handover candidate cell configuration(s) of the candidate target cell(s). The wireless device 4125 may determine to retain the one or more conditional reconfiguration candidate cell configuration(s) of the candidate target cell(s) based on executing a L1/L2 based handover.

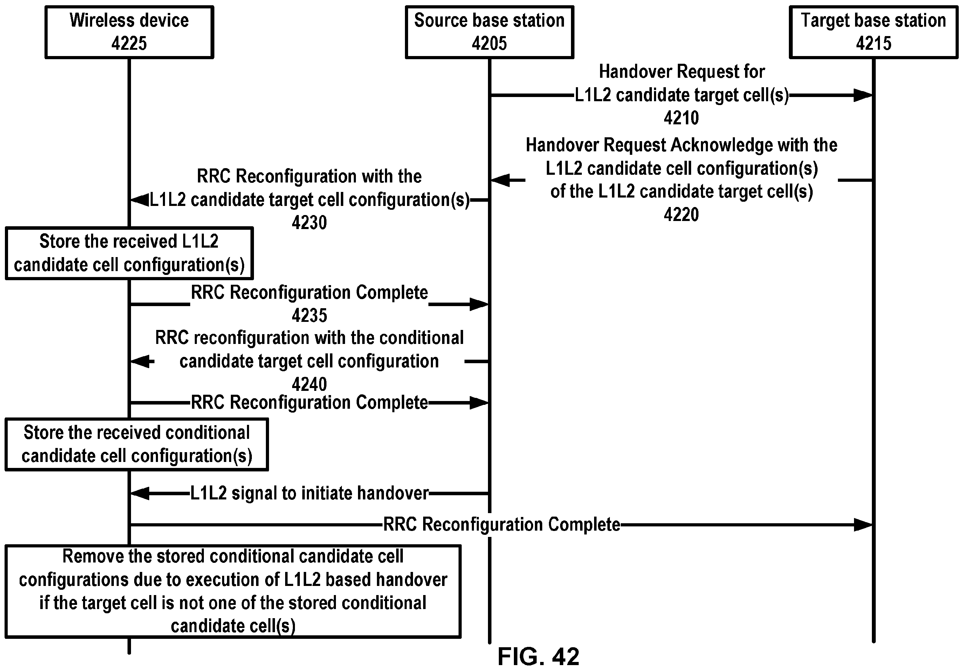

FIG. 42 shows an example of candidate cell configuration management. A source base station 4205 may send a handover request message 4210 for a L1/L2 target cell(s) to a first target base station 4215. The source base station 4205 may send the handover request message 4210, for example, based on (e.g. after or in response to) the source base station 4205 determining a handover decision to the first target base station 4215 based on a wireless device report (e.g. a wireless device measurement report). A handover of the handover decision may comprise an L1/L2 based handover. The handover request message 4210 may be to request one or more L1/L2 candidate cell configurations of candidate target cell(s) belonging to the first target base station 4215. The source base station 4205 may receive, from the first target base station 4215, a handover request acknowledge message 4220 (e.g., the message including the L1/L2 candidate cell configuration(s) of the L1/L2 candidate target cell(s)), for example, based on sending (e.g., transmitting) the handover request message 4210 to the first target base station 4215. The handover request acknowledge message 4220 may be based on the handover request message 4210. The handover request acknowledge message 4220 may comprise L1/L2 candidate cell configuration(s) of the candidate target cell(s)

A wireless device 4225 may receive one or more RRC messages. The one or more RRC messages may comprise a RRC reconfiguration message 4230 (e.g., RRC reconfiguration in with the L1/L2 candidate target cell configuration(s)). The one or more RRC messages (e.g., the RRC reconfiguration message 4230) may comprise a candidate cell configuration(s) of the candidate target cell(s). The candidate cell configuration(s) may be for performing a reconfiguration with sync procedure. The candidate cell configuration(s) may be for a layer 1 and/or layer 2 (L1/L2)-based handover configuration for performing the reconfiguration with sync procedure. The one or more candidate cell configuration(s) may comprise an identifier. The wireless device 4225 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The wireless device 4225 may send to the source base station 4205, a RRC reconfiguration complete message 4235 (e.g., the RRC reconfiguration complete) based on receiving the one or more RRC messages comprising the candidate cell configuration(s). The wireless device 4225 may send to the source base station 4205, the RRC reconfiguration complete message 4235, based on the one or more RRC messages being received correctly.

A wireless device 4225 may receive from a source base station 4205, a measurement configuration (e.g., measurement object, reporting configuration, etc.). The wireless device 4225 may perform measurements based on the measurement configuration. The wireless device 4225 may measure serving cell and/or non-serving cells based on having the measurement configuration. The wireless device 4225 may send to the source base station 4205 a measurement report. The measurement report may be based on the measurements made on one or more serving cells and/or one or more non-serving cells.

A source base station 4205 may determine to do a handover of a wireless device 4225 from the source base station 4205 to a second target base station (e.g., Target base station), for example, based on the measurement report, etc. The second target base station may be same as the first target base station 4215. The second target base station may be different from the first target base station 4215. The source base station 4205 may send a handover request message (e.g., Handover Request for Conditional candidate target cell(s)) for a conditional reconfiguration target cell(s) to the second target base station. The source base station 4205 may send the handover request message, for example, based on (e.g. after or in response to) the source base station 4205 determining a handover decision to the second target base station based on a wireless device report (e.g. a wireless device measurement report). A handover of the handover decision may comprise a conditional reconfiguration based handover. The handover request message may be to request one or more conditional reconfiguration candidate cell configurations of candidate target cell(s) belonging to the second target base station. The source base station 4205 may receive, from the second target base station, a handover request acknowledge message (e.g., Handover Request Acknowledge with the conditional candidate cell configuration(s) of the conditional candidate target cell(s)), for example, based on sending (e.g., transmitting) the handover request message to the target base station. The handover request acknowledge message may be based on the handover request message. The handover request acknowledge message may comprise one or more conditional reconfiguration candidate cell configuration(s) of the candidate target cell(s)

A wireless device 4225 may receive one or more RRC messages. The one or more RRC messages may comprise a RRC reconfiguration message (e.g., RRC reconfiguration with conditional candidate target cell configuration).

The one or more RRC messages (e.g., the RRC reconfiguration message) may comprise a candidate cell configuration(s) of the candidate target cell(s). The candidate cell configuration(s) may be for performing a reconfiguration with sync procedure. The candidate cell configuration(s), for performing the reconfiguration with sync procedure, may be for a conditional reconfiguration based handover configuration. The one or more candidate cell configuration(s) may comprise an identifier. The wireless device 4225 may uniquely identify the configuration of the candidate target cell(s). The one or more candidate cell configuration(s) may comprise information required (e.g., RRC configuration of the candidate target cell(s) belonging first target base station) to access the candidate target cell during the reconfiguration with sync procedure. The one or more candidate cell configuration(s) may comprise an execution condition (e.g., to determine when to execute the conditional reconfiguration based handover). A wireless device 4225 may measure and/or determine to perform a conditional reconfiguration based handover based on the execution condition. The wireless device 4225 may send to the source base station 4205, a RRC reconfiguration complete message (e.g., the RRC reconfiguration complete) based on receiving the one or more RRC messages comprising the candidate cell configuration(s). The wireless device 4225 may send to the source base station 4205, the RRC reconfiguration complete message based on the one or more RRC messages being received correctly.

A wireless device 4225 may receive from a source base station 4205 a L1/L2 signaling to initiate a L1/L2 based handover (e.g., L1/L2 signal to initiate handover), for example, based on a wireless device 4225 report (e.g., a measurement report). The L1/L2 signaling may comprise DCI indication. The L1/L2 signaling may comprise a MAC CE. The L1/L2 signaling may comprise of a L1/L2 target cell. The L1/L2 target cell may be the target cell for handover of the wireless device 4225. The wireless device 4225 may execute a L1/L2 based handover, for example, based on receiving the L1/L2 signaling. The wireless device 4225 may execute a L1/L2 based handover to the L1/L2 target cell based on receiving L1/L2 signaling.

A wireless device 4225 may send a RRC message (i.e. RRC reconfiguration Complete) to a second target base station based on the L1/L2 based handover. The wireless device 4225 may determine to retain and/or release the conditional reconfiguration candidate cell configuration(s) of the candidate target cell(s) based on successful L1/L2 based handover completing. The wireless device 4225 may determine to remove the one or more conditional reconfiguration candidate cell configuration(s) of the candidate target cell(s) based on executing a L1/L2 based handover. The wireless device 4225 may determine to retain the one or more conditional reconfiguration candidate cell configuration(s) of the candidate target cell(s) based on executing a L1/L2 based handover.

A wireless device 4225 may have one or more L1/L2 candidate cell configuration(s) of the candidate target cell(s). The one or more L1/L2 candidate cell configuration(s) of the candidate target cell(s) may be associated with cell identifier(s) (e.g., PCI or physical cell identifier and/or downlink frequency). One L1/L2 candidate cell configuration of a candidate target cell may be associated with one cell identifier. The one or more conditional reconfiguration candidate cell configuration(s) of the candidate target cell(s). The one or more conditional reconfiguration candidate cell configuration(s) of the candidate target cell(s) may be associated with cell identifier(s) (e.g., PCI or physical cell identifier and/or downlink frequency). One conditional reconfiguration candidate cell configuration of a candidate target cell may be associated with one cell identifier.

A wireless device 4225 may determine to remove and/or retain the conditional reconfiguration candidate cell configuration(s) of the candidate target cell(s), based on the cell identifier of the target cell of L1/L2 based handover. The wireless device 4225 may determine to remove the one or more conditional reconfiguration candidate cell configuration(s) of the candidate target cell(s) based on the one or more conditional reconfiguration candidate cell configuration(s) of the candidate target cell(s) not having a conditional reconfiguration candidate cell configuration of a candidate target with the same cell identifier as L1/L2 target cell. The wireless device 4225 may determine to retain the one or more conditional reconfiguration candidate cell configuration(s) of the candidate target cell(s, based on the one or more conditional reconfiguration candidate cell configuration(s) of the candidate target cell(s) having a conditional reconfiguration candidate cell configuration of a candidate target with the same cell identifier as the L 1/L2 target cell.

A remove of one or more conditional reconfiguration candidate cell configuration(s) of the candidate target cell(s) may refer to a wireless device 4225 removing one or more cell configurations based on (e.g. after) a handover to a target cell. The wireless device 4225 may remove the one or more conditional reconfiguration candidate cell configuration(s) of the candidate target cell(s) based on (e.g. after) a handover to the second target base station successfully completing. The wireless device 4225 may retain the one or more conditional reconfiguration candidate cell configuration(s) of the candidate target cell(s) based on (e.g. after) a handover to the second target base station successfully completing. The handover to the second target base station may be based on the wireless device 4225 successfully completing random access to the second target base station.

A wireless device may receive one or more RRC messages. The one or more RRC messages may comprise one or more cell configurations of candidate target cells. The wireless device may receive a RRC reconfiguration message. The RRC reconfiguration message may comprise at least one of a first indicator that may indicate a handover to a target cell and a second indicator indicating to remove at least one of the one or more cell configurations based on the handover successfully completing. The wireless device may remove the at least one of the one or more cell configurations based on: the second indicator; and the handover to the target cell successfully completing.

A wireless device may receive one or more RRC messages. The one or more RRC messages may comprise one or more cell configurations of candidate target cells. The wireless device may receive a RRC reconfiguration message comprising a first indicator that may indicate a handover to a target cell; and a second indicator. The second indicator may indicate to retain or to remove, based on the handover to a target cell, at least one of the one or more cell configurations. A cell configuration of candidate target cell may be a configuration of candidate cells for layer 1 and/or layer 2 (L 1/12)-based handover. The handover to the target cell may be based on the one or more RRC messages comprising of reconfiguration with sync received by the wireless device.

A retaining of cell configurations may refer to a wireless device retaining one or more cell configurations based on a handover to a target cell. A removing of cell configurations may refer to a wireless device removing the one or more cell configurations based on the handover to a target cell.

A handover to a target cell may be successful upon successfully completing random access to the target cell. A cell configuration may be a configuration that a wireless device may use to access a target cell for L1/L2-based handover. A L 1 -L2-based handover may be executed only if a layer 1 or layer 2 signal may be received by a wireless device. The handover to a target cell may be executed if reconfiguration with sync may be received by a wireless device.

A wireless device may receive a first indicator and a second indicator. The first indicator may be one of a reconfiguration with sync received by the wireless device or a reconfiguration with sync due to executing a conditional reconfiguration. The second indicator may be one or more parameters. The second indicator may indicate to a wireless device that all the cell configurations of candidate target cells may be removed. The second indicator may be a plurality of parameters. The second indicator may indicate to a wireless device that one or more of the cell configurations of candidate target cells may be removed.

The L1/L2 based handover configuration of a candidate target cell may comprise an identifier to uniquely identify an L1/L2-based handover configuration. The L1/L2 based handover configuration of a candidate target cell may comprise a target cell configuration to be applied if a wireless device access the target cell. The wireless device may receive L1/L2 signaling. The wireless device may initiate a handover to a candidate target cell that may be included in the L1/L2 signaling based on the L1/L2 signaling. The L1/L2 signaling may be DCI, wherein L1/L2 signaling may be a MAC Control Element (CE).

A wireless device may receive one or more RRC messages. The one or more RRC messages may comprise one or more cell configurations of candidate target cells. The wireless device may receive a RRC reconfiguration message that may indicate a handover to a target cell. The wireless device may remove at least one of the one or more cell configurations based on the target cell not being one of the candidate target cells. A cell configuration of candidate target cell may be a configuration of candidate cells for layer 1 and/or layer 2 (L1/L2)-based handover.

A wireless device may receive a handover to a target cell. The handover to a target cell may be based on one of RRC message comprising reconfiguration with sync received by the wireless device or the one of RRC message comprising reconfiguration with sync due to execution of a conditional reconfiguration. Removing a cell configurations may refer to a wireless device removing one or more cell configurations based on a handover to a target cell. The handover to a target cell may be successful upon successfully completing random access to the target cell. The cell configuration may be a configuration that a wireless device may use to access the target cell for L1/L2-based handover. The L1-L2-based handover may be executed only if a layer 1 or layer 2 signal may be received by the wireless device. The handover to the target cell may be executed if reconfiguration with sync may be received by the wireless device. The handover to the target cell may be due to conditional handover being executed if the associated one more execution conditions are met. Removing may be performed if the target cell may be included in the RRC message comprising reconfiguration with sync may not be one of the one or more cell configurations. Removing may be performed on all of the one or more cell configurations. The wireless device may retain the one or more cell configurations on receiving the RRC message comprising reconfiguration with sync which may include the target cell that may be in the one or more cell configurations. A L1/L2 based handover configuration of a candidate target cell may comprise an identifier to uniquely identify the L1/L2-based handover configuration The L1/L2 based handover configuration of the candidate target cell may comprise of the target cell configuration to be applied if the wireless device access the target cell. The wireless device may receive L1/L2 signaling initiating a handover to a candidate target cell included in the L1/L2 signaling. The L1/L2 signaling may be DCI. The L1/L2 signaling may be a MAC CE.

A wireless device may receive one or more RRC messages. The one or more RRC messages may comprise one or more cell configurations of candidate target cells. The wireless device may receive a RRC reconfiguration message that may indicate a handover to a target cell. The wireless device may remove the at least one of the one or more cell configurations based on the target cell not being one of the candidate target cells A cell configuration of candidate target cell may be the configuration of candidate cells for conditional reconfiguration based handover. The handover to a target cell may be based on one of RRC messages comprising reconfiguration with sync received by the wireless device or the one of RRC messages comprising reconfiguration with sync due to execution of a L1/L2-based handover. Removing of cell configurations may refer to the wireless device removing one or more cell configurations based on a handover to a target cell. The handover to a target cell may be successful upon successfully completing random access to the target cell. The cell configuration may be a configuration that the wireless device may use to access the target cell for the conditional reconfiguration based handover. The conditional reconfiguration based handover may be executed only if one more execution conditions are met. The handover to the target cell may be executed if reconfiguration with sync may be received by the wireless device. The handover to the target cell may be due to the L1/L2-based handover being executed if the wireless device receives the L1/L2 based signal that triggers the handover. Removing may be performed if the target cell included in the RRC message comprising reconfiguration with sync may not be one of the one or more cell configurations. Removing may be performed on all of one or more cell configurations. The wireless device may retain one or more cell configurations on receiving the RRC message comprising reconfiguration with sync may include the target cell that may be in the one or more cell configurations. A conditional reconfiguration configuration of a candidate target cell may comprise an identifier to uniquely identify the conditional reconfiguration configuration. The conditional reconfiguration configuration of a candidate target cell may comprise the one or more execution conditions that may be fulfilled in order to trigger the execution of the conditional reconfiguration. The conditional reconfiguration configuration of the candidate target cell may comprise the target cell configuration to be applied if the one or more execution condition are fulfilled. The conditional reconfiguration configuration may be for a conditional handover. The conditional reconfiguration configuration may be for a conditional PSCell change. The conditional reconfiguration configuration may be for a conditional PSCell addition.

A first base station may send a first message to a second base station. The first message may comprise a first indicator. The first indicator may indicate a presence of one of more cell configurations of candidate target cells on a wireless device. The first base station may receive a second message from a second base station. The second message may comprise a second indicator. The second indicator may indicate to retain and/or release one or more cell configurations of candidate target cell on the wireless device. The first base station may send a RRC message to the wireless device. The RRC message may comprise the second indicator. The first base station may be a source base station for handover. The second base station may be a target base station for handover. The wireless device may be a device that has to handover from the source base station to the target base station. The source base station and the target base station may belong to one of a same base station or a different base station. The first message may be a handover request message from the source base station to a target base station, for the handover of the wireless device from the source base station to the target base station. The presence may indicate that the wireless device may include the one or more cell configurations of candidate target cells. The first indicator may be a one or more parameters. The one or more cell configurations may be a conditional reconfiguration configuration. The one or more cell configurations may be a L 1/L2-based handover configuration. The second message may be a handover request acknowledge message from the target base station to the source base station. The second indicator may indicate to the source base station to retain and/or remove one or more cell configurations. Retaining one or more cell configurations may refer to the target base station and the wireless device retaining the one or more cell configurations based on the handover to the target cell. Removing the one or more cell configurations may refer to the target base station and the wireless device retaining the one or more cell configurations based on the handover to the target cell. The second indicator may be a single parameter. The second indicator may indicate that the target base station and the wireless device may retain all of the one or more cell configurations. The second indicator may be more than one parameter. The second indicator may indicate that the target base station and wireless device may retain one or more cell configurations included in the second indicator. The second indicator may be a single parameter. The second indicator may that the target base station and the wireless device may remove all of one or more cell configurations. The second indicator may be more than one parameter. The second indicator may indicate that the target base station and the wireless device may remove the one or more cell configurations that may be included in the second indicator. The first base station may send the RRC message to the wireless device. The RRC message may comprise the target cell for handover of the wireless device. The RRC message may comprise the reconfiguration with sync. The RRC message may comprise the second indicator.

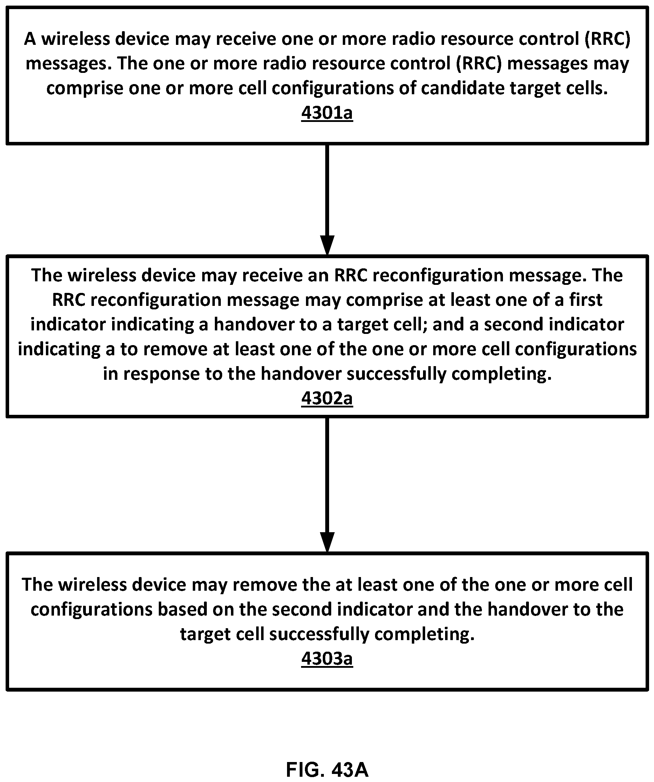

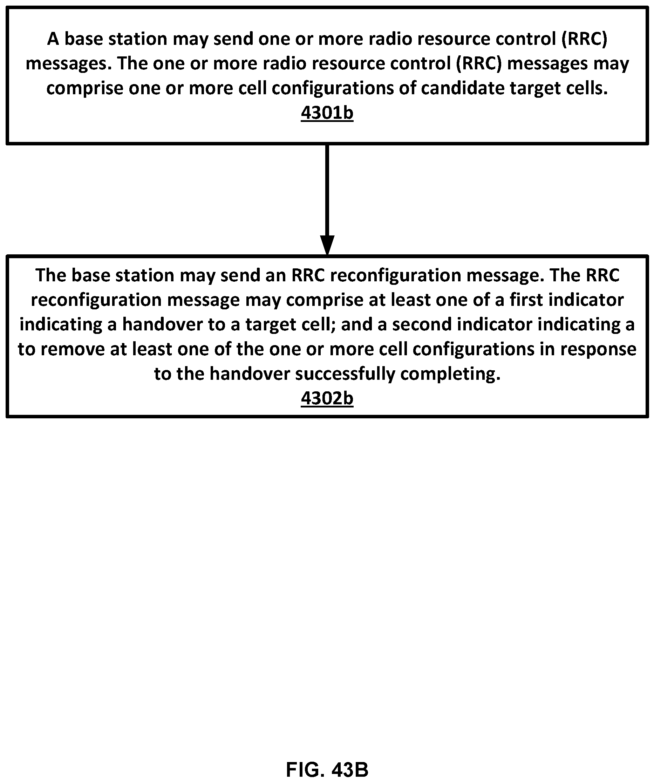

FIG. 43A and FIG. 43B show an example of a handover and configuration removal. At 4301b a base station may send one or more RRC messages. At 4301a, a wireless device may receive the one or more RRC messages. The one or more RRC messages may comprise one or more cell configurations of candidate target cells At 4301b the base station may send an RRC reconfiguration message. At 4302a, the wireless device may receive the RRC reconfiguration message. The RRC reconfiguration message may comprise at least one of a first indicator that may indicate a handover to a target cell and a second indicator that may indicate to remove at least one of the one or more cell configurations based on the handover successfully completing. At 4303a, the wireless device may remove the at least one of the one or more cell configurations based on the second indicator and the handover to the target cell successfully completing.

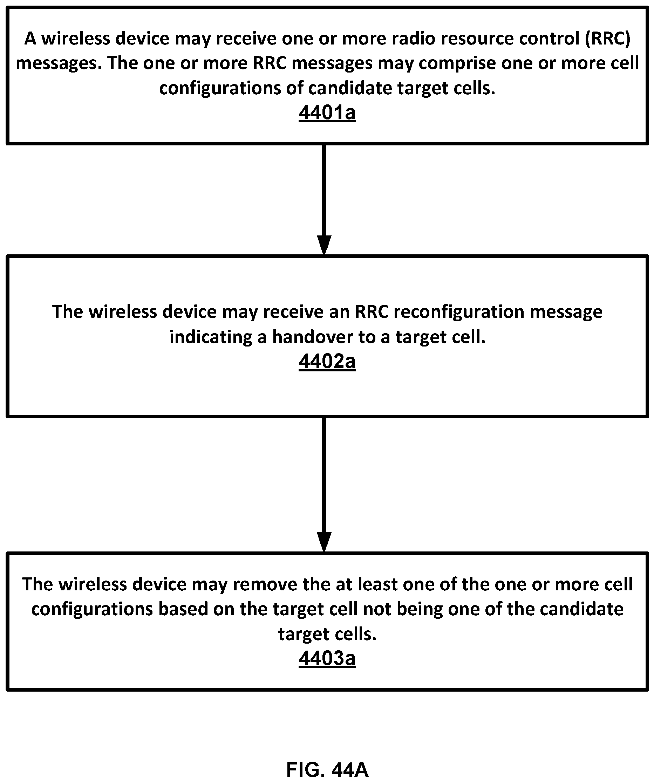

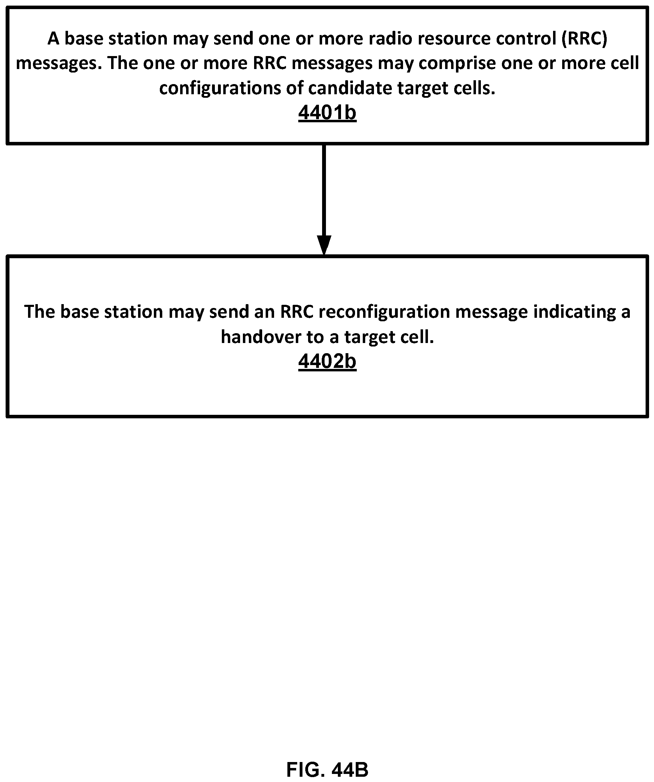

FIG. 44A and FIG. 44B shows an example of a handover and configuration removal. At 4401b, a base station may send one or more RRC messages. At 4401a, a wireless device may receive the one or more RRC messages. The one or more RRC messages may comprise one or more cell configurations of candidate target cells At 4402b, a base station may send a RRC reconfiguration message that may indicate a handover to a target cell. At 4402a, the wireless device may receive the RRC reconfiguration message that may indicate a handover to a target cell. At 4403a, the wireless device may remove the at least one of the one or more cell configurations based on the target cell not being one of the candidate target cells.

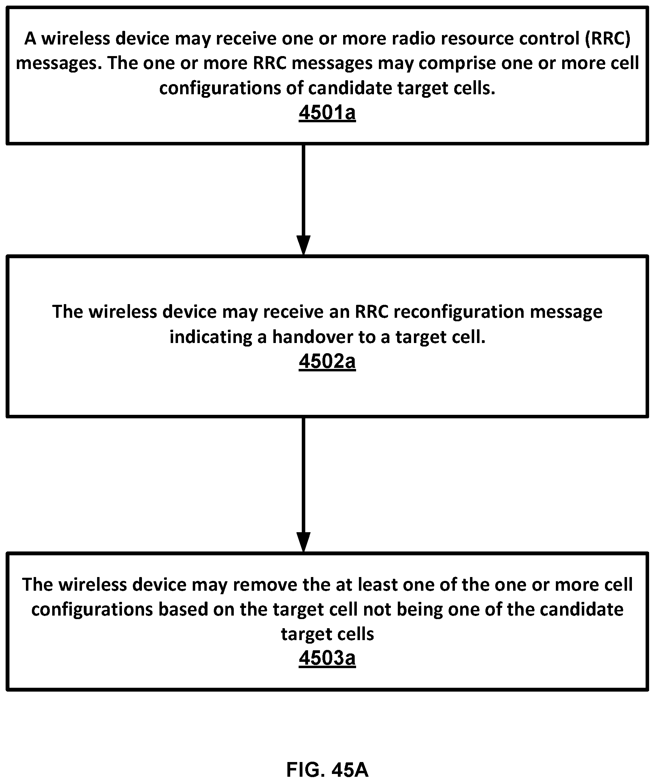

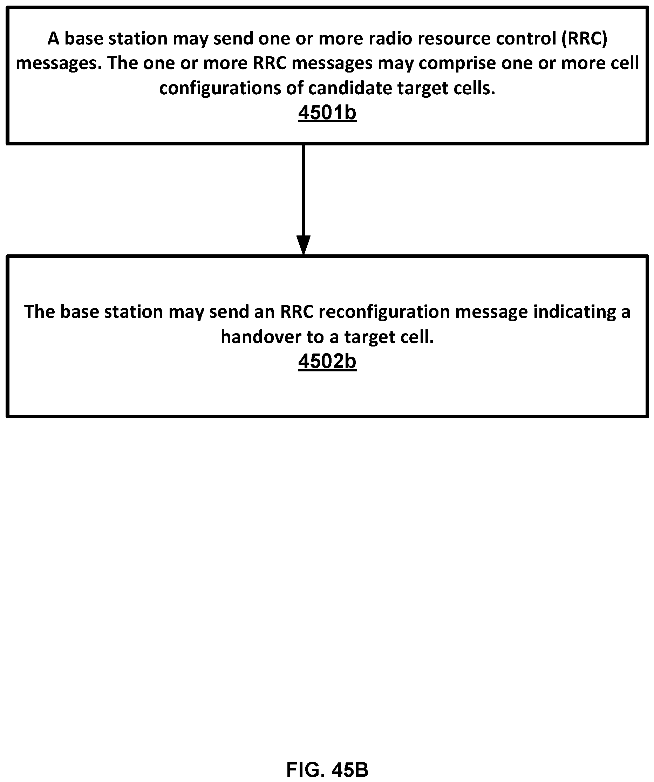

FIG. 45A and FIG. 45B shows an example of a handover and configuration removal. At 4501b a base station may send one or more RRC messages. At 4501a, a wireless device may receive the one or more RRC messages. The one or more RRC messages may comprise one or more cell configurations of candidate target cells At 4502b a base station may send a RRC reconfiguration message that may indicate a handover to a target cell. At 4502a, the wireless device may receive a RRC reconfiguration message that may indicate a handover to a target cell. At 4503a, the wireless device may remove the at least one of the one or more cell configurations based on the target cell not being one of the candidate target cells.

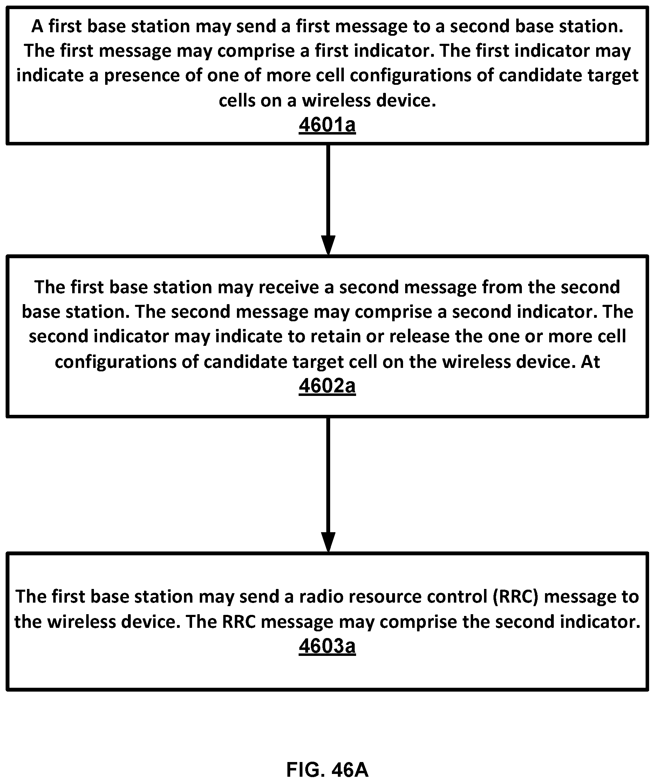

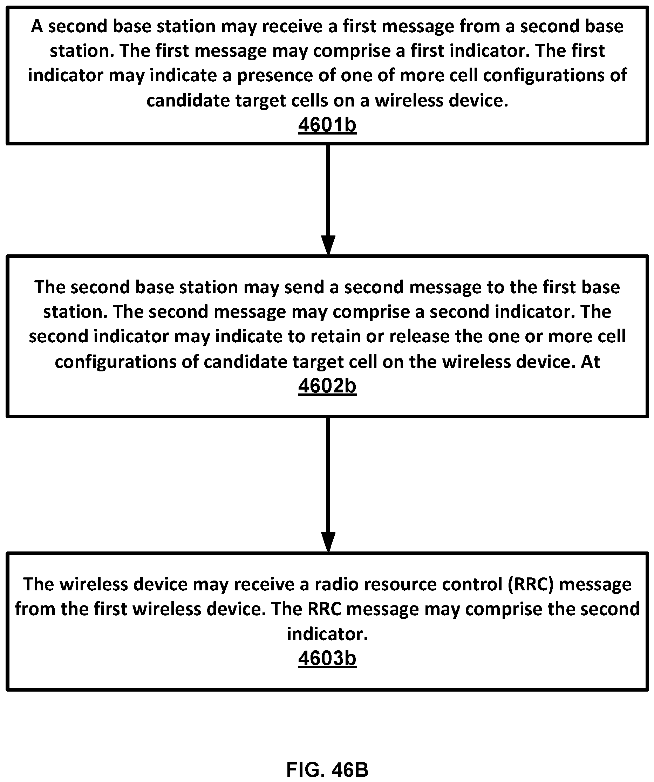

FIG. 46A and FIG. 46B shows an example of sharing configuration retain or release. At 4601a, a first base station may send a first message to a second base station. At 4601b, the second base station may receive the first message from the first base station. The first message may comprise a first indicator. The first indicator may indicate a presence of one of more cell configurations of candidate target cells on a wireless device. At 4602b, the second base station may send a second message to the first base station. At 4602a, the first base station may receive a second message from the second base station. The second message may comprise a second indicator. The second indicator may indicate to retain and/or release the one or more cell configurations of candidate target cell on the wireless device. At 4603a, the first base station may send a RRC message to the wireless device. At 4603b, the wireless device may receive the RRC message from the first base station. The RRC message may comprise the second indicator.

A wireless device may perform a method comprising multiple operations. The wireless device may receive one or more radio resource control (RRC) messages comprising one or more configurations of candidate target cells associated with a layer 1 and/or layer 2 (L1/L2)-based handover. The wireless device may receive at least one RRC reconfiguration message comprising: a first indicator indicating a handover to a target cell; and a second indicator indicating whether to remove at least one configuration of the one or more configurations after successfully completing the handover. After successfully completing the handover to the target cell and based on the second indicator, the wireless device may remove the at least one configuration of configurations. After successfully completing the handover to the target cell and based on the second indicator indicating to retain at least one second configuration of the one or more configurations, the wireless device may retain the at least one second configuration. The wireless device may initiate, based on the at least one RRC reconfiguration message and the first indicator, the handover to the target cell. The first indicator may comprise at least one of a reconfiguration with sync message, or a reconfiguration with sync indication based on execution of a conditional reconfiguration. The wireless device may communicate, based on the one or more configurations, with one of the candidate target cells associated with the L1/L2-based handover. The one or more configurations of candidate target cells may comprise an identifier to uniquely identify a L1/L2-based handover configuration. The one or more configuration of candidate target cells may comprise a target configuration to be applied for the wireless device communicating with the target cell. The second indicator may comprise one or more parameters indicating: all the configurations of candidate target cells to be removed, or more than zero, but less than all, configurations of the one or more configurations of candidate target cells to be removed. The wireless device may complete the handover successfully based on successfully completing a random access procedure on the target cell. The wireless device may receive L1/L2 signaling initiating the handover to the candidate target cell included in the L1/L2 signaling. The wireless device may initiate, based on receiving a L1/L2 signaling, the L1/L2-based handover. The L1/L2 signaling may comprise one of: a downlink control information (DCI); or a medium access control (MAC) Control Element (CE). A wireless device comprising: one or more processors; and memory storing instructions that, when executed by the one or more processors, cause the wireless device to perform the described method, additional operations and/or include the additional elements. A system comprising: a wireless device configured to perform the described method, additional operations and/or include the additional elements; and a first base station configured to send, to a second base station, a first message comprising a third indicator indicating a presence of one or more cell configurations of candidate target cells on the wireless device. A computer-readable medium storing instructions that, when executed, cause performance of the described method, additional operations and/or include the additional elements

A wireless device may perform a method comprising multiple operations. The wireless device may receive one or more radio resource control (RRC) messages comprising one or more configurations of candidate target cells for layer 1 and/or layer 2 (L1/L2)-based handover. The wireless device may receive at least one RRC reconfiguration message comprising: a first indicator indicating a handover to a target cell and a second indicator indicating whether to retain or to remove, after successfully completing the handover, at least one configuration of the one or more configurations. After successful completing the handover to the target cell and based on the indicator, the wireless device may retain the at least one configuration. After successfully completing the handover to the target cell and based on the second indicator indicating to remove the one or more configurations, the wireless device may remove at least one configuration of the at least one of the one or more configurations. The wireless device may initiate the L1/L2-based handover from a source base station to a target base station. The wireless device may comprise: one or more processors; and memory storing instructions that, when executed by the one or more processors, cause the wireless device to perform the described method, additional operations and/or include the additional elements. A system comprising: a wireless device configured to perform the described method, additional operations and/or include the additional elements; and a first base station configured to send, to a second base station, a handover request message. A computer-readable medium storing instructions that, when executed, cause performance of the described method, additional operations and/or include the additional elements.

A first base station may perform a method comprising multiple operations. The first base station may send, to a second base station, a first message comprising a first indicator indicating a presence of one or more cell configurations of candidate target cells associated with a wireless device. The first base station may receive, from the second base station, a second message comprising a second indicator indicating to retain or remove of the one or more cell configurations of candidate target cells associated with the wireless device. The first base station may send, based on the second message and to the wireless device, at least one radio resource control (RRC) message comprising the second indicator. The first base station may send one or more radio resource control (RRC) messages comprising the one or more configurations of candidate target cells associated with a layer 1 and/or layer 2 (L 1/L2)-based handover, wherein the at least one radio resource control (RRC) reconfiguration message further comprises a third indicator indicating the handover to the second base station. The first indicator may comprise one or more parameters; and the second indicator may indicate to the first base station whether to retain or remove the one or more cell configurations. The first base station may be a source base station associated with a layer 1 and/or layer 2 (L 1/L2)-based handover. The second base station may be a target base station associated with the L1/L2-based handover. The first base station may perform the L1/L2-based handover. The first message may comprise a handover request message from the source base station to the target base station associated with a handover of the wireless device from the source base station to the target base station. The presence indicates the one or more cell configurations of candidate target cells on the wireless device. The second indicator may comprise a plurality of parameters indicating a plurality of cell configurations of candidate target cells to be removed on the wireless device. The at least one RRC message from the source base station to the wireless device may comprise a target cell for handover of the wireless device and a reconfiguration with sync. The one or more cell configurations may comprise at least one of a conditional reconfiguration configuration, or a L 1/L2-based handover configuration. The second message may be a handover request acknowledge message from the second base station to the first base station. The retain of the one or more cell configurations may refer to the second base station and the wireless device may retain the one or more cell configurations after the L 1/L2-based handover to a target cell. The remove of the one or more cell configurations may refer to the second base station and the wireless device may remove the one or more cell configurations after the handover to a target cell. The second indicator may comprise a single parameter indicating that: the second base station and the wireless device may retain all of the one or more cell configurations, or the second base station and the wireless device may remove all of the one or more cell configurations. The second indicator may comprise two or more parameters indicating that the second base station and the wireless device may retain the one or more cell configurations included in the second indicator, or the second base station and the wireless device may remove the one or more cell configurations included in the second indicator. The first base may send L1/L2 signaling initiating the handover to an indicated candidate target cell, wherein the L 1/L2 signaling comprises at least one of: a downlink control information (DCI); or a medium access control (MAC) control element (CE). A first base station may comprise: one or more processors; and memory storing instructions that, when executed by the one or more processors, cause the first base station to perform the described method, additional operations and/or include the additional elements. A system may comprise: a first base station configured to perform the described method, additional operations and/or include the additional elements; and a wireless device configured to receive, from the first base station, at least one radio resource control (RRC) message comprising the second indicator. A computer-readable medium storing instructions that, when executed, cause performance of the described method, additional operations and/or include the additional elements.

A wireless device may perform a method comprising multiple operations. The wireless device may receive one or more radio resource control (RRC) messages comprising one or more cell configurations of candidate target cells. The wireless device may receive an RRC reconfiguration message indicating a handover to a target cell. The wireless device may remove the at least one of the one or more cell configurations based on the target cell not being one of the candidate target cells. The cell configuration of candidate target cell may comprise at least one of the configuration of candidate cells associated with a layer 1 and/or layer 2 (L 1/L2)-based handover or the configuration of candidate cells associated with a conditional reconfiguration based handover. The handover to a target cell is based one of an RRC message comprising reconfiguration with sync received by the wireless device, an RRC message comprising reconfiguration with sync due to execution of a conditional reconfiguration, or an RRC message comprising reconfiguration with sync due to execution of a L1/L2-based handover. The remove of cell configurations may refer to the wireless device removing the one or more cell configurations, after the handover to a target cell. A L1/L2-based handover to a target cell may be successful based on successfully completing random access to the target cell. The cell configuration may comprise at least one of the configuration that the wireless device uses to access the target cell for the L 1/L2-based handover, or the configuration that the wireless device uses to access the target cell for conditional reconfiguration based handover. The L 1/L2-based handover may be initiated based on a layer 1 or layer 2 signal received by the wireless device. The conditional reconfiguration based handover may be initiated if one more execution conditions are met. The L 1/L2-based handover to a target cell may be executed based on reconfiguration with sync received by the wireless device. The handover to a target cell may be due to conditional handover being executed if the associated one more execution conditions are met. The handover to a target cell may be due to L 1/L2-based handover being initiated if the wireless device receives the L 1/L2 based signal that triggers the handover. The removing may be performed if the target cell included in the RRC message comprising reconfiguration with sync may not be one of the one or more cell configurations. The removing may be performed on all of the one or more cell configurations. The wireless device may retain the one or more cell configurations on receiving the RRC message comprising reconfiguration with sync may include a target cell that may be in the one or more cell configurations. The L1/L2 based Handover configuration of a candidate target cell may comprise an identifier to uniquely identify an L 1/L2-based handover configuration. The L1/L2 based Handover configuration of a candidate target cell may comprise the target cell configuration to be applied if the wireless device access the target cell. The conditional reconfiguration configuration of a candidate target cell may comprise: an identifier to uniquely identify a conditional reconfiguration configuration, a one or more execution condition that needs to be fulfilled in order to trigger the execution of the conditional reconfiguration and the target cell configuration to be applied if the one or more execution condition are fulfilled. The wireless device may receive L1/L2 signaling to initiate the handover to the candidate target cell included in the L1/L2 signaling. The L1/L2 signaling may be at least one of a Downlink Control Information (DCI) or MAC Control Element (CE). The conditional reconfiguration configuration may be associated with at least one of a conditional handover, a conditional PSCell change, or a conditional PSCell addition.

A wireless device may comprise: one or more processors; and memory storing instructions that, when executed by the one or more processors, cause the wireless device to perform the described method, additional operations and/or include the additional elements. A system may comprise: a wireless device configured to perform the described method, additional operations and/or include the additional elements; and a first base station configured to send, to a second base station, a handover request associated with a target cell. A computer-readable medium storing instructions that, when executed, cause performance of the described method, additional operations and/or include the additional elements.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device, one or more radio resource control (RRC) messages comprising one or more configurations of candidate target cells associated with a layer 1 and/or layer 2 (L1/L2)-based handover; receiving at least one RRC reconfiguration message comprising: a first indicator indicating a handover to a target cell; and a second indicator indicating whether to remove at least one configuration of the one or more configurations after successfully completing the handover; and after successfully completing the handover to the target cell and based on the second indicator, removing at least one configuration of the one or more configurations.

Clause 2. The method of clause 1, further comprising: after successfully completing the handover to the target cell and based on the second indicator indicating to retain at least one second configuration of the one or more configurations, retaining the at least one second configuration.

Clause 3. The method of any one of clauses 1-2, further comprising: initiating, based on the at least one RRC reconfiguration message and the first indicator, the handover to the target cell.

Clause 4. The method of any one of clauses 1-3, wherein the first indicator comprises at least one of: a reconfiguration with sync message, or a reconfiguration with sync indication based on execution of a conditional reconfiguration.

Clause 5. The method of any one of clauses 1-4, further comprising: communicating, based on the one or more configurations, with one of the candidate target cells associated with the L1/L2-based handover.

Clause 6. The method of any one of clauses 1-5, wherein the one or more configurations of candidate target cells comprises an identifier to uniquely identify a L1/L2-based handover configuration.

Clause 7. The method of any one of clauses 1-6, wherein the one or more configuration of candidate target cells comprises a target configuration to be applied for the wireless device for communicating with the target cell.

Clause 8. The method of any one of clauses 1-7, wherein the second indicator comprises one or more parameters indicating: all configurations of the one or more configurations of candidate target cells are to be removed; or more than zero, but less than all, configurations of the one or more configurations of candidate target cells are to be removed.

Clause 9. The method of any one of clauses 1-8, further comprising: successfully completing the handover is based on successfully completing a random access procedure on the target cell.

Clause 10. The method of any one of clauses 1-9, further comprising: receiving L1/L2 signaling initiating the handover to an indicated candidate target cell.

Clause 11. The method of any one of clauses 1-10, further comprising initiating, based on receiving a L1/L2 signaling, the L1/L2-based handover.

Clause 12. The method of any one of clauses 10-11, wherein the L1/L2 signaling comprises at least one of: a downlink control information (DCI); or a medium access control (MAC) control element (CE).

Clause 13. A computing device comprising: one or more processors; and memory storing instructions that, when executed by the one or more processors, cause the computing device to perform: the method of any one of clauses 1-12.

Clause 14. A system comprising: a wireless device configured to perform the method of any one of clauses 1-12; and a first base station configured to send, to a second base station, a first message comprising a third indicator indicating a presence of one or more cell configurations of candidate target cells associated with the wireless device.

Clause 15. A computer-readable medium storing instructions that, when executed, cause performance of the method of any one of clauses 1-12.

Clause 16. A method comprising: receiving, by a wireless device, one or more radio resource control (RRC) messages comprising one or more configurations of candidate target cells for layer 1 and/or layer 2 (L1/L2)-based handover; receiving at least one RRC reconfiguration message comprising: a first indicator indicating a handover to a target base station; and a second indicator indicating whether to retain or to remove, at least one configuration of the one or more configurations after a successful completion of the handover; and after successful completing the handover to the target cell and based on the indicator, retaining the at least one configuration.

Clause 17. The method of clause 16, further comprising: after successfully completing the handover to the target cell and based on the second indicator indicating to remove at least one second configuration of the one or more configurations, removing the at least one second configuration.

Clause 18. The method of any one of clauses 16-17, further comprises: initiating the L1/L2-based handover, by the wireless device, from a source base station to the target base station.

Clause 19. A computing device comprising: one or more processors; and memory storing instructions that, when executed by the one or more processors, cause the computing device to perform the method of any one of clauses 16-18.

Clause 20. A system comprising: a wireless device configured to perform the method of any one of clauses 16-18; and a first base station configured to send, to a second base station, a handover request message.

Clause 21. A computer-readable medium storing instructions that, when executed, cause performance of the method of any one of clauses 16-18.

Clause 22. A method comprising: sending, by a first base station to a second base station, a first message comprising a first indicator indicating a presence of one or more cell configurations of candidate target cells associated with a wireless device; receiving, by the first base station from the second base station, a second message comprising a second indicator indicating to retain or remove the one or more cell configurations of candidate target cells associated with the wireless device; and sending, based on the second message and by the first base station to the wireless device, at least one radio resource control (RRC) reconfiguration message comprising the second indicator.

Clause 23. The method of clauses 22, further comprising: sending, by the first base station, one or more radio resource control (RRC) messages comprising the one or more configurations of candidate target cells associated with a layer 1 and/or layer 2 (L1/L2)-based handover; and wherein the at least one radio resource control (RRC) reconfiguration message further comprises a third indicator indicating the handover to the second base station.

Clause 24. The method of any one of clauses 22-23, wherein: the first indicator comprises one or more parameters; and the second indicator indicates to the first base station whether to retain or remove the one or more cell configurations.

Clause 25. The method of any one of clauses 22-24, wherein the first base station is a source base station associated with a layer 1 and/or layer 2 (L1/L2)-based handover; the second base station is a target base station associated with the L1/L2-based handover; and the method further comprises: performing, by the first base station, the L1/L2-based handover.

Clause 26. The method of any one of clauses 22-25, wherein the first message comprises a handover request message from the source base station to the target base station associated with a handover of the wireless device from the source base station to the target base station.

Clause 27. The method of any one of clauses 22-26, wherein the presence indicates the one or more cell configurations of candidate target cells associated with the wireless device.

Clause 28. The method of any one of clauses 22-27, wherein the second indicator comprises a plurality of parameters indicating a plurality of cell configurations of candidate target cells to be removed associated with the wireless device.

Clause 29. The method of any one of clauses 22-28, wherein the at least one RRC message from the source base station to the wireless device comprises: a target cell for handover of the wireless device; and a reconfiguration with sync.

Clause 30. The method of any one of clauses 22-29, wherein the one or more cell configurations comprise at least one of a conditional reconfiguration configuration, or a L1/L2-based handover configuration.

Clause 31. The method of any one of clauses 22-30, wherein the second message is a handover request acknowledge message from the second base station to the first base station.

Clause 32. The method of any one of clauses 22-31, wherein: the retain of the one or more cell configurations refer to the second base station and the wireless device retaining the one or more cell configurations after the L1/L2-based handover to a target cell; and the remove of the one or more cell configurations refer to the second base station and the wireless device removing the one or more cell configurations after the handover to a target cell.

Clause 33. The method of any one of clauses 22-32, wherein the second indicator comprises a single parameter indicating that: the second base station and the wireless device retain all of the one or more cell configurations; or the second base station and the wireless device remove all of the one or more cell configurations.

Clause 34. The method of any one of clauses 22-33, wherein the second indicator comprises two or more parameters indicating that: the second base station and the wireless device retain the one or more cell configurations included in the second indicator; or the second base station and the wireless device remove the one or more cell configurations included in the second indicator.

Clause 35. The method of any one of clauses 22-34, further comprising: sending L1/L2 signaling initiating the handover to an indicated candidate target cell, wherein the L1/L2 signaling comprises at least one of: a downlink control information (DCI); or a medium access control (MAC) control element (CE).

Clause 36. A computing device comprising: one or more processors; and memory storing instructions that, when executed by the one or more processors, cause the computing device to perform the method of any one of clauses 22-35.

Clause 37. A system comprising: a first base station configured to perform the method of any one of clauses 22-35; and a wireless device configured to receive, from the first base station, at least one radio resource control (RRC) message comprising the second indicator.

Clause 38. A computer-readable medium storing instructions that, when executed, cause performance of the method of any one of clauses 22-35.

Clause 39. A method comprising: receiving, by a wireless device, one or more radio resource control (RRC) messages comprising one or more cell configurations of candidate target cells; receiving an RRC reconfiguration message indicating a handover to a target cell; and removing the at least one of the one or more cell configurations based on the target cell not being one of the candidate target cells.

Clause 40. The method of clauses 39, wherein the cell configuration of candidate target cell comprises at least one of the configuration of candidate cells associated with a layer 1 and/or layer 2 (L1/L2)-based handover or the configuration of candidate cells associated with a conditional reconfiguration based handover.

Clause 41. The method of any one of clauses 39-40, wherein the handover to a target cell is based one of an RRC message comprising reconfiguration with sync received by the wireless device, an RRC message comprising reconfiguration with sync due to execution of a conditional reconfiguration, or an RRC message comprising reconfiguration with sync due to execution of a L1/L2-based handover.

Clause 42. The method of any one of clauses 39-41, wherein the remove of cell configurations refer to the wireless device removing the one or more cell configurations, after the handover to a target cell.

Clause 43. The method of any one of clauses 39-42, wherein a L1/L2-based handover to a target cell is successful based on successfully completing random access to the target cell.

Clause 44. The method of any one of clauses 39-43, wherein the cell configuration comprises at least one of the configuration that the wireless device uses to access the target cell for the L1/L2-based handover, or the configuration that the wireless device uses to access the target cell for conditional reconfiguration based handover.

Clause 45. The method of any one of clauses 39-44, wherein the L1/L2-based handover is initiated based on a layer 1 or layer 2 signal received by the wireless device.

Clause 46. The method of any one of clauses 39-45, wherein the conditional reconfiguration based handover is initiated if one more execution conditions are met.

Clause 47. The method of any one of clauses 39-46, wherein the L1/L2-based handover to a target cell is executed based on reconfiguration with sync received by the wireless device.

Clause 48. The method of any one of clauses 39-47, wherein the handover to a target cell is due to conditional handover being executed if the associated one more execution conditions are met.

Clause 49. The method of any one of clauses 39-48, wherein the handover to a target cell is due to L1/L2-based handover being initiated if the wireless device receives the L1/L2 based signal that triggers the handover.

Clause 50. The method of any one of clauses 39-49, wherein the removing is performed if the target cell included in the RRC message comprising reconfiguration with sync is not one of the one or more cell configurations.

Clause 51. The method of any one of clauses 39-50, wherein the removing is performed on all of the one or more cell configurations.

Clause 52. The method of any one of clauses 39-51, wherein the wireless device retains the one or more cell configurations on receiving the RRC message comprising reconfiguration with sync includes a target cell that is in the one or more cell configurations.

Clause 53. The method of any one of clauses 39-52, wherein the L1/L2 based Handover configuration of a candidate target cell comprises an identifier to uniquely identify an L1/L2-based handover configuration.

Clause 54. The method of any one of clauses 39-53, wherein the L1/L2 based Handover configuration of a candidate target cell comprises the target cell configuration to be applied if the wireless device access the target cell.

Clause 55. The method of any one of clauses 39-54, wherein the conditional reconfiguration configuration of a candidate target cell comprises: an identifier to uniquely identify a conditional reconfiguration configuration; a one or more execution condition that needs to be fulfilled in order to trigger the execution of the conditional reconfiguration; and the target cell configuration to be applied if the one or more execution condition are fulfilled.

Clause 56. The method of any one of clauses 39-55, further comprising receiving L1/L2 signaling initiating the handover to the candidate target cell included in the L1/L2 signaling.

Clause 57. The method of any one of clauses 39-56, wherein the L1/L2 signaling is at least one of a Downlink Control Information (DCI) or MAC Control Element (CE).

Clause 58. The method of any one of clauses 39-57, wherein the conditional reconfiguration configuration is associated with at least one of a conditional handover, a conditional PSCell change, or a conditional PSCell addition.

Clause 58. A computing device comprising: one or more processors; and memory storing instructions that, when executed by the one or more processors, cause the computing device to perform: the method of any one of clauses 39-58.

Clause 59. A system comprising: a wireless device configured to perform the method of any one of clauses 39-58; and a first base station configured to send, to a second base station, a handover request associated with a target cell.

Clause 60. A computer-readable medium storing instructions that, when executed, cause performance of: the method of any one of clauses 39-58.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

**1.** A method comprising:

receiving, by a wireless device, one or more radio resource control (RRC) messages comprising one or more configurations of candidate target cells associated with a layer 1 and/or layer 2 (L1/L2)-based handover;
receiving at least one RRC reconfiguration message comprising:

a first indicator indicating a handover to a target cell; and
a second indicator indicating whether to remove at least one configuration of the one or more configurations after successfully completing the handover; and

after successfully completing the handover to the target cell and based on the second indicator, removing the at least one configuration.

**2.** The method of claim 1, further comprising:
after successfully completing the handover to the target cell and based on the second indicator indicating to retain at least one second configuration of the one or more configurations, retaining the at least one second configuration.

**3.** The method of any one of claims 1-2, further comprising:
initiating, based on the at least one RRC reconfiguration message and the first indicator, the handover to the target cell.

**4.** The method of claim any one of claims 1-3, wherein the first indicator comprises at least one of:

a reconfiguration with sync message, or
a reconfiguration with sync indication based on execution of a conditional reconfiguration.

5. The method of any one of claims 1-4, further comprising:
communicating, based on the one or more configurations, with one of the candidate target cells associated with the L1/L2-based handover.

6. The method of claim any one of claims 1-5, wherein the one or more configurations of candidate target cells comprises an identifier to uniquely identify a L1/L2-based handover configuration.

7. The method of any one of claims 1-6, wherein the one or more configuration of candidate target cells comprises a target configuration to be applied for the wireless device for communicating with the target cell.

8. The method of any one of claims 1-7, wherein the second indicator comprises one or more parameters indicating:

all configurations of the one or more configurations of candidate target cells to be removed; or
more than zero, but less than all, configurations of the one or more configurations of candidate target cells to be removed.

9. The method of any one of claims 1-8, further comprising:
successfully completing the handover is based on successfully completing a random access procedure on the target cell.

10. The method of any one of claims 1-9, further comprising:
receiving L1/L2 signaling initiating the handover to an indicated candidate target cell.

11. The method of any one of claims 1-10, further comprising initiating, based on receiving a L1/L2 signaling, the L1/L2-based handover.

12. The method of any one of claims 10-11, wherein the L1/L2 signaling comprises at least one of:

downlink control information (DCI); or
a medium access control (MAC) control element (CE).

13. A computing device comprising: one or more processors; and memory storing instructions that, when executed by the one or more processors, cause the computing device to perform:
the method of any one of claims 1-12.

14. A system comprising:

a wireless device configured to perform the method of any one of claims 1-12; and
a first base station configured to send, to a second base station, a first message comprising a third indicator indicating a presence of one or more cell configurations of candidate target cells on the wireless device;

15. A computer-readable medium storing instructions that, when executed, cause performance of the method of any one of claims 1-12.

**FIG. 1A**

**FIG. 1B**

EP 4 346 282 A1

Wireless Device 210

| | Base Station 220 |
|---|---|
| SDAP 215 | SDAP 225 |
| PDCP 214 | PDCP 224 |
| RLC 213 | RLC 223 |
| MAC 212 | MAC 222 |
| PHY 211 | PHY 221 |

**FIG. 2A**

Wireless Device 210

Base Station 220

AMF 230

| | | |
|---|---|---|
| NAS 217 | | NAS 237 |
| RRC 216 | RRC 226 | |
| PDCP 214 | PDCP 224 | |
| RLC 213 | RLC 223 | |
| MAC 212 | MAC 222 | |
| PHY 211 | PHY 221 | |

**FIG. 2B**

**IP Packets**

SDAP 215/225

QoS Flow Handling

QoS Flows

Radio Bearers

PDCP 214/224

Header Comp., Ciphering

Header Comp., Ciphering

Reordering, Retransmission

Reordering, Retransmission

RLC Channels

RLC 213/223

Segmentation, ARQ

Segmentation, ARQ

Logical Channels

MAC 212/222

Multiplexing

HARQ

Transport Channel

PHY 211/221

Coding, Resource Mapping

**FIG. 3**

| IP Packet | IP Packet | IP Packet |
|:---:|:---:|:---:|
| *n* | *n+1* | *m* |

SDAP
225

radio bearer **402** | H | SDAP SDU | H | SDAP SDU | radio bearer **404** | H | SDAP SDU

PDCP
224

SDAP PDU

| H | PDCP SDU | | H | PDCP SDU | | H | PDCP SDU |

RLC
223

| H | RLC SDU | | H | RLC SDU | | H | SDU Seg. | | H | SDU Seg. |

MAC
222

| H | MAC SDU | H | MAC SDU | H | MAC SDU | | H | MAC SDU |

PHY
221

| PHY SDU (Transport Block) | PHY SDU |

**FIG. 4A**

| R | F | LCID | SDU Length |

| H | MAC CE | H | MAC CE | H | MAC SDU | H | MAC SDU |

MAC PDU

**FIG. 4B**

Logical
Channels

PCCH BCCH CCCH DCCH DTCH

CCCH DCCH DTCH

Transport
Channels

PCH BCH DL-SCH

UL-SCH RACH

DCI

UCI

Physical
Channels

PBCH PDSCH PDCCH

PUSCH PUCCH PRACH

Physical
Signals

PSS/
SSS
CSI-RS DM-RS PT-RS

DM-RS PT-RS SRS

Downlink

Uplink

**FIG. 5A**

**FIG. 5B**

FIG. 6

Connection Release 608

RRC CONNECTED 602

Connection Inactivation 610

Connection Resume 614

RRC INACTIVE 604

Connection Release 616

Connection Establishment 612

RRC IDLE 606

FIG. 7

FIG. 8

FIG. 9

EP 4 346 282 A1

FIG. 10A

FIG. 10B

FIG. 11A

FIG. 11B

FIG. 12A

FIG. 12B

Tx beam

Base station

Rx beam

Wireless device

Rx beam

Base station

Tx beam

Wireless device

P1  P2  P3

U1  U2  U3

EP 4 346 282 A1

Wireless device

Base station

Configuration
1310

⋮

Msg 1
1311

Msg 2
1312

Msg 3
1313

Msg 4
1314

**FIG. 13A**

Wireless device

Base station

Configuration
1320

⋮

Msg 1
1321

Msg 2
1322

**FIG. 13B**

Wireless device

Base station

Configuration
1330

⋮

Msg A
1331

Preamble
1341

⋮

1342
Transport block

Msg B
1332

**FIG. 13C**

CORESET 1404

CORESET 1403

CORESET 1402

CORESET 1401

Bandwidth

One slot

**FIG. 14A**

PDCCH candidate

PDCCH candidate

PDCCH candidate

Search Space

CCE-to-REG mapping

CORESET

**FIG. 14B**

FIG. 15A

Base Station 1504

Air Interface 1506

Wireless Device 1502

- Peripheral(s) 1516
- Memory 1514
- GPS Chipset 1517
- TX Processing System 1510
- Processing System 1508
- RX Processing System 1512
- TX Processing System 1520
- Processing System 1518
- RX Processing System 1522
- Peripheral(s) 1526
- Memory 1524
- GPS Chipset 1527

FIG. 15B

**FIG. 16A**

**FIG.16B**

**FIG. 16D**

**FIG. 16C**

EP 4 346 282 A1

FIG. 17

FIG. 18

EP 4 346 282 A1

```
┌─────────────────┐                    ┌─────────────────┐
│ Wireless device │                    │  Base station   │
│      1910       │                    │      1905       │
└─────────────────┘                    └─────────────────┘
         │                                      │
         │        random access preamble        │
         │────────────────────────────────────▶│
         │                1915                  │
         │                                      │
         │                                      │
         │        random access response        │
         │◀────────────────────────────────────│
         │                1920                  │
         │                                      │
         │                                      │
         │        scheduled transmission        │
         │────────────────────────────────────▶│
         │                1925                  │
         │                                      │
         │                                      │
         │        Contention resolution         │
         │◀────────────────────────────────────│
         │                1930                  │
         │                                      │
```

FIG.19A

```
┌─────────────────┐                    ┌─────────────────┐
│ Wireless device │                    │  Base station   │
│      1910       │                    │      1905       │
└─────────────────┘                    └─────────────────┘
         │                                      │
         │       random access assignment       │
         │◀────────────────────────────────────│
         │                1935                  │
         │                                      │
         │        random access preamble        │
         │────────────────────────────────────▶│
         │                1915                  │
         │                                      │
         │        random access response        │
         │◀────────────────────────────────────│
         │                1920                  │
         │                                      │
```

FIG. 19B

FIG. 20

EP 4 346 282 A1

FIG. 21

EP 4 346 282 A1

| Wireless device 2220 | Source 2205 | Target 1 2230 | Target 2 2235 |

Measurement report    2215

**Conditional PSCell decision 2210**

Conditional PSCell request    2225

Conditional PSCell request ack    2240

RRC reconfiguration    2245
(Conditional PSCell  configuration)

RRC reconfiguration complete    2250

**Evaluating conditional PSCell execution conditions in conditional PSCell configuration 2255**

Random access procedure    2260

RRC reconfiguration complete    2265

**FIG. 22**

FIG. 23

EP 4 346 282 A1

**FIG. 24**

Wireless device 2405

Cell 1 2410

Cell 2 2430

Detecting radio link failure in cell 1 and initiating RRC reestablishment procedure 2420

Performing cell selection procedure and selected cell is cell 2 2425

Updating configurations 2435

Random access procedure 2440

RRC reestablishment request 2445

Retrieve wireless device context request 2450

Retrieve wireless device context response 2455

RRC reestablishment 2460

RRC reestablishment complete 2465

RRC reconfiguration 2470

```
┌─────────────────┐                                    ┌─────────────────┐
│ Wireless device │                                    │  Base Station   │
│      2505       │                                    │      2510       │
└────────┬────────┘                                    └────────┬────────┘
         │                                                      │
         │          Layer 3 measurement report 2515            │
         │─────────────────────────────────────────────────────>│
         │                                                      │
         │                              ┌───────────────────────┴──────────────┐
         │                              │ Determine to configure L1 / L2-based  │
         │                              │ mobility 2520                         │
         │                              └───────────────────────┬──────────────┘
         │        RRC reconfiguration 2525                      │
         │<─────────────────────────────────────────────────────│
         │        - configuration of L1/L2 based mobility target cells
         │                                                      │
┌────────┴──────────────────────────┐                          │
│  Store the configurations 2530    │                          │
└────────┬──────────────────────────┘                          │
         │                                                      │
         │          RRC reconfiguration complete 2535          │
         │─────────────────────────────────────────────────────>│
         │                                                      │
         │    Lower layer (e.g., layer 1) measurement report 2540
         │─────────────────────────────────────────────────────>│
         │                                                      │
         │                              ┌───────────────────────┴──────────────┐
         │                              │ Determine to perform cell change 2545 │
         │                              └───────────────────────┬──────────────┘
         │ Lower layer signaling 2550 (e.g., MAC CE Command, DCI signalling ) with the target
         │ cell ID                                              │
         │<─────────────────────────────────────────────────────│
         │                                                      │
┌────────┴──────────────────────────────┐                      │
│ Serving cell change to the target cell │                      │
│ 2555                                   │                      │
└────────┬───────────────────────────────┘                     │
         │   Random access and/or other uplink signal 2560     │
         │ - - - - - - - - - - - - - - - - - - - - - - - - - - ->│
         │                                                      │
```

FIG. 25

| Wireless device 2610 | Source DU 2625 | Candidate DU 2615 | CU 2605 |
|---|---|---|---|

Downlink user data

uplink user data

Measurement report 2620 | UL RRC message transfer 2630 (Measurement report)

UE context setup request 2635
> target candidate cell

UE context setup response 2640
> target candidate cell configuration

UE context modification request 2645
> L1/L2 mobility configuration (e.g., target candidate cell configuration)

UE context modification response 2650

RRC reconfiguration message | DL RRC message transfer 2655
> RRC reconfiguration message
>> L1/L2 mobility configuration

L1 measurements 2660

L1/L2 inter-cell mobility decision 2665

DCI or MAC CE | L1/L2 mobility trigger (e.g., cell ID)

Random access procedure | Cell change success (e.g., cell ID)

RRC reconfiguration complete 2675 | UL RRC message transfer 2670
> RRC reconfiguration complete

UE context modification request 2680

Downlink data delivery status 2685

Downlink user data | Downlink user data

Downlink user data

UE context modification response 2690

UE context release command 2695

UE context release complete 2698

**FIG. 26**

Cell 1
2705

Cell 10

Wireless
Device
L1L2
candidate
List:
1. Cell 2
2. Cell 11
3. Cell 12

2710

HO from
Cell 1 to Cell 10

Candidate list
NOT Valid

Wireless
Device
L1L2
candidate
List:
1. Cell 2
2. Cell 11
3. Cell 12

Wireless device
2715

**FIG. 27**

FIG. 28

EP 4 346 282 A1

104

Wireless device
2910

Source base station
2905

Target base station 2915
(e.g., associated with L1L2
candidate target cell(s)

L1L2 candidate cell configuration(s) of
the L1L2 candidate target cell(s) 2920

RRC Reconfiguration with the
L1L2 candidate target cell configuration(s)
2925

Store the received L1L2
candidate target cell
configuration(s) 2930

RRC Reconfiguration Complete
2935

Handover decision 2940

RRC reconfiguration
+ an indicator indicating whether to remove/
retain stored L1L2 candidate target cell
configuration(s) 2945

Remove the stored L1L2
candidate target cell(s)
configuration(s) based
on the indicator 2950

FIG. 29

| Wireless device 3030 | Source base station 3005 | Target base station 1 3015 | Target base station 2 3045 |
|---|---|---|---|

Handover Request for
L1L2 candidate target cell(s)
3010

RRC Reconfiguration with the
L1L2 candidate target
Cell configuration(s)
3020

Handover Request Acknowledge with
L1L2 candidate cell configuration(s)
of the L1L2 candidate target cell(s)
3025

Store the received L1L2
candidate cell(s)
configurations(s) 3023

RRC Reconfiguration Complete 3035

Handover decision 3047

RRC reconfiguration + an indicator
3050

RRC Reconfiguration Complete 3053

Remove the stored L1L2
candidate cell(s)
configuration(s) based on
the indicator 3057

Handover Request for a target cell 3055

Handover Request Acknowledge
from the target cell 3060

RRC reconfiguration with
reconfigurationWithSync 3063

FIG. 30

| Wireless device 3125 | Source base station 3105 | Target base station 1 3115 | Target base station 2 3140 |

Handover Request for
—L1L2 candidate target cell(s)→
3110

Handover Request Acknowledge with
L1L2 candidate cell configuration(s)
of the L1L2 candidate target cell(s)
3120

RRC Reconfiguration with the
L1L2 candidate target
Cell configuration(s)
3130

Store the received L1L2
candidate cell(s)
configurations(s)

RRC Reconfiguration Complete
3135

Handover decision

Handover Request for a target cell
3145

RRC reconfiguration with
reconfigurationWithSync,
an indicator
3155

Handover Request Acknowledge
from the target cell
3150

Remove the stored
L1L2 candidate cell(s)
configuration(s) based
on the indicator

FIG. 31

EP 4 346 282 A1

| Wireless device 3225 | Source base station 3205 | Same CU | Target base station 3215 |

Handover Request for
L1L2 candidate target cell(s)
3210

Handover Request Acknowledge with L1L2
candidate cell configuration(s)
of the L1L2 candidate target cell(s)
3220

RRC Reconfiguration with the
L1L2 candidate target cell configuration
3230

**Store the received L1L2 candidate cell configuration(s)**

RRC Reconfiguration Complete
3235

**Handover decision**

Handover Request for a target cell + L1L2
candidate indication
3240

Handover Request Acknowledge
from the target cell + an indicator
3245

RRC reconfiguration with
reconfigurationWithSync (target gNB)
+ the indicator (target gNB)
3250

RRC Reconfiguration Complete
3255

**Remove the stored L1L2 candidate cell configuration(s) based on the indicator**

## FIG. 32

FIG. 33

| Wireless device 3325 | | Source base station 3305 | CU1 | Target base station 1 3315 | Target base station 2, CU2 3340 |

Handover Request for L1L2 candidate target cell(s) 3310

Handover Request Acknowledge with L1L2 candidate cell configuration(s) of the L1L2 candidate target cell(s) 3320

RRC Reconfiguration with the L1L2 candidate target cell configuration(s) 3330

Store the received L1L2 candidate cell configuration(s)

RRC Reconfiguration Complete 3335

Handover decision

Handover Request for a target cell + L1L2 candidate indication 3345

RRC reconfiguration with reconfigurationWithSync + the indicator 3355

Handover Request Acknowledge from the target cell + an indicator 3350

RRC Reconfiguration Complete 3360

Remove the stored L1L2 candidate cell configuration(s) based on the indicator

EP 4 346 282 A1

FIG. 34

EP 4 346 282 A1

| Wireless device 3525 | | Source base station 3505 | | Target base station 3515 |

Handover Request for
L1L2 candidate target cell(s)
3510

Handover Request Acknowledge with the
L1L2 candidate cell configuration(s)
of the L1L2 candidate target cell(s)
3520

RRC Reconfiguration with the
L1L2 candidate target cell configuration
3530

Store the received L1L2
candidate cell configurations 3533

RRC Reconfiguration Complete
3535

Handover decision 3037

RRC reconfiguration with
reconfigurationWithSync
3540

WD conditionally
removes the stored L1L2
candidate cell
configurations 3545

**FIG. 35**

```
┌─────────────────────┐        ┌─────────────────────┐        ┌─────────────────────┐
│   Wireless device   │        │ Source base station │        │ Target base station │
│        3610         │        │        3605         │        │        3625         │
└─────────────────────┘        └─────────────────────┘        └─────────────────────┘
```

RRC Reconfiguration with the
◄—L1L2 candidate target cell configuration(s)—
3615

┌─────────────────────────────┐
│  Store the received L1L2    │
│  candidate cell configuration(s) │
└─────────────────────────────┘

RRC Reconfiguration Complete
3620 ———————►

```
┌──────────────────────────┐
│    Handover  decision    │
└──────────────────────────┘
```

Handover Request for a target cell
3630 ————————►

Handover Request Acknowledge
RRC reconfiguration with                from the target cell
◄—reconfigurationWithSync————◄——           3635
3640

RRC Reconfiguration Complete
3645 ——————————————————►

┌─────────────────────────────────────┐
│ Remove the stored L1L2 candidate cell │
│ configuration(s), e.g.,  if the target cell is not │
│ one of the stored L1L2 candidate cell(s) │
└─────────────────────────────────────┘

## FIG. 36

FIG. 37

FIG. 38

EP 4 346 282 A1

EP 4 346 282 A1

FIG. 39

114

FIG. 40

```
┌─────────────────┐              ┌─────────────────┐              ┌─────────────────┐
│ Wireless device │              │  Source base    │              │  Target base    │
│     4125        │              │    station      │              │    station      │
│                 │              │     4105        │              │     4115        │
└─────────────────┘              └─────────────────┘              └─────────────────┘
        │                                │                                │
        │                                │    Handover Request for        │
        │                                │──L1L2 candidate target cell(s)─▶│
        │                                │            4110                 │
        │                                │                                 │
        │       RRC Reconfiguration with the   Handover Request Acknowledge with the │
        │◀─L1L2 candidate target cell configuration(s)─  L1L2 candidate cell configuration(s) │
        │              4130              │    of the L1L2 candidate target cell(s)  │
        │                                │            4120                 │
  ┌─────────────────────┐               │                                 │
  │ Store the received L1L2 │            │                                 │
  │ candidate cell configuration(s) │   │                                 │
  └─────────────────────┘               │                                 │
        │       RRC Reconfiguration Complete   │                          │
        │──────────────4135────────────▶│                                 │
        │    RRC reconfiguration with the conditional │                   │
        │◀── candidate target cell configuration ──── │                   │
        │              4140              │                                 │
        │       RRC Reconfiguration Complete │                            │
        │──────────────4145────────────▶│                                 │
  ┌─────────────────────┐               │                                 │
  │ Store the received conditional │     │                                 │
  │ candidate cell configuration(s) │    │                                 │
  └─────────────────────┘               │                                 │
        │       L1L2 signal to initiate handover │                        │
        │◀─────────────4150────────────│                                 │
        │──────RRC Reconfiguration Complete  4155──────────────────────────▶│
  ┌─────────────────────────────────┐   │                                 │
  │ Remove the stored conditional candidate cell │                         │
  │ configurations due to execution of L1L2 based handover │               │
  └─────────────────────────────────┘   │                                 │
        │                                │                                 │
```

**FIG. 41**

FIG. 42

A wireless device may receive one or more radio resource control (RRC) messages. The one or more radio resource control (RRC) messages may comprise one or more cell configurations of candidate target cells.
4301a

The wireless device may receive an RRC reconfiguration message. The RRC reconfiguration message may comprise at least one of a first indicator indicating a handover to a target cell; and a second indicator indicating a to remove at least one of the one or more cell configurations in response to the handover successfully completing.
4302a

The wireless device may remove the at least one of the one or more cell configurations based on the second indicator and the handover to the target cell successfully completing.
4303a

FIG. 43A

A base station may send one or more radio resource control (RRC) messages. The one or more radio resource control (RRC) messages may comprise one or more cell configurations of candidate target cells.
**4301b**

The base station may send an RRC reconfiguration message. The RRC reconfiguration message may comprise at least one of a first indicator indicating a handover to a target cell; and a second indicator indicating a to remove at least one of the one or more cell configurations in response to the handover successfully completing.
**4302b**

FIG. 43B

A wireless device may receive one or more radio resource control (RRC) messages. The one or more RRC messages may comprise one or more cell configurations of candidate target cells.
**4401a**

The wireless device may receive an RRC reconfiguration message indicating a handover to a target cell.
**4402a**

The wireless device may remove the at least one of the one or more cell configurations based on the target cell not being one of the candidate target cells.
**4403a**

FIG. 44A

A base station may send one or more radio resource control (RRC) messages. The one or more RRC messages may comprise one or more cell configurations of candidate target cells.
**4401b**

The base station may send an RRC reconfiguration message indicating a handover to a target cell.
**4402b**

FIG. 44B

A wireless device may receive one or more radio resource control (RRC) messages. The one or more RRC messages may comprise one or more cell configurations of candidate target cells.
**4501a**

The wireless device may receive an RRC reconfiguration message indicating a handover to a target cell.
**4502a**

The wireless device may remove the at least one of the one or more cell configurations based on the target cell not being one of the candidate target cells
**4503a**

FIG. 45A

A base station may send one or more radio resource control (RRC) messages. The one or more RRC messages may comprise one or more cell configurations of candidate target cells.
**4501b**

The base station may send an RRC reconfiguration message indicating a handover to a target cell.
**4502b**

FIG. 45B

A first base station may send a first message to a second base station. The first message may comprise a first indicator. The first indicator may indicate a presence of one of more cell configurations of candidate target cells on a wireless device.
**4601a**

The first base station may receive a second message from the second base station. The second message may comprise a second indicator. The second indicator may indicate to retain or release the one or more cell configurations of candidate target cell on the wireless device. At
**4602a**

The first base station may send a radio resource control (RRC) message to the wireless device. The RRC message may comprise the second indicator.
**4603a**

FIG. 46A

A second base station may receive a first message from a second base station. The first message may comprise a first indicator. The first indicator may indicate a presence of one of more cell configurations of candidate target cells on a wireless device.
**4601b**

The second base station may send a second message to the first base station. The second message may comprise a second indicator. The second indicator may indicate to retain or release the one or more cell configurations of candidate target cell on the wireless device. At
**4602b**

The wireless device may receive a radio resource control (RRC) message from the first wireless device. The RRC message may comprise the second indicator.
**4603b**

FIG. 46B

Europäisches
Patentamt

European
Patent Office

Office européen
des brevets

# EUROPEAN SEARCH REPORT

**Application Number**

EP 23 20 0890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NOKIA ET AL: "Prerequisites and benefits of Lower Layer Mobility", 3GPP DRAFT; R2-2208212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic; 20220817 - 20220826 10 August 2022 (2022-08-10), XP052261523, Retrieved from the Internet: URL:https://ftp.3gpp.org/tsg_ran/WG2_RL2/T SGR2_119-e/Docs/R2-2208212.zip R2-2208212 Prerequisites and benefits of Lower Layer Mobility.docx [retrieved on 2022-08-10] * page 2 - page 3; figure 1 * ----- | 1-15 | INV. H04W36/00 |
| Y | US 2022/240138 A1 (HWANG JUNE [KR] ET AL) 28 July 2022 (2022-07-28) * page 253 - page 282 * ----- | 1-15 | |
| A | US 2022/225472 A1 (KIM TAEHUN [US] ET AL) 14 July 2022 (2022-07-14) * paragraph [0237] * ----- | 4 | |

**TECHNICAL FIELDS SEARCHED (IPC)**

H04W

-/--

The present search report has been drawn up for all claims

| Place of search | Date of completion of the search | Examiner |
|---|---|---|
| Munich | 24 January 2024 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................................
& : member of the same patent family, corresponding document

EPO FORM 1503 03.82 (P04C01)

**EUROPEAN SEARCH REPORT**

Application Number

EP 23 20 0890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUAWEI ET AL: "Solutions for L1/L2 mobility", 3GPP DRAFT; R2-2207738, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic meeting; 20220817 - 20220829 10 August 2022 (2022-08-10), XP052261056, Retrieved from the Internet: URL:https://ftp.3gpp.org/tsg_ran/WG2_RL2/TSGR2_119-e/Docs/R2-2207738.zip R2-2207738 Solutions for L1 L2 mobility.docx [retrieved on 2022-08-10] * page 3 - page 4 * ----- | 1-15 | |

TECHNICAL FIELDS SEARCHED (IPC)

The present search report has been drawn up for all claims

| Place of search | Date of completion of the search | Examiner |
|---|---|---|
| Munich | 24 January 2024 | Tessier, Serge |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 0890

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2024

| Patent document cited in search report | | Publication date | Patent family member(s) | | Publication date |
|---|---|---|---|---|---|
| US 2022240138 | A1 | 28-07-2022 | CN | 114175731 A | 11-03-2022 |
| | | | EP | 3987848 A1 | 27-04-2022 |
| | | | KR | 20220028092 A | 08-03-2022 |
| | | | US | 2020413308 A1 | 31-12-2020 |
| | | | US | 2022240138 A1 | 28-07-2022 |
| | | | WO | 2020263028 A1 | 30-12-2020 |
| US 2022225472 | A1 | 14-07-2022 | CN | 116830653 A | 29-09-2023 |
| | | | EP | 4022971 A1 | 06-07-2022 |
| | | | JP | 7385856 B2 | 24-11-2023 |
| | | | JP | 2023544527 A | 24-10-2023 |
| | | | JP | 2024001308 A | 09-01-2024 |
| | | | KR | 20230086696 A | 15-06-2023 |
| | | | US | 2022225472 A1 | 14-07-2022 |
| | | | US | 2023247720 A1 | 03-08-2023 |
| | | | WO | 2022066892 A1 | 31-03-2022 |

EPO FORM P0459

For more details about this annex : see Official Journal of the European Patent Office, No. 12/82

**EP 4 346 282 A1**

**REFERENCES CITED IN THE DESCRIPTION**

**Patent documents cited in the description**

- US 63411580